(19) Europäisches Patentamt
European Patent Office
Office européen des brevets

(11) EP 3 019 852 B1

(12) **EUROPÄISCHE PATENTSCHRIFT**

(45) Veröffentlichungstag und Bekanntmachung des Hinweises auf die Patenterteilung:
**01.09.2021 Patentblatt 2021/35**

(21) Anmeldenummer: **14735592.9**

(22) Anmeldetag: **07.07.2014**

(51) Int Cl.:
***G01N 21/64*** *(2006.01)* ***G06F 17/18*** *(2006.01)*

(86) Internationale Anmeldenummer:
**PCT/EP2014/064421**

(87) Internationale Veröffentlichungsnummer:
**WO 2015/004046 (15.01.2015 Gazette 2015/02)**

(54) **VERFAHREN ZUR IDENTIFIZIERUNG UND QUANTIFIZIERUNG VON EMITTIERENDEN TEILCHEN IN SYSTEMEN**

METHOD FOR IDENTIFYING AND QUANTIFYING EMITTING PARTICLES IN SYSTEMS

PROCÉDÉ D'IDENTIFICATION ET DE QUANTIFICATION DE PARTICULES ÉMETTRICES DANS DES SYSTÈMES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.07.2013 DE 102013213362**

(43) Veröffentlichungstag der Anmeldung:
**18.05.2016 Patentblatt 2016/20**

(73) Patentinhaber: **Fraunhofer-Gesellschaft zur Förderung der angewandten Forschung e.V.**
**80686 München (DE)**

(72) Erfinder: **GREINER, Benjamin**
**53639 Königswinter (DE)**

(74) Vertreter: **Lippert Stachow Patentanwälte Rechtsanwälte**
**Partnerschaft mbB**
**Frankenforster Strasse 135-137**
**51427 Bergisch Gladbach (DE)**

(56) Entgegenhaltungen:
**EP-A2- 1 174 706**
**WO-A1-98/16814**
**WO-A1-2008/080417**
**DE-A1- 10 250 503**
**DE-C1- 19 649 048**
**DE-T2- 60 001 731**
**DE-T2- 60 015 092**
**DE-T2- 60 102 797**
**DE-T2- 69 804 612**
**US-A1- 2003 206 297**
**US-A1- 2006 176 479**
**US-A1- 2010 224 797**

- **QIAN H ET AL: "DISTRIBUTION OF MOLECULAR AGGREGATION BY ANALYSIS OF FLUCTUATION MOMENTS", PROCEEDINGS NATIONAL ACADEMY OF SCIENCES PNAS, NATIONAL ACADEMY OF SCIENCES, US, vol. 87, no. 14, 1 July 1990 (1990-07-01), pages 5479-5483, XP000647943, ISSN: 0027-8424, DOI: 10.1073/PNAS.87.14.5479**
- **QIAN H ET AL: "ON THE ANALYSIS OF HIGH ORDER MOMENTS OF FLUORESCENCE FLUCTUATIONS", BIOPHYSICAL JOURNAL, ELSEVIER, AMSTERDAM, NL, vol. 57, 1 February 1990 (1990-02-01), pages 375-380, XP000646996, ISSN: 0006-3495**
- **A.G. Palmer ET AL: "Molecular aggregation characterized by high order autocorrelation in fluorescence correlation spectroscopy", Biophysical Journal, vol. 52, no. 2, 1 August 1987 (1987-08-01) , pages 257-270, XP055345489, AMSTERDAM, NL ISSN: 0006-3495, DOI: 10.1016/S0006-3495(87)83213-7**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 019 852 B1

## Beschreibung

Die Erfindung betrifft ein Verfahren zur Quantifizierung von Teilchen, die bestimmte Emittenden emittieren, und zur Charakterisierung des zeitabhängigen Verhaltens der Teilchen in einem System, das Teilchen zumindest einer Spezies *j* umfasst, gemäß dem Oberbegriff von Anspruch 1.

Entsprechende Verfahren werden herkömmlicherweise bei der Fluoreszenzfluktuationsspektroskopie eingesetzt, bei der Teilchen quantifiziert und charakterisiert werden, die als Emittenden Photonen emittieren. Dabei werden die Teilchen üblicherweise über eine externe Lichtquelle, wie beispielsweise ein Laser, angeregt, wobei über die Detektion der Photonen die Abstrahlcharakteristik des Systems mit den Teilchen bestimmt werden kann, woraus Rückschlüsse über die Teilchen in dem System gezogen werden können.

Als besonders vorteilhaftes Verfahren zur Quantifizierung und Charakterisierung von Teilchen in einem System hat sich in der Vergangenheit die Fluoreszenzkorrelationsspektroskopie (FCS) erwiesen, wie sie beispielsweise in EP 0 679 251 B1 beschrieben ist. Hierbei wird ein System, das üblicherweise durch eine Lösung dargestellt wird, in der verschiedene Teilchen mit bestimmten Partialkonzentrationen enthalten sind, über eine konfokale Mikroskopoptik vermessen. Über eine solche konfokale Mikroskopoptik wird zum einen ein Laserstrahl eines Anregungslasers so in das System abgebildet, dass nur ein sehr kleines Angregungsvolumen von dem Laser ausgeleuchtet wird, und zum anderen werden die Photonen, die von Teilchen in dem Anregungsvolumen emittiert werden, über die konfokale Mikroskopoptik auf einen Detektor abgebildet. Mit bekannten konfokalen Mikroskopoptiken kann das Anregungsvolumen auf weniger als 1 fl beschränkt werden.

Bei dem Verfahren gemäß der FCS wird während eines Messzeitraums ein Fluoreszenzsignal ermittelt, das die Anzahl der Photonen, die der Detektor während des Messzeitraums detektiert, über den Messzeitraum hinweg angibt. Aus dem Fluoreszenzsignal kann somit der zeitliche Verlauf der Anzahl der detektierten Photonen abgelesen werden. Über die zeitliche Autokorrelationsfunktion des Fluoreszenzsignals können dann Informationen über die Diffusionskonstante der emittierenden Teilchen, die Emissionscharakteristik der Teilchen und die Partialkonzentration der Teilchen ermittelt werden. Aus dem Stand der Technik sind auch FCS-Verfahren bekannt, bei denen der Messzeitraum in mehrere gleichlange Zeitintervalle eingeteilt wird, wobei für jedes der Zeitintervalle die detektierte Photonenanzahl ermittelt wird, woraus dann das Fluoreszenzsignal ermittelt wird, das den über den Messzeitraum zeitlichen Verlauf der Photonenanzahl, die in der Dauer der Zeitintervalle detektiert wurden, darstellt. Entsprechend kann dann wieder über die Autokorrelationsfunktion des Fluoreszenzsignals Informationen über die Partialkonzentration der Teilchen und die Diffusionskonstanten der Teilchen unterschiedlicher Spezies in dem System erhalten werden.

Das FCS-Verfahren beruht somit auf der Ermittlung des zeitlichen Verhaltens des Fluoreszenzsignals über die Autokorrelationsfunktion, wobei über diese zeitdynamischen ermittelten Werte Informationen über die Teilchen der verschiedenen Spezies in dem beobachteten System ermittelt werden. Bei der FCS wird jedoch die Helligkeit, d. h. die absolute Anzahl der detektierten Photonen nicht zur Charakterisierung und Quantifizierung der Teilchen in dem System verwendet. Die Ermittlung von Informationen über die Teilchen in dem System erfolgt somit über einen Datensatz, der im Vergleich zu den von dem Detektor ermittelten Daten, die unter anderem die absolute Anzahl der detektierten Photonen umfasst, deutlich reduziert ist. Demzufolge ist das FCS-Verfahren für einige Anwendungsbereiche kaum geeignet. So ist das FCS-Verfahren beispielsweise kaum für die Ermittlung von Partialkonzentrationen und der Charakterisierung von Teilchen unterschiedlicher Spezies in einem System geeignet, wenn die Teilchen der verschiedenen Spezies ähnliche Massen und/oder ähnliche Diffusionskoeffizienten in dem System aufweisen.

Um diesen Problemen des FCS-Verfahrens zu begegnen, wird das FCS-Verfahren häufig in Kombination mit dem PCH-Verfahren (photon counting histogram) angewandt. Das PCH-Verfahren basiert dabei wie das FCS-Verfahren auf einer Datengewinnung über die Detektion von Photonen, die von Teilchen in einem System emittiert wurden, wobei die Ermittlung der Daten wie oben beschrieben über eine konfokale Mikroskopoptik mit Anregung durch eine Laserquelle erfolgt. Das PCH-Verfahren ist beispielsweise bei Chen Y. et al., The photon counting histogram in fluorescence fluctuation spectroscopy, Biophysical Journal, 77 ,553-567, 1999 beschrieben. Bei dem PCH-Verfahren wird während des Messzeitraums mehrfach die Anzahl der Photonen ermittelt, die in einem Zeitintervall mit einer vorbestimmten Intervallbreite detektiert wurden. Aus diesen Daten wird ein Photonenzählratenhistogramm erstellt, das die Verteilung der Anzahl der detektierten Photonen angibt. In dem Photonenzählratenhistogramm ist somit Information über die absolute Anzahl der in dem Zeitintervall detektierten Photonen enthalten. Damit ist das PCH-Verfahren dafür geeignet, in einem System mit Teilchen unterschiedlicher Spezies, die jeweils eine unterschiedliche Abstrahlcharakteristik aufweisen, eine Quantifizierung der Teilchen zu ermöglichen, insbesondere die Partialkonzentrationen der unterschiedlichen Spezies zu ermitteln. Dagegen ist das PCH-Verfahren nicht dafür geeignet, ein zeitabhängiges Verhalten der Teilchen in dem System zu analysieren, da die in dem PCH-Verfahren ermittelten Daten keine zeitabhängigen Informationen enthalten.

Sowohl das FCS-Verfahren als auch das PCH-Verfahren ermöglichen die Ermittlung von Daten, die die Teilchen unterschiedlicher Spezies in dem vermessenen System charakterisieren, indem die über das FCS- bzw. das PCH-Verfahren ermittelten Datensätze mit Hilfe von numerischen Algorithmen ausgewertet werden. Wie oben erläutert bieten PCH-Verfahren und FCS-Verfahren dabei Zugang zu unterschiedlichen charakteristischen Daten, die die Teilchen der unterschiedlichen Spezies und ihre Partialkonzentration in dem System charakterisieren. Zur umfassenden Charakterisierung ist dabei stets die vollständige Durchführung des FCS-Verfahrens und die vollständige Durchführung des PCH-Verfahrens notwendig. Dies ist zeitaufwendig und erfordert erhebliche Rechnerressourcen. Darüber hinaus kann auch die Kombination von PCH-Verfahren und FCS-Verfahren keine vollständige Analyse eines Systems mit Teilchen unterschiedlicher Spezies gewährleisten. So ist insbesondere die Analyse des zeitabhängigen Verhaltens in einem System mit unterschiedlichen Spezies, die eine ähnliche Diffusionskonstante und/oder eine ähnliche Masse aufweisen, kaum möglich. Insbesondere bei der Beobachtung zeitabhängiger Vorgänge, wie beispielsweise biochemische Reaktionen in Systemen, die zwischen Teilchen unterschiedlicher oder derselben Spezies in dem System erfolgen, ist die Analyse der über eine konfokale Mikroskopoptik gewonnenen Messdaten über FCS- und PCH-Verfahren zur Gewinnung von Daten über die chemischen Reaktionen kaum möglich.

DE60001731-T2 offenbart ein Verfahren zur Bestimmung der charakteristischen physikalischen Größen von fluoreszierenden Molekülen oder anderen Teilchen, die in einer Probe vorhanden sind, durch das Überwachen von Intensitätsfluktuationen von Fluoreszenz durch das Messen der Zahl von Photonenzählereignissen in primären Zeitintervallen, das Bestimmen wenigstens einer Verteilung von Zahlen von Photonenzählereignissen aus den gemessenen Zahlen von Photonenzählereignissen und die Berechnung einer theoretischen Verteilungsfunktion der Zahl der Photonenzählereignisse über ihre erzeugende Funktion.

Der Erfindung liegt somit die Aufgabe zugrunde, ein Verfahren zur Quantifizierung von emittierenden Teilchen und zur Charakterisierung des zeitabhängigen Verhaltens der Teilchen in einem System bereitzustellen, das die obengenannten Probleme zumindest teilweise löst und eine einfachere und/oder umfassendere Analyse der Teilchen in dem System ermöglicht.

Als eine Lösung der genannten technischen Aufgabe schlägt die Erfindung ein Verfahren mit den Merkmalen von Anspruch 1 vor. Bei dem erfindungsgemäßen Verfahren werden in einer Messung Emissionen der Teilchen in einem Messzeitraum detektiert. In einer Auswertung wird dann die Anzahl n der Emissionen ermittelt und gespeichert, die in einem Zeitintervall mit einer vorbestimmten Intervallbreite innerhalb des Zeitraums detektiert wurden. Die Auswertung kann insbesondere für mehrere Zeitintervalle mit derselben Intervallbreite durchgeführt werden, die jeweils innerhalb des Messzeitraums liegen. Insbesondere können die Zeitintervalle so ausgewählt werden, dass sie nicht überlappen. Bei der Auswertung wird dann eine Verteilungsfunktion $p(n)$ der Anzahl $n$ der detektierten Emissionen bestimmt. Die Verteilungsfunktion $p(n)$ gibt an, mit welcher relativen Häufigkeit verschiedene Werte für die Anzahl $n$ ermittelt wurden. Im Fall einer Auswertung, bei der für die Anzahl $n$ der detektierten Emissionen in Zeitintervallen mit jeweils derselben Intervallbreite Werte von 0 bis $m$ ermittelt wurden, gilt somit: $\sum_{n=0} p(n) = 1$ . Das erfindungsgemäße Verfahren zeichnet sich dadurch aus, dass für die Intervallbreite unterschiedliche Binzeiten $\tau$ festgelegt werden und für jede Binzeit $\tau$ die Auswertung durchgeführt wird und eine Verteilungsfunktion $p_\tau(n)$ ermittelt wird. Die Verteilungsfunktion $p_\tau(n)$ gibt dabei die relativen Häufigkeiten an, mit der verschiedene Werte für die Anzahl $n$ an Emissionen in einem Zeitintervall mit der Binzeit $\tau$ als Intervallbreite detektiert wurden. Für jede Binzeit $\tau$ wird somit eine Verteilungsfunktion $p_\tau(n)$ ermittelt. Aus der Verteilungsfunktion $p_\tau(n)$ werden die Momente $m_{i,\tau}^{Mess}$ als Kenngrößen der Verteilungsfunktion $p_\tau(n)$ auf herkömmliche Weise ermittelt. Hieraus werden binzeitabhängige Momentenfunktionen $m_i^{Mess}(\tau)$ dargestellt, wobei die Momentenfunktionen $m_i^{Mess}(\tau)$ über die einzelnen Punkte $m_{i,\tau}^{Mess}$ an den jeweiligen Binzeiten $\tau$ gebildet werden. Beispielsweise wird die erste Momentenfunktion $m_1^{Mess}(\tau)$ über die ersten Momente $m_{1,\tau}^{Mess}$ der Verteilungsfunktionen $p_\tau(n)$ zu den jeweiligen Binzeiten $\tau$ dargestellt. Dies gilt entsprechend für höhere Momentenfunktionen betreffend höhere Momente, die aus entsprechend höheren Momenten der Verteilungsfunktionen $p_\tau(n)$ für verschiedene Binzeiten $\tau$ dargestellt werden.

Bei dem erfindungsgemäßen Verfahren erfolgt die Analyse der in dem Messzeitraum ermittelten Messdaten bzw. der in dem Messzeitraum ermittelten Emissionen auf Basis eines Messdatensatzes, der die Momentenfunktionen $m_i^{Mess}(\tau)$ umfasst. Die Auswertung des Datensatzes umfasst erfindungsgemäß einen numerischen Abgleich einer theoretischen Signalfunktion umfassend Momente $m_i^{sig}(\tau)$ einer theoretischen Signalverteilung $P_{sig}(n,\tau)$ mit einer Messwertfunktion umfassend die Momentenfunktion $m_i^{Mess}(\tau)$ , womit Konstanten, die die Teilchen in dem System charakterisieren und in $P_{sig}(n, \tau)$ enthalten sind, ermittelt werden. Messwertfunktion und theoretische Signalfunktion umfassen $m_i^{Mess}(\tau)$ bzw. $m_i^{sig}(\tau)$ in dem Sinne, dass die Messwertfunktion über eine Funktion umfassend $m_i^{Mess}(\tau)$ und die Signalfunktion über eine Funktion umfassend $m_i^{sig}(\tau)$ darstellbar sind. Der Messdatensatz kann ferner den zeitaufgelöst ermittelten Verlauf der Anzahl $n$ über den Messzeitraum, sowie die daraus errechneten $p_\tau(n)$ umfassen. Damit enthält der Messdatensatz eine so umfassende Information über die Messergebnisse, dass eine umfassende Charakterisierung und Quantifizierung der Teilchen in dem System möglich ist.

Der Auswertung kann eine theoretische Signalverteilung $P_{sig}(n,\tau)$ des Systems zugrunde gelegt werden, die so definiert wird, dass sie die Parameter umfasst, die von der Binzeit $\tau$ unabhängig sind. Ausgehend von theoretischen Formulierungen, die beispielsweise aus dem FCS- oder dem PCH-Verfahren bekannt sind, kann der Fachmann ohne Weiteres einen Ausdruck für $P_{sig}(n,\tau)$ angeben.

In einer erfindungsgemäßen Ausführungsform werden bei der Formulierung der theoretischen Signalverteilung $P_{sig}(n,\tau)$ folgende Annahmen gemacht:

Für ein Teilchen der Spezies $j$ wird eine bestimmte lokale Detektionsrate $\mu_j(\vec{r}) = \mu_{0,j} f(\vec{r})$ angenommen. Es wird angenommen, dass diese lokale Detektionsrate $\mu_j(\vec{r})$ für jedes Teilchen der Spezies $j$ gültig ist. Für ein System, in dem Teilchen unterschiedlicher Spezies enthalten sind, wird für eine jede Spezies eine charakteristische bestimmte lokale Detektionsrate angenommen, beispielsweise für die Spezies $b$ die lokale Detektionsrate $\mu_b(\vec{r}) = \mu_{0,b} f(\vec{r})$.

Im Folgenden wird die bestimmte lokale Detektionsrate $\mu_j(\vec{r})$ der Spezies $j$ näher erläutert. Die Erläuterungen sind auf die bestimmten lokalen Detektionsraten anderer Spezies, die in dem System enthalten sein können, analog anzuwenden. Der Parameter $\mu_{0,j}$ stellt eine charakteristische Detektionshelligkeit eines Teilchens der Spezies $j$ dar. Der Parameter $\mu_{0,j}$ ist somit eine Konstante, in der charakteristische Eigenschaften eines Teilchens der Spezies $j$ sowie der Messapparatur enthalten sind. Beispielsweise sind in der Konstanten $\mu_{0,j}$ Eigenschaften des Teilchens der Spezies $j$ wie etwa der Wirkungsquerschnitt oder die Quanteneffizienz eines solchen Teilchens enthalten. Außerdem sind in $\mu_{0,j}$ apparative Größen wie etwa die Quanteneffizienz des Detektors oder, falls anwendbar, die maximale Anregungsrate, mit der die Teilchen in dem System zur Emission angeregt werden, enthalten. Die Funktion $f(\vec{r})$ stellt die Ortsabhängigkeit der lokalen Detektionsrate dar. Je nachdem, an welchem Ort sich ein Teilchen in dem zu vermessenden System befindet, ändert sich die lokale Detektionsrate. In der Funktion $f(r)$ können beispielsweise die ortsabhängigen Eigenschaften des in der Messapparatur verwendeten Linsensystems und/oder die ortsabhängigen Eigenschaften des Anregungsprofils, wie etwa die ortsabhängige Intensitätsverteilung der Abbildung eines Lasers in das System, enthalten sein. Die Funktion $f(\vec{r})$ kann beispielsweise über die normalisierte Point-Spread-Function des Messapparatur über die Gleichung

$$f(\vec{r}) = \frac{PSF(\vec{r})}{PSF(\vec{r}=0)} \leq 1 \forall \vec{r} \in R$$

gegeben sein. Dabei stellt $R$ den Raum dar, in dem sich ein Teilchen der Spezies $j$ während der Messung theoretisch befinden kann. Die Formulierung der normalisierten Point-Spread-Function für eine Messapparatur ist hinreichend bekannt und kann von dem Fachmann für die jeweils verwendete Messapparatur ausgeführt werden.

Ferner wird angenommen, dass ein jedes Teilchen der Spezies $j$ eine bestimmte lokale Aufenthaltswahrscheinlichkeit und eine bestimmte lokale Emissionswahrscheinlichkeit aufweist. Bei der Anwendung des erfindungsgemäßen Verfahrens auf ein System mit verschiedenen Spezies wird für jede Spezies eine speziestypische bestimmte lokale Aufenthaltswahrscheinlichkeit und eine speziestypische bestimmte lokale Emissionswahrscheinlichkeit der Teilchen einer jeden Spezies angenommen. Die lokale Aufenthaltswahrscheinlichkeit stellt die Wahrscheinlichkeit dar, mit der sich ein Teilchen an einem bestimmten Ort befindet. Die lokale Emissionswahrscheinlichkeit stellt die Wahrscheinlichkeit dar, mit der ein Teilchen ein Emittend emittiert. Je nach Art der Emission und je nach den Randbedingungen der Messapparatur kann der Fachmann eine geeignete bekannte Wahrscheinlichkeitsverteilung für die anzunehmende bestimmte lokale Aufenthaltswahrscheinlichkeit und für die anzunehmende bestimmte lokale Emissionswahrscheinlichkeit der Teilchen einer Spezies auswählen und für die Formulierung der theoretischen Signalverteilung $P_{sig}(n,\tau)$ annehmen.

Ferner wird für die Formulierung von $P_{sig}(n,\tau)$ angenommen, dass sich die Teilchen in einem bestimmten Messvolumen $V$ befinden müssen, damit Emissionen der Teilchen detektiert werden können. Beispielsweise kann das Messvolumen $V$ als über das Abbildungsvolumen eines Anregungslasers in dem System bestimmt angenommen werden, wenn die Emission der Teilchen auf einer Anregung durch einen Laser beruht und nur durch einen Laser angeregte Teilchen Emittenden emittieren können. Beispielsweise kann das Messvolumen $V$ auch durch eine über die Messapparatur festgelegte Volumenbegrenzung bestimmt sein. Beispielsweise kann eine solche Beschränkung die rein geometrische äußere Beschränkung, wie etwa eine Umwandung, des Systems sein. Beispielsweise kann eine solche Beschränkung aufgrund der Optik, mit der Emissionen der Teilchen auf den Detektor projiziert werden, vorgegeben sein.

Die theoretische Signalverteilung $P_{sig}(n,\tau)$, die auf Basis der genannten Annahmen definiert wird, umfasst als binzeitunabhängige Parameter die lokale Detektionsrate $\mu_j(\vec{r})$, eine Partialkonzentration $c_j$ und eine Zerfallszeit $\vartheta_j$ der Teilchenspezies $j$. Darüber hinaus umfasst die theoretische Signalverteilung $P_{sig}(n, \tau)$ des Systems das Rauschverhalten der Messapparatur. Das Rauschverhalten der Messapparatur kann zeitlich konstant angenommen werden oder auch als zeitabhängige bzw. zeitvariable, insbesondere statistisch verteilte Größe. Bei der Definition der theoretischen Signalverteilung $P_{sig}(n, \tau)$ kann auch angenommen werden, dass das Rauschverhalten der Messapparatur vernachlässigt werden kann. Auch hierüber umfasst die definierte theoretische Signalverteilung $P_{sig}(n, \tau)$ das Rauschverhalten der Messapparatur. Bei Anwendung des Verfahrens auf ein System, in dem verschiedene Teilchenspezies erwartet werden, umfasst die theoretische Signalverteilung $P_{sig}(n, \tau)$ des Systems entsprechende binzeitunabhängige Parameter für jede der Teilchenspezies.

Für das erfindungsgemäße Verfahren werden nach der Definition der Signalverteilung $P_{sig}(n, \tau)$ auf herkömmliche Weise Momente $m_i^{sig}(\tau)$ ermittelt. Beispielsweise können das erste Moment $m_1^{sig}(\tau)$ und das zweite Moment $m_2^{sig}(\tau)$ der Signalverteilung $P_{sig}(n, \tau)$ ermittelt werden. Ferner wird eine theoretische Signalfunktion definiert, die zumindest eines der ermittelten Momente $m_i^{sig}(\tau)$ umfasst, sowie eine Messwertfunktion, die zumindest eine der ermittelten Momentenfunktionen $m_i^{Mess}(\tau)$ umfasst. Über einen numerischen Abgleich der theoretischen Signalfunktion mit der Messwertfunktion werden dann zumindest Konstanten betreffend zumindest die Parameter $\mu_{0,j}$ und $\vartheta_j$ ermittelt. Dies bedeutet, dass zumindest $\mu_{0,j}$ und $\vartheta_j$ aus den Konstanten direkt berechnet werden können. Insbesondere bei der Auswertung bei Anwendung des erfindungsgemäßen Verfahrens auf ein System mit *s* verschiedenen Teilchenspezies können aus dem numerischen Abgleich auch Konstanten betreffend die s verschiedenen Partialkonzentrationen $c_j$, $c_{j+1}$... $c_{j+s-1}$ ermittelt werden.

Beispielsweise kann die theoretische Signalfunktion dieselben *K-ten* Momente $m_K^{sig}(\tau)$ wie entsprechend die Messwertfunktion über $m_K^{Mess}(\tau)$ aufweisen. Um hierfür ein Beispiel zu nennen: Beispielsweise kann die theoretische Signalfunktion $m_1^{sig}(\tau)$, $m_2^{sig}(\tau)$ und $m_3^{sig}(\tau)$ und die Messwertfunktion $m_1^{Mess}(\tau)$, $m_2^{Mess}(\tau)$ und $m_3^{Mess}(\tau)$ umfassen. Insbesondere können die theoretische Signalfunktion und die Messwertfunktion jeweils nur dieselben *K-ten* Momente aufweisen. Dabei weist die theoretische Signalfunktion nur solche *K-ten* Momente $m_K^{sig}(\tau)$ auf, die entsprechend als $m_K^{Mess}$ in der Messwertfunktion enthalten sind, und umgekehrt. Insbesondere können die *K-ten* Momente $m_K^{sig}(\tau)$ in der theoretischen Signalfunktion zueinander in demselben funktionalen Verhältnis stehen wie die entsprechenden *K-ten* Momente $m_K^{Mess}(\tau)$ in der Messwertfunktion zueinander.

Das erfindungsgemäße Verfahren ist für eine Analyse von einem jedweden System geeignet, das Teilchen zumindest einer Spezies umfasst, die bestimmte Emittenden emittieren. Solche Emittenden können beispielsweise Photonen sein, beispielsweise aber auch $\alpha$-Teilchen oder Gammastrahlung. Je nach Art der Emittenden und Charakter der Teilchen kann eine Anregung von außen erforderlich oder nicht notwendig sein.

Dem erfindungsgemäßen Verfahren liegt die grundlegende Erkenntnis zugrunde, dass in den binzeitabhängigen Momentenfunktionen $m_i^{Mess}(\tau)$ sowohl Informationen über die absolute Anzahl der detektierten Emissionen als auch über das zeitabhängige Verhalten der Teilchen enthalten sind. Über die Definition der Messwertfunktion umfassend Momentenfunktionen $m_i^{Mess}(\tau)$ wird somit eine Funktion bereitgestellt, die auf Messwerten basiert, mittels der eine umfassende und detaillierte Analyse des Systems bzw. der Teilchen in dem System möglich ist. Aufgrund dieser Erkenntnis schlägt die Erfindung die Variation der Binzeit $\tau$, das Ermitteln der Verteilungsfunktion $p_\tau(n)$ für jede Binzeit $\tau$, das Ermitteln der Momente $m_{i,\tau}^{Mess}$ für jede Binzeit $\tau$ und das Ermitteln der binzeitabhängigen Momentenfunktionen $m_i^{Mess}(\tau)$ vor.

Ferner beruht das erfindungsgemäße Verfahren auf der Erkenntnis, dass über einen numerischen Abgleich der Messwertfunktion mit einer theoretischen Signalfunktion, die Momente $m_i^{sig}(\tau)$ der theoretischen Signalverteilung

$P_{sig}(n,\tau)$ umfasst, Konstanten ermittelt werden können, die binzeitunabhängig sind und die die Teilchen in dem System und die Konzentration der Teilchen in dem System charakterisieren. Die Konstanten betreffen in einer Ausführungsform zumindest die Parameter $\mu_{0,j}$ und $\vartheta_j$, insbesondere auch $c_j$, insbesondere $c_j$ der verschiedenen Spezies bei Vorliegen eines Systems mit mehreren Spezies. Die Konstanten können beispielsweise mit $\mu_{0,j}$, $c_j$ und/oder $\vartheta_j$ identisch sein. Beispielsweise können $\mu_{0,j}$, $c_j$ und/oder $\vartheta_j$ in jeweils einer Konstanten enthalten sein, beispielsweise können sie in den Konstanten in einem mathematischen Verhältnis zu konstanten Werten, beispielsweise Zahlen, stehen. Insbesondere kann $\vartheta_j$ mehrere Komponenten umfassen, die jeweils getrennt voneinander über den numerischen Abgleich zu ermitteln sind, beispielsweise für jede Raumdimension eine eigene Zerfallskomponente $\vartheta_{j,x}$, $\vartheta_{j,y}$, $\vartheta_{j,z}$. Beispielsweise kann die theoretische Signalfunktion für jede der Zerfallskomponenten eine die jeweilige Zerfallskomponente betreffende Konstante umfassen.

Die binzeitunabhängigen Parameter werden über einen numerischen Abgleich der theoretischen Signalfunktion mit der Messwertfunktion ermittelt. Der numerische Abgleich erfolgt rechnergesteuert, wobei die in der theoretischen Signalfunktion enthaltenen Konstanten umfassend die binzeitunabhängigen Parameter $\mu_{0,j}$ und $\vartheta_j$ und insbesondere $c_j$ während des numerischen Abgleichs so eingestellt werden, dass sich der funktionale Verlauf der theoretischen Signalfunktion an den funktionalen Verlauf der Messwertfunktion anpasst. Der Fachmann kann somit unter Berücksichtigung der vorgenannten Annahmen eine theoretische Signalverteilung $P_{sig}(n,\tau)$ zur Bestimmung der theoretischen Signalfunktion im Hinblick auf einen Kompromiss definieren, der keine zu hohe Rechenleistung erfordert und dennoch eine hinreichend genaue Angabe der relevanten Konstanten, insbesondere der Parameter $\mu_{0,j}$, $c_j$ und $\vartheta_j$ ermöglicht.

Über die vorgenannten Annahmen ist der Fachmann in die Lage versetzt, eine theoretische Signalverteilung $P_{sig}(n,\tau)$ für das System zu definieren. Die bestimmte lokale Aufenthaltswahrscheinlichkeit gibt die Wahrscheinlichkeit an, ein Teilchen der Spezies *j* zu einem bestimmten Zeitpunkt *t* an einem bestimmten Ort $\vec{r}$ aufzufinden. Entsprechend kann die bestimmte lokale Aufenthaltswahrscheinlichkeit über die Funktion $\psi(\vec{r},t)$ angegeben werden. Die Funktion $\psi(\vec{r},t)$ kann der Fachmann über die Randbedingungen der Messapparatur und der Messumgebung festlegen. Hierfür können etwa die rein räumliche Begrenzung des Systems und/oder der Transport der Teilchen bzw. die Bewegung der Teilchen im System, beispielsweise ob eine freie, stochastische Diffusion oder ein fluidischer Transport vorliegt, relevant sein. Beispielsweise kann für den Fall einer Diffusion die lokale Aufenthaltswahrscheinlichkeit über die bekannte homogene Transportgleichung festgelegt werden, wobei für $\psi(\vec{r},t|\vec{r}_0,t_0)$ unter der Annahme, dass sich das Teilchen zum Zeitpunkt $t_0$ am Ort $\vec{r}_0$ befindet, angenommen werden kann: $\frac{\partial}{\partial t}\psi(\vec{r},t|\vec{r}_0,t_0) = D\Delta\psi(\vec{r},t|\vec{r}_0,t_0)$. Der Fachmann kann entsprechende bestimmte lokale Aufenthaltswahrscheinlichkeiten für andere Messapparaturen mit anderen Messumgebungen, die andere Randwerte für die $\tau(\vec{r},t|\vec{r}_0 t_0)$ - Bestimmung vorgeben, festlegen, insbesondere für den Fall eines fluidischen Massentransports der Teilchen in dem System.

Für die Annahme der bestimmten lokalen Emissionswahrscheinlichkeit ist die Art des Emissionsprozesses der Teilchen relevant. Der Emissionsprozess kann beispielsweise von der inneren Struktur der Teilchen und/oder der Wechselwirkung der Teilchen mit einem Anregungsfeld abhängen. Die innere Struktur kann beispielsweise die emissionserzeugenden Übergänge in den Teilchen betreffen. Beispielsweise kann für den Fall einer Emission von Photonen häufig die bestimmte lokale Emissionswahrscheinlichkeit über eine Poisson-Verteilung angenähert werden. Je nach Art der Emittenden kann der Fachmann auf bekannte lokale Emissionswahrscheinlichkeiten zurückgreifen, um die theoretische Signalverteilung $P_{sig}(n,\tau)$ zu definieren.

Wie oben erläutert kann der Fachmann über eine bekannte Point-Spread-Function der Messapparatur ebenfalls ohne Weiteres eine Funktion $f(\vec{r})$ angeben, um die bestimmte lokale Detektionsrate $\mu_j(\vec{r})$ für die Definition der theoretischen Signalverteilung $P_{sig}(n,\tau)$ festzulegen.

Der Erfindung liegt somit auch die Erkenntnis zugrunde, dass eine theoretische Signalverteilung $P_{sig}(n,\tau)$ definiert werden kann, indem eine bestimmte lokale Aufenthaltswahrscheinlichkeit definiert wird, über die festgelegt ist, mit welcher Wahrscheinlichkeit ein Teilchen zum Zeitpunkt *t* am Ort $\vec{r}$ anzutreffen ist, indem eine bestimmte lokale Emissionswahrscheinlichkeit festgelegt wird, die angibt, mit welcher Wahrscheinlichkeit ein Teilchen an dem Ort $\vec{r}$ einen Emittenden emittiert, indem eine bestimmte lokale Detektionsrate $\mu_j(\vec{r})$ festgelegt wird, die charakteristische Helligkeitseigenschaften des Teilchens und Detektionseigenschaften der Messapparatur berücksichtigt, und indem ein bestimmtes Messvolumen *V* angenommen wird, in dem sich ein Teilchen befinden muss, damit Emissionen des Teilchens detektiert werden können.

Über die genannten Annahmen ist der Fachmann in der Lage, über herkömmliche Verfahren eine theoretische Signalverteilung zu ermitteln. Hierbei kann der Fachmann beispielsweise im Fall der Anwendung des erfindungsgemäßen Verfahrens auf ein System mit Teilchen, die Photonen als Emittenden emittieren, für die theoretische Signalverteilung eine funktionale Abhängigkeit annehmen, wie sie in der Entwicklung des PCH-Verfahrens angenommen wird (siehe hierzu Chen Y. et al., Biophysical Journal, 77, 553-567, 1999 und die in der Literatur bekannten weiteren Entwicklungen des PCH-Verfahrens). Beispielweise kann der Fachmann für die Definition der theoretischen Signalverteilung $P_{sig}(n, \tau)$ für ein System mit nur einer Emittenden emittierenden Spezies *j* unter der Annahme, dass sich nur ein Teilchen im Messvolumen befindet, die einfache funktionale Abhängigkeit annehmen, dass

$$P_{sig}(n,\tau) = P_{1,j}(n,\tau) = \frac{1}{V}\int_0^\tau \int_V c_j \mu_j(\vec{r}) \psi_j(\vec{r},t) E_j(n,t) d^3r dt \,,$$

wobei $E_j(n,t)$ die bestimmte lokale Emissionswahrscheinlichkeit der Teilchen der Spezies *j* angibt und wobei die Zerfallszeit $\vartheta_j$ bei der Formulierung von $\psi_j(r,t)$ berücksichtigt wird. $\vartheta_j$ kann beispielsweise eine mittlere Reaktionszeit angeben, während der ein Teilchen der Spezies *j* in dem System so reagiert, dass es keine Emittenden mehr emittieren kann. $\vartheta_j$ kann beispielsweise die Durchtrittszeit eines Teilchens der Spezies *j* durch das Messvolumen *V* angeben. $\vartheta_j$ kann beispielsweise die Halbwertszeit für den Zerfall eines Teilchens der Spezies *j* angeben. Beispielsweise kann bei der Formulierung dieser Signalverteilung für ein zu beobachtendes Teilchen das Rauschverhalten der Detektoreinheit berücksichtigt werden über:

$$P_{sig}(n,\tau) = P_{1,j}(n,\tau) = \frac{1}{V}\int_0^\tau R(n,t) \int_V c_j \mu_j(\vec{r}) \psi_j(\vec{r},t) E_j(n,t) d^3r dt \,.$$

Dabei kann über $R(n,t)$ das Rauschverhalten der Messapparatur berücksichtigt sein. Beispielsweise kann aus solchen $P^1_{sig}(n,\tau)$ für ein Teilchen die Signalverteilung für ein System mit beliebig vielen *m* Teilchen über eine *m* -fache Faltung von $P^1_{sig}(n,\tau)$ und unter Berücksichtigung der Wahrscheinlichkeit, *m* Teilchen im Messvolumen anzutreffen, formuliert werden über:

$$P_{sig}(n,\tau) = \sum_{m=1}^{\infty} \left[ \left( P_{m-1,j} \otimes P_{1,j} \right)(n,\tau) \right] \chi(m,\tau) \,.$$

Beispielsweise kann erst an dieser Stelle das Detektorrauschen berücksichtigt werden über:

$$P_{sig}(n,\tau) = R(n,\tau) \otimes \left[ \sum_{m=1}^{\infty} \left[ \left( P_{m-1,j} \otimes P_{1,j} \right)(n,\tau) \right] \chi(m,\tau) \right].$$

Der Fachmann kann bei der Durchführung des erfindungsgemäßen Verfahrens auch andere funktionale Zusammenhänge unter Berücksichtigung der erfindungsgemäßen Annahmen zur Definition der theoretischen Signalverteilung $P_{sig}(n, \tau)$ annehmen. Insbesondere kann der Fachmann hierfür annehmen, dass mit den genannten Annahmen eine Funktion aufzustellen ist, die zur Definition der theoretischen Signalverteilung $P_{sig}(n, \tau)$ über das bestimmte Messvolumen *V* und anschließend über das Zeitintervall der Binzeit *r* zu integrieren ist. Die Ermittlung der Momente $m_i^{sig}(\tau)$ der theoretischen Signalverteilung $P_{sig}(n, \tau)$ kann dann aufgrund herkömmlicher mathematischer Umformungen oder algorithmischer Mehrungen durchgeführt werden.

Für die Definition der theoretischen Signalverteilung $P_{sig}(n, \tau)$ werden die lokale Detektionsrate $\mu_j(\vec{r})$, die bestimmte lokale Aufenthaltswahrscheinlichkeit und die bestimmte lokale Emissionswahrscheinlichkeit für jede Spezies getrennt festgelegt. Zumindest einige der genannten Funktionen können jedoch auch als für jede Spezies identisch festgelegt werden. Insbesondere kann die bestimmte lokale Aufenthaltswahrscheinlichkeit und die bestimmte lokale Emissionswahrscheinlichkeit als für jede Spezies identisch festgelegt werden.

In einer vorteilhaften Ausführungsform wird bei der Anwendung des erfindungsgemäßen Verfahrens auf ein System mit *s* verschiedenen Teilchenspezies für jede Teilchenspezies eine eigene theoretische Speziessignalverteilung $P^j_{sig}(n,\tau)$ ermittelt, wobei die theoretische Signalverteilung $P_{sig}(n, \tau)$ des Systems durch die *s*+1-fache Faltung der *s* verschiedenen Signalverteilungen $P^j_{sig}(n,\tau)$ der *s* verschiedenen Spezies und eine Rauschsignalverteilung $P_{noise}(n, \tau)$ ermittelt wird. In einer Ausführungsform des erfindungsgemäßen Verfahrens kann die Rauschsignalverteilung $P_{noise}(n, \tau)$ vernachlässigt werden, so dass die theoretische Signalverteilung $P_{sig}(n, \tau)$ des Systems durch die *s*-fache Faltung der *s* verschiedenen Signalverteilungen $P^j_{sig}(n,\tau)$ definiert werden kann. Die genannte vorteilhafte Ausführungsform ermöglicht das verhältnismäßig einfache Aufstellen von theoretischen Speziessignalverteilungen $P_{sig}^{j}(n,\tau)$ für jede einzelne Spezies getrennt, wonach über die Faltung der *s* theoretischen Speziessignalverteilungen eine konkrete Angabe der theoretischen Signalverteilung $P_{sig}(n,\tau)$ des gesamten Systems umfassend die Teilchen der *s* verschiedenen Spezies erfolgen kann.

In einer weiteren vorteilhaften Ausführungsform des erfindungsgemäßen Verfahrens wird das für die Definition von $P_{sig}(n,\tau)$ verwendete Messvolumen *V* über ein binzeitabhängiges, fiktiv eingeführtes effektives Volumen $V_{eff,j}(\tau)$ definiert.

Dabei wird $V_{eff,j}(\tau)$ darüber definiert, dass per Definition von jedem Teilchen der Spezies *j*, das sich in dem Volumen $\tau V_{eff,j}(\tau)$ befindet, in der Binzeit $\tau$ zumindest eine Emission detektiert wird und das Teilchen das Volumen $\tau V_{eff,j}(\tau)$ während der Binzeit $\tau$ nicht verlässt, wobei per Definition die mittlere Anzahl der Teilchen der Spezies *j* im Volumen $\tau V_{eff,j}(\tau)$ durch eine mittlere Besetzungsanzahl $\omega_j(\tau)$ mit $\omega_j(\tau)=c_j V_{eff,j}(\tau)\tau$ bestimmt ist.

Dabei ist zu berücksichtigen, dass das effektive Volumen $V_{eff,j}(\tau)$ kein durch die Messapparatur räumlich begrenztes Volumen darstellt. Vielmehr ist das effektive Volumen $V_{eff,j}(\tau)$ ein binzeitabhängiges, über ein Gedankenexperiment eingeführtes Mittel, um die Definition der theoretischen Signalverteilung $P_{sig}(n,\tau)$ zu vereinfachen. Denn mit der Einführung des effektiven Volumens geht die Annahme einher, dass die Wahrscheinlichkeit, ein Teilchen, von dem eine Emission in der Binzeit $\tau$ detektiert wird, in dem über das fiktiv eingeführte effektive Volumen definierte Volumen $\tau V_{eff,j}(\tau)$ aufzufinden, den Wert 1 hat. Entsprechend kann über die Einführung des effektiven Volumens bei der Definition der theoretischen Signalverteilung $P_{sig}(n,\tau)$ über sämtliche, aus dem Volumen $\tau V_{eff,j}(\tau)$ emittierten Emissionen summiert werden, indem die theoretische Signalverteilung $P_{sig}(n,\tau)$ auf das Volumen $\tau V_{eff,j}(\tau)$ normiert wird. Eine solche Summation kann beispielsweise über eine Ortsintegration über das Volumen $\tau V_{eff,j}(\tau)$ realisiert werden. Der funktionale Zusammenhang, über den eine solche räumlich Ortsintegration durchgeführt werden kann zur Bestimmung der theoretischen Signalverteilung $P_{sig}(n,\tau)$ kann beispielsweise die bestimmte lokale Detektionsrate $\mu_j(\vec{r})$, die lokale Aufenthaltswahrscheinlichkeit und die lokale Emissionswahrscheinlichkeit umfassen. Mit Hilfe der Definition der mittleren Besetzungszahl $\omega_j(\tau)=c_j V_{eff,j}(\tau)\tau$ ist zudem das effektive Volumen $V_{eff,j}(\tau)$ in Abhängigkeit von der Besetzungsanzahl $\omega_j(\tau)$, der Konzentration $c_j$ und der Binzeit $\tau$ ausdrückbar, so dass das effektive Volumen $V_{eff,j}(\tau)$ auf Größen rückführbar ist, die über die ermittelten Messdaten, nämlich die Messwertfunktion, bestimmbar sind. Die Einführung des effektiven Volumens erlaubt eine Normierung von $P_{sig}(n,\tau)$ bzw. von $P_{sig}(n,\tau)$ konstituierenden Funktionen, wie etwa die Signalverteilung für ein einzelnes Teilchen, auf $\tau V_{eff,j}(\tau)$. Erfindungsgemäß stellt die Berücksichtigung der Definition von $V_{eff,j}(\tau)$ und die entsprechende Normierung von $P_{sig}(n,\tau)$ insbesondere deshalb eine vorteilhafte Ausführungsform dar, da eine entsprechende Ortsintegration räumlich unbegrenzt durchführbar ist, ohne zu divergenten Ausdrücken zu führen, wodurch die Integration vereinfacht wird, $P_{sig}(n,\tau)$ einfacher darstellbar wird und damit der numerische Abgleich einfacher und präziser durchführbar wird.

Die Einführung des effektiven Volumens $V_{eff,j}$ für eine Teilchenspezies *j* kann somit über mathematische Umformungen, die dem Fachmann hinreichend bekannt sind, bei der Definition der theoretischen Signalverteilung $P_{sig}(n,\tau)$ berücksichtigt werden. Dabei ist insbesondere zu berücksichtigen, dass das effektive Volumen $V_{eff,j}(\tau)$, wie aus der Definition $\omega_j(\tau)=c_j V_{eff,j}(\tau)$ ersichtlich, alleine für die Spezies *j* eingeführt wird, und dass für jede Spezies ein eigenes effektives Volumen einzuführen ist. Entsprechend kann es für die Definition der theoretischen Signalverteilung $P_{sig}(n,\tau)$ des Systems vorteilhaft und einfacher sein, zunächst theoretische Signalverteilungen $P_{sig}^{j}(n,\tau)$ für jede Teilchenspezies zu ermitteln unter Annahme eines effektiven Volumens $V_{eff,j}(\tau)$ für jede Teilchenspezies, und anschließend aus diesen theoretischen Speziessignalverteilungen $P_{sig}^{j}(n,\tau)$ die theoretische Signalverteilung $P_{sig}(n,\tau)$ für das System zu ermitteln.

Insbesondere kann für die Verteilung der Besetzungsanzahl, d. h. für die Verteilung der Anzahl der Teilchen der Spezies *j* in dem effektiven Volumen $V_{eff,j}(\tau)$, eine Poisson-Verteilung angenommen werden. Die Wahrscheinlichkeit, dass *m* Teilchen der Spezies *j* innerhalb der Binzeit $\tau$ das effektive Volumen $V_{eff,j}(\tau)$ besetzen, kann somit durch die Poisson-Verteilung $Poi(m,\omega_j(\tau))=\frac{\omega_j^m(\tau)}{m!}e^{-\omega_j(\tau)}$ gegeben sein. In anderen Ausführungsformen können auch andere Verteilungen der Besetzungsanzahl angenommen werden, je nach zu analysierendem System.

Insbesondere kann für die Bestimmung der theoretischen Signalverteilung $P_{sig}(n,\tau)$ angenommen werden, dass die lokale Emissionswahrscheinlichkeit der Teilchen gemäß einer Poisson-Verteilung verteilt ist.

Über die Annahme bestimmter Wahrscheinlichkeitsverteilungen, insbesondere über die Annahme der poissonischen Verteilung der Besetzungszahl in dem effektiven Volumen und über die Annahme der poissonischen Verteilung der lokalen Emissionswahrscheinlichkeit, lässt sich die Formulierung der theoretischen Signalverteilung $P_{sig}(n, \tau)$ weiter vereinfachen, was zu einem einfachen numerischen Abgleich und damit zu einer Vereinfachung des erfindungsgemäßen Verfahrens führen kann. Die Annahmen können über mathematische Umformungen, mit denen der Fachmann hinreichend vertraut ist, bei der Definition der theoretischen Signalverteilung $P_{sig}(n, \tau)$ eingearbeitet werden.

In einer vorteilhaften Ausführungsform werden der binzeitabhängige Mittelwert $\overline{n}(\tau)$ und die binzeitabhängige Varianz $\sigma^2(\tau)$ aus den Verteilungsfunktionen $p_\tau(n)$ für jede Binzeit $\tau$ ermittelt, wobei die Messwertfunktion so definiert wird, dass sie $\overline{n}(\tau)$ und $\sigma^2(\tau)$ umfasst. Für den Fachmann ist verständlich, dass dies damit gleichzusetzen ist, dass für jede Binzeit $\tau$ das erste Moment $m_{1,\tau}^{Mess}$ und das zweite Moment $m_{2,\tau}^{Mess}$ der Verteilungsfunktion $p_\tau(n)$ ermittelt werden, woraus die binzeitabhängigen Momentenfunktionen $m_1^{Mess}(\tau)$ und $m_2^{Mess}(\tau)$ dargestellt werden, da aus $m_1^{Mess}(\tau)$ und $m_2^{Mess}(\tau)$ $\overline{n}(\tau)$ und $\sigma^2(\tau)$ eindeutig errechnet werden können und umgekehrt. Entsprechend bedeutet die Definition der Messwertfunktion als $m_i^{Mess}(\tau)$ umfassend, dass die Messwertfunktion Funktionen von $\tau$ enthält, die eindeutig in zumindest ein $m_i^{Mess}(\tau)$ oder in eine Funktion, die aus mehreren $m_i^{Mess}(\tau)$ zusammengesetzt ist, umgewandelt werden kann. Erfindungsgemäß können auch solche Funktion anstelle der $m_i^{Mess}(\tau)$ aus dem $P_\tau(n)$ ermittelt werden. Indem die Messwertfunktion so definiert wird, dass sie $\overline{n}(\tau)$ und $\sigma^2(\tau)$ umfasst, kann der Ausdruck der Messwertfunktion einfach gehalten werden und dennoch gleichzeitig gewährleistet sein, dass über den numerischen Abgleich zwischen der Messwertfunktion und der theoretischen Signalfunktion eine hinreichend präzise Ermittlung der relevanten Parameter möglich ist. Dies beruht auf der Erkenntnis, dass in $\overline{n}(\tau)$ und $\sigma^2(\tau)$ eine ausreichende Menge an Information über die während des Messzeitraums erhaltenen Messdaten enthalten sind, um eine hinreichend genaue Quantifizierung und Charakterisierung der Teilchen in dem System zu gewährleisten.

In einer besonders vorteilhaften Ausführungsform wird als Messwertfunktion $Q(\tau) = \frac{\sigma(\tau)^2 - \overline{n}(\tau)}{\overline{n}(\tau)}$ festgelegt, wobei der numerische Abgleich über die Relation $Q(\tau) = \frac{\sigma(\tau)^2 - \overline{n}(\tau)}{\overline{n}(\tau)} = \frac{m_2^{sig}(\tau) - [m_1^{sig}(\tau)]^2 - m_1^{sig}(\tau)}{m_1^{sig}(\tau)}$ durchgeführt wird, wobei $m_1^{sig}(\tau)$ das erste Moment und $m_2^{sig}(\tau)$ das zweite Moment von $P_{sig}(n, \tau)$ darstellt. Die Varianz $\sigma^2(\tau)$ und der Mittelwert $\overline{n}(\tau)$ lassen sich bekanntermaßen über $m_1^{Mess}(\tau)$ und $m_2^{Mess}(\tau)$ ermitteln. Dieser vorteilhaften Ausführungsform liegt die Erkenntnis zugrunde, dass der numerische Abgleich zwischen der entsprechend definierten Messwertfunktion und der entsprechend definierten theoretischen Signalfunktion für eine Vielzahl an Anwendungen des erfindungsgemäßen Verfahrens besonders einfach durchführbar ist, dass über den entsprechend numerischen Abgleich mit verhältnismäßig geringem Aufwand eine sehr genaue Angabe für die binzeitunabhängigen Parameter $\mu_{0,j}$, $c_j$ und $\vartheta_j$ möglich ist und dass die Auswertung der gewonnenen Messdaten wegen der Beschränkung auf Betrachtung von ersten und zweiten Momenten der theoretischen Signalfunktion und der Verteilungsfunktionen $p_\tau(n)$ der Aufwand bei der Auswertung geringgehalten werden kann. In einer Ausführungsform erfolgt der numerische Abgleich auf Basis der Messwertfunktion $Q(\tau)$, wobei der numerische Abgleich über die Relation $\frac{Q(\tau)}{\tau} = \frac{m_2^{sig}(\tau) - \left(m_1^{sig}(\tau)\right)^2 - m_1^{sig}(\tau)}{\tau * m_1^{sig}(\tau)}$ durchgeführt wird. Bei einem solchen numerischen Abgleich wird auf einen Abgleich der gemessenen Detektionsrate mit der theoretisch zu erwartenden Detektionsrate abgestellt, indem $\tau$ als Teiler in dem Abgleich eingeführt wird. Bei dieser Ausführungsform kann ein besonders einfach durchzuführender numerischer Abgleich ermöglicht sein, über den die Konstanten mit geringem Rechenaufwand ermittelt werden können. Insbesondere kann ein solcher Abgleich besonders vereinfacht sein, indem der Abgleich bei einer Grenzwertbetrachtung für $\lim_{\tau \to 0}$ der beiden abzugleichenden Funktionen durchgeführt wird.

In einer Ausführungsform wird die theoretische Signalfunktion als zeitabhängig definiert, wobei mehrere Messungen zu jeweils einem bestimmten, der jeweiligen Messung zugeordneten Zeitpunkt durchgeführt werden. Für jede der Messungen wird eine dem jeweiligen bestimmten Zeitpunkt zugeordnete binzeitabhängige Messwertfunktion ermittelt, wobei jede Messwertfunktion über eine Näherungskurve angenähert wird, beispielsweise über einen numerischen oder graphischen Fit. Über die Näherungskurve einer jeden Messwertfunktion wird der Wert der jeweiligen Messwertfunktion ermittelt, den diese Messwertfunktion für $\lim_{Binzeit \to 0}$ annimmt. Ferner werden über eine Limesbetrachtung $\lim_{Binzeit \to 0}$ der theoretischen Signalfunktion die Werte der theoretischen Signalfunktion an den bestimmten Zeitpunkten ermittelt, die die theoretische Signalfunktion $\lim_{Binzeit \to 0}$. Der numerische Abgleich wird durchgeführt, indem jeweils der Grenzwert einer der Messwertfunktionen mit dem Limeswert der theoretischen Signalfunktion an dem dieser Messwertfunktion zugeordneten bestimmten Zeitpunkt abgeglichen wird. Bei dieser Ausführungsform werden somit Messungen zu verschiedenen bestimmten Zeitpunkten durchgeführt und für jede Messung die Messwertfunktion ermittelt. Die zeitliche Erstreckung des Messzeitraums einer jeden Messung ist erheblich geringer als der zeitliche Abstand zwischen der Messung und der ihr zeitlich benachbarten Messungen. Beispielsweise kann der Messzeitraum für jede der Messungen sich über dieselbe Zeitspanne erstrecken. Beispielsweise kann der Abstand zwischen den Messungen für sämtliche Messungen konstant sein. Beispielsweise kann die zeitliche Erstreckung des Messzeitraums einer Messung weniger als 10 %, insbesondere weniger als 1 % des zeitlichen Abstands der Messung von der oder den ihr zeitlich am nächsten benachbarten Messungen betragen. Beispielsweise kann für den Messzeitraum einer Messung eine zeitliche Erstreckung von fünf Sekunden festgesetzt werden, wobei die Messung von der ihr zeitlich am nächsten benachbarten Messung um fünf Minuten beabstandet ist **[realistische Werte?].** Ein bestimmter Zeitpunkt bestimmt jeweils den Anfang des Messzeitraums der ihm zugeordneten Messung.

Bei der beschriebenen Ausführungsform werden zu jedem bestimmten Zeitpunkt über die erläuterte Variation der Binzeit Datensätze generiert, aus denen die Messwertfunktion für den bestimmten Zeitpunkt ermittelt wird. Durch das Ermitteln des Wertes der Messwertfunktion an einem bestimmten Zeitpunkt, den die Messwertfunktion annimmt, wenn in Prosa: die Binzeit gegen 0 geht, ist ein besonders einfacher numerischer Abgleich über die Limesbetrachtung der theoretischen Signalfunktion an dem bestimmten Zeitpunkt mit dem genannten ermittelten Wert ermöglicht. Die beschriebene Ausführungsform eignet sich insbesondere zum Ermitteln von Konstanten, die die Teilchen in dem System charakterisieren, von denen zumindest einige mit der Zeit variieren und somit zu verschiedenen bestimmten Zeitpunkten unterschiedliche Werte annehmen. Dies kann beispielsweise für die Konzentration der Teilchen in dem System zutreffen. Der numerische Abgleich kann besonders einfach durchgeführt werden, indem einige der Konstanten aus der theoretischen Signalfunktion als über die Zeit hinweg konstant angenommen werden und andere als zeitlich variabel. Beispielsweise können die Konzentrationen der Teilchen in dem System als zeitlich variabel angenommen und die Helligkeiten, mit der die Teilchen Emittenden emittieren, als zeitlich konstant angenommen werden. Ein besonders einfacher numerischer Abgleich kann bei der beschriebenen Ausführungsform durchgeführt werden, indem die Messwertfunktion auf $\frac{Q(\tau)}{\tau} = \frac{\sigma(\tau)^2 - \overline{n}}{\tau * \overline{n}(\tau)}$ festgelegt wird und die theoretische Signalfunktion auf $\frac{m_2^{sig}(\tau) - \left[m_1^{sig}(\tau)\right]^2 - m_1^{sig}(\tau)}{\tau * m_1^{sig}(\tau)}$. Hierdurch kann eine besonders einfache Grenzwertbetrachtung für $\tau \to 0$ durchgeführt werden, bei der sich die Grenzwerte bzw. Limeswerte der Messwertfunktionen an den bestimmten Zeitpunkten bzw. der theoretischen Signalfunktionen an den bestimmten Zeitpunkten bestimmen lassen.

In einer weiteren vorteilhaften Ausführungsform des erfindungsgemäßen Verfahrens wird bei der Definition der theoretischen Signalverteilung $P_{sig}(n,\tau)$ eine mittlere lokale Detektionsrate $\overline{\mu_{1,j}}$ der Spezies $j$ über das Integral $\overline{\mu}_{1,j} = \int_R d^3 r \mu_j(\vec{r})$ über einen, insbesondere unbegrenzten Raum $R$ festgelegt und als binzeitunabhängiger Parameter in die theoretische Signalverteilung $P_{sig}(n,\tau)$ eingeführt. Der Raum $R$ kann beispielsweise das Messvolumen sein. Bei entsprechender Wahl der lokalen Aufenthaltswahrscheinlichkeit kann der Raum beispielsweise unbegrenzt sein. Die mittlere lokale Detektionsrate $\overline{\mu_{1,j}}$ ist dabei eine binzeitunabhängige Konstante. Aufgrund der Relation $\mu_j(\vec{r}) = \mu_{0,j} f(\vec{r})$ ist in $\overline{\mu_{1,j}}$ die charakteristische Detektionshelligkeit $\mu_{0,j}$ enthalten. Über die Einführung von $\overline{\mu_{1,j}}$ in der theoretischen Signalverteilung $P_{sig}(n,\tau)$ kann somit bei einem numerischen Abgleich zwischen der theoretischen Signalfunktion und der Messwertfunktion die Konstante $\overline{\mu_{1,j}}$ ermittelt werden, die den Parameter $\mu_{0,j}$ betrifft. Die mittlere lokale Detektionsrate $\overline{\mu_{1,j}}$ entspricht gemäß ihrer Definition der über den bei der Messung verwendeten Detektor ermittelbaren Detektionsrate eines hypothetischen Teilchens der Spezies *j,* das während der Messung zu jedem Zeitpunkt mit seiner teilchenspezifischen über das räumliche Volumen aufsummierten charakteristischen Rate Emittenden emittiert. Der Erfindung liegt die Erkenntnis zugrunde, dass mit der Einführung der mittleren lokalen Detektionsrate $\overline{\mu_{1,j}}$ die Formulierung der theoretischen Signalverteilung $P_{sig}(n,\tau)$ stark vereinfacht werden kann. Dies ermöglicht einen einfacheren numerischen Abgleich zwischen Messwertfunktion und theoretischer Signalfunktion. Für den Fall einer Anwendung des erfindungsgemäßen Verfahrens auf ein System mit $s$ verschiedenen Spezies an Teilchen kann für jede der $s$ Spezies eine entsprechende mittlere lokale Detektionsrate $\overline{\mu}_{1,s}$ festgelegt werden. Der vorteilhaften Ausführungsform liegt der Ansatz zugrunde, den Ausdruck für die theoretische Signalverteilung zu vereinfachen, indem die ortsabhängige Funktion $\mu_j(\vec{r})$ mittels einer räumlich summarischen Betrachtung durch eine binzeitabhängige Konstante $\overline{\mu}_{1,j}$ ersetzt wird, die über den numerischen Abgleich gemäß des erfindungsgemäßen Verfahrens ermittelt werden kann und die Konstante $\overline{\mu}_{0,j}$ umfasst.

Eine weitere vorteilhafte Ausführungsform zeichnet sich dadurch aus, dass bei der Anwendung des erfindungsgemäßen Verfahrens auf einen stochastischen Transport der Teilchen für die Definition der theoretischen Signalverteilung $P_{sig}(n,\tau)$ eine mittlere detektierte Emissionsanzahl eines einzelnen Teilchens der Spezies $j$ festgelegt wird auf

$$\phi_{1,j}(\tau)=\frac{\int_0^\tau dt\int_R d^3r_0\left(\int_R d^3r\mu_j(\vec{r})\psi_j(\vec{r},t|\vec{r}_0)\right)^2}{\int_R d^3\mu_j(\vec{r})}.$$

Bei der Anwendung des Verfahrens auf einen deterministischen Transport der Teilchen wird für die Definition der theoretischen Signalverteilung $P_{sig}(n,\tau)$ eine mittlere detektierte Emissionsanzahl eines einzelnen Teilchens der Spezies $j$ festgelegt auf

$$\phi_{1,j}(\tau)=\frac{\int_R d^3r_0\left(\int_0^\tau dt\int_R d^3r\mu_j(\vec{r})\psi_j(\vec{r},t|\vec{r}_0)\right)^2}{\int_R d^3r\mu_j(\vec{r})}.$$

Dabei kann $R$ jeweils je nach Vorgehensweise bei der Definition der theoretischen Signalverteilung $P_{sig}(n,\tau)$ einen bestimmten Raum darstellen, wie beispielsweise ein begrenztes Messvolumen, oder beispielsweise einen unbegrenzten Raum. Insbesondere kann eine Integration über einen unbegrenzten Raum Vorteile mit sich bringen, da die Integrale leichter analytisch ausführbar sind. Beispielsweise kann die Integration über einen unbegrenzten Raum erfolgen, wenn gleichzeitig für die Definition von $P_{sig}(n,\tau)$ für das verwendete Messvolumen $V$ das oben erläuterte binzeitabhängige, fiktive effektive Volumen $V_{eff,j}(\tau)$ eingeführt wird und entsprechend bei der Definition berücksichtigt wird.

Die Einführung der mittleren detektierten Emissionsanzahl $\phi_{1,j}(\tau)$ ermöglicht eine noch weitere Vereinfachung bei der Definition der theoretischen Signalverteilung $P_{sig}(n,\tau)$. Mit Hilfe von $\phi_{1,j}(\tau)$ kann nämlich unter Annahme einer bestimmten Verteilung der Emissionsereignisse für Teilchen der Spezies $j$ auf einfache Art und Weise direkt die theoretische Signalverteilung $P_{sig}(n,\tau)$ formuliert werden. Die hierfür zu wählende Verteilung hängt von der Art der Teilchen der Spezies $j$ und von den zu emittierenden Emittenden ab. Für eine solche Verteilung kann beispielsweise eine Binomialverteilung, eine Gaußverteilung oder eine Poisson-Verteilung, je nach Anwendungsbereich des erfindungsgemäßen Verfahrens, angenommen werden. Besonders einfach ist die Definition der theoretischen Signalverteilung $P_{sig}(n,\tau)$ bei Anwendung der genannten Ausführungsform auf ein System mit nur einer Emittenden emittierenden Spezies $j$. Das Verfahren kann jedoch analog auch für Systeme mit $s$ verschiedenen Spezies von emittierenden Teilchen angewandt werden.

Beispielsweise kann bei der Annahme einer poissonischen Verteilung der Emissionsereignisse bei der Spezies $j$ formuliert werden: $$Poi(n,\phi_{1,j})(\tau)=\frac{\phi_{1,j}^n(\tau)}{n!}e^{-\phi_{1,j}(\tau)}$$ für $n$=0,1,... .

In einer Ausführungsform wird für den numerischen Abgleich als Messwertfunktion $$Q(\tau)=\frac{\sigma^2(\tau)-\overline{n}(\tau)}{\overline{n}(\tau)}$$ angesetzt, wobei $\sigma^2(\tau)$ und $\overline{n}(\tau)$ auf herkömmliche Weise ermittelt werden können, wobei der numerische Abgleich über die Relation $$Q(\tau)=\frac{\sum_{j=1}^{s}\overline{\mu}_{1,j}c_j\phi_{1,j}(\tau)}{\lambda+\sum_{j=1}^{s}\overline{\mu}_{1,j}c_j}$$ erfolgt. Dabei wird das erfindungsgemäße Verfahren auf ein System angewandt, in dem von $s$ verschiedene Teilchenspezies ausgegangen wird, wobei das Rauschverhalten der Messapparatur über die Rauschkonstante $\lambda$ berücksichtigt wird. Mit Hilfe dieses funktionalen Ausdrucks kann bei Einsetzen eines

entsprechenden $\phi_{1,j}(\tau)$ für die Teilchen der Spezies $j$ für jede der s verschiedenen Teilchenspezies der numerische Abgleich unmittelbar und einfach durchgeführt werden. Bei dieser Ausführungsform wird somit für die theoretische Signalfunktion der Ausdruck $\frac{\sum_{j=1}^{s} \overline{\mu}_{1,j} c_j \phi_{1,j}(\tau)}{\lambda + \sum_{j=1}^{s} \overline{\mu}_{1,j} c_j}$ definiert. Die Ausführungsform beruht auf den erläuterten erfindungsgemäßen Annahmen zur Definition der theoretischen Signalverteilung. Der in der Ausführungsform angewandte funktionale Zusammenhang zwischen Messwertfunktion und theoretischer Signalfunktion zur Durchführung des numerischen Abgleichs beruht neben den erfindungsgemäßen Annahmen auf herkömmlichen mathematischen Umformungen, die durch Einführung zusätzlicher Annahmen, die in diese Ausführungsform der Erfindung zur Formulierung eines möglichst einfachen Ausdrucks für den numerischen Abgleich eingeführt werden. Es hat sich herausgestellt, dass mit dem genannten funktionalen Zusammenhang zwischen Messwertfunktion und theoretischer Signalfunktion eine besonders einfache, schnelle und genaue Ermittlung der die binzeitunabhängigen Parameter $\mu_{0,j}$, $\vartheta_j$ und insbesondere $c_j$ betreffenden Konstanten möglich ist. Insbesondere hat sich als besonders vorteilhaft herausgestellt, zur Definition von $P_{sig}(n, \tau)$, auf der diese Ausführungsform beruht, zusätzlich die Definition des effektiven Volumens einzuführen und analog zur Bestimmung von $\overline{\mu_{1}}_j$ die Integration über den unbegrenzten Raum auszuführen. Dadurch können charakteristische Teilcheneigenschaften, wie etwa die Diffusionskonstante von Teilchen oder die Zerfallszeit von Teilchen und die Konzentration einer Teilchenspezies in dem System einfach und genau über den numerischen Abgleich bestimmt werden.

Insbesondere kann bei der Anwendung des Verfahrens auf ein System mit nur der Teilchenspezies $j$ als einziger die Emittenden emittierende Spezies der numerische Abgleich über die Relation $Q(\tau)=\phi_{1,j}(\tau)$ erfolgen. Dies ermöglicht eine besonders einfache Ermittlung der Konstanten betreffend die binzeitunabhängigen Parameter $\mu_{0,j}$, $\vartheta_j$ und insbesondere $c_j$.

In einer Ausführungsform wird für die lokale Detektionsrate $\mu_j(\vec{r})$ eine Gaußfunktion mit $\mu_j(\vec{r}) = \mu_{0,j} \exp\left(-\frac{2}{a_{xy}^2}\left(x^2+y^2\right)\right)\exp\left(-\frac{2}{a_z^2}z^2\right)$ mit den Konstanten $a_{xy}$ und $a_z$ angenommen. Somit ist die Ortsabhängigkeit der lokalen Detektionsrate $\mu_j(\vec{r})$ über eine Gaußfunktion dargestellt. Die angegebene Gleichung für $\mu_j(\vec{r})$ ist eine Möglichkeit, $\mu_j(\vec{r})$ für die Definition der theoretischen Signalverteilung $P_{sig}(n, \tau)$ darzustellen. $x$, $y$ und z stellen die Ortskoordinaten des Raumvektors $\vec{r}$ dar. Die Annahme einer entsprechenden lokalen Abhängigkeit von $\mu_j(\vec{r})$ ist beispielsweise im Falle der Anwendung des erfindungsgemäßen Verfahrens auf ein System, in dem die zu analysierenden Teilchen Photonen als Emittenden emittieren und zur Emission mittels 1-Photonenanregung angeregt werden, eine Näherung, die sehr gute Ergebnisse für das erfindungsgemäße Verfahren liefert. Je nach Anwendungsbereich können auch andere Ortsabhängigkeiten für die Definition von $P_{sig}(n, \tau)$ angenommen werden. Beispielsweise können entsprechende, bekannte Ortsabhängigkeiten der Emission für den Fall der Anwendung des Verfahrens auf ein System mit Photonen emittierenden Teilchen, das durch zwei Photonenanregungen angeregt wird, und für die Anwendung des Verfahrens auf eine Messung per STED-Mikroskopie angewendet werden.

In einer Ausführungsform des erfindungsgemäßen Verfahrens für die Anwendung des Verfahrens auf ein System, in dem die zu analysierenden Teilchen einem fluidischen Transport mit der Transportgeschwindigkeit v unterliegen, wird für die Definition der theoretischen Signalverteilung $P_{sig}(n, \tau)$ eine mittlere detektierte Emissionsanzahl eines einzelnen Teilchens der Spezies $j$ festgelegt auf $\phi_{1,j}(\tau) = \frac{\sqrt{\pi}}{2\sqrt{2}} \frac{\mu_{0,j}}{2a} \frac{\vartheta_j^2}{\tau} \int_{-\infty}^{\infty} dz_0 \left( erf\left[\frac{1}{\vartheta_j}\left(\frac{z_0}{v}+\tau\right)\right] - erf\left[\frac{z_0}{v\vartheta_j}\right]\right)^2$. Dabei sind $\vartheta_j$, $a$ und $v$ binzeitunabhängige Konstanten. Die Zerfallszeit $\vartheta_j$ lässt sich dabei in Abhängigkeit von $v$ und $a$ ausdrücken über: $\vartheta_j = \frac{a}{\sqrt{2}v}$. In diesem Sinne gibt $\vartheta_j$ die über $\sqrt{2}$ reduzierte Zeit an, mit der ein Teilchen die Strecke $a$ in Transportrichtung zurücklegt. Die Zerfallszeit $\vartheta_j$ kann in diesem Fall beispielsweise als eine Zeit interpretiert werden, die die Zeit charakterisiert, in der ein Teilchen der Spezies $j$ sich innerhalb des Volumens befindet, von dem aus das Teilchen Emittenden so emittieren kann, dass sie von einem Detektor detektiert werden können. Die Strecke $a$ kann beispielsweise durch die Optik einer Messapparatur, die die Emittenden aus dem Messvolumen auf den Detektor projiziert, festgelegt sein. Über $\vartheta_j$ kann beispielsweise die Transporteigenschaft von Teilchen der Spezies *j* in dem System charakterisiert werden.

In einer Ausführungsform des erfindungsgemäßen Verfahrens für die Anwendung des Verfahrens auf ein System, in dem die zu analysierenden Teilchen einem Diffusionstransport mit sphärischer Messsymmetrie unterliegen, d. h. die lokale Abhängigkeit der lokalen Detektionsrate im Messvolumen ist sphärisch symmetrisch, wird für die Definition der theoretischen Signalverteilung $P_{sig}(n, \tau)$ eine mittlere detektierte Emissionsanzahl eines einzelnen Teilchens *z* der Spezies *j* festgelegt auf

$$\phi_{1,j}(\tau) = \frac{\mu_{0,j}}{\sqrt{2}} \vartheta_j \left( 1 - \frac{1}{\sqrt{1 + \frac{\tau}{\vartheta_j}}} \right).$$

Der Diffusionstransport kann dabei beispielsweise als isotroper Zerfall von Teilchen interpretiert werden, die vor dem Zerfall während der Messung Emittenden emittieren und nach dem Zerfall keine Emittenden emittieren können. Beispielsweise kann der Diffusionstransport als ein Massentransport über Diffusion von Teilchen interpretiert werden, wobei von den Teilchen nur dann Emittenden detektiert werden können, wenn sie sich in einem bestimmten Messvolumen befinden. Je nach Anwendung des erfindungsgemäßen Verfahrens ist eine entsprechende Interpretation des Diffusionstransports und entsprechend eine an der Anwendung orientierte Interpretation von $\vartheta_j$ notwendig. In dem ersten angeführten Beispiel kann $\vartheta_j$ beispielsweise die Zeit charakterisieren, innerhalb der Teilchen der Spezies *j* zerfallen. Bei dem zweiten angegebenen Beispiel kann $\vartheta_j$ die Zeit charakterisieren, die Teilchen der Spezies *j* zum Durchtreten des Messvolumens benötigen. In diesem Fall kann $\vartheta_j$ beispielsweise bei einem sphärisch symmetrischen Messvolumen über

$$\vartheta_j = \frac{a^2}{8D_j}$$

beschrieben werden, wobei *a* den Durchmesser des Messvolumens und $D_j$ die Diffusionskonstante von Teilchen der Spezies *j* in dem System angibt.

In einer Ausführungsform des erfindungsgemäßen Verfahrens für die Anwendung des Verfahrens auf ein System, in dem die zu analysierenden Teilchen einem Diffusionstransport mit rotationsellipsoidischer Messsymmetrie unterliegen, d. h. durch die Messapparatur ist eine rotationsellipsoidische Symmetrie der räumlichen Detektionsratenabhängigkeit im Messvolumen festgelegt, kann für die Definition der theoretischen Signalverteilung $P_{sig}(n, \tau)$ eine mittlere detektierte Emissionsanzahl eines einzelnen Teilchens *z* der Spezies *j* festgelegt werden auf

$$\phi_{1,j}(\tau) = \frac{\mu_{0,j}}{2^{\frac{3}{2}}} \int_0^{\tau} \frac{dt}{\left(1 + \frac{t}{\vartheta_{j,xy}}\right)\sqrt{1 + \frac{t}{\vartheta_{j,z}}}}.$$

Dabei stellen $\vartheta_{j,xy}$ und $\vartheta_{j,z}$ Zerfallszeiten für Teilchen der Spezies *j* dar, die von der Zerfallszeit $\vartheta_j$ umfasst sind. Wie oben erläutert kann der Diffusionstransport je nach Anwendung des Verfahrens unterschiedlich interpretiert werden. Bei der Interpretation des Diffusionstransports als einen tatsächlichen Massentransport der zu analysierenden Teilchen in dem System, wie oben erläutert, können im Fall der rotationsellipsoidischen Symmetrie der räumlichen Detektionsratenabhängigkeit im Messvolumen $\vartheta_{j,xy}$ und $\vartheta_{j,z}$ über

$$\vartheta_{j,xy} = \frac{a_{xy}^2}{8D_j}$$

und

$$\vartheta_{j,z} = \frac{a_z^2}{8D_j}$$

beschrieben werden, wobei entsprechend $a_{xy}$ und $a_z$ Konstanten sind, die das Messvolumen beschreiben, und $D_j$ die Diffusionskonstante von Teilchen der Spezies *j* in dem System darstellt.

Im Folgenden wird die Erfindung anhand von Ausführungsbeispielen und unter Bezugnahme auf die Figuren 1 bis 9 näher beschrieben.

Es zeigen:

Figur 1: die gemäß einem Ausführungsbeispiel zur Ermittlung von $P_{sig}(n, \tau)$ angenommene Einzelmolekülverteilung;

Figur 2: die gemäß einer Ausführungsform ermittelte theoretische Signalverteilung $P_{sig}(n, \tau)$ als Funktion der Binzeit für verschiedene Werte von *n;*

Figur 3: in einer Prinzipdarstellung den schematischen Aufbau einer Messapparatur;

Figur 4: eine graphische Darstellung des Ergebnisses des numerischen Abgleichs gemäß einer Ausführungsform der Erfindung;

Figur 5: eine graphische Darstellung des numerischen Abgleichs gemäß einer weiteren erfindungsgemäßen Ausführungsform;

Figur 6: eine graphische Darstellung der Ergebnisse des numerischen Abgleichs einer weiteren erfindungsgemäßen Ausführungsform;

Figur 7: eine graphische Darstellung der charakteristischen Daten, die aus dem numerischen Abgleich bei der Ausführungsform nach Figur 6 gewonnen wurden;

Figur 8: eine graphische Darstellung der Ergebnisse des numerischen Abgleichs gemäß einer weiteren erfindungsgemäßen Ausführungsform;

Figur 9: eine graphische Darstellung der aus dem Abgleich gemäß Figur 8 gewonnenen charakteristischen Daten;

Figur 10: eine graphische Darstellung von Simulationen des Verhaltens von Parametern eines zu untersuchenden Systems;

Figur 11: eine graphische Darstellung von Messungen betreffend das Verhalten von Parametern des in Figur 10 dargestellten Systems.

Wie erläutert kann der Fachmann über herkömmliche mathematische, analytische und numerische Mittel eine theoretische Signalverteilung $P_{sig}(n,\tau)$ definieren, über die dann gemäß dem erfindungsgemäßen Verfahren der numerische Abgleich zur Ermittlung der das System bzw. die Teilchen spezifizierenden Daten möglich ist. Anhand eines Ausführungsbeispiels wird im Folgenden beispielhaft aufgezeigt, wie ein Fachmann über erfindungsgemäße Annahmen eine theoretische Signalverteilung $P_{sig}(n,\tau)$ definieren kann. Hierfür wird zugrunde gelegt, dass das Verfahren auf ein System angewandt wird, in dem Teilchen zu analysieren sind, deren lokale Aufenthaltswahrscheinlichkeit und deren lokale Emissionswahrscheinlichkeit über eine Poisson-Verteilung angenähert werden kann.

Bei der erfindungsgemäßen Ausführungsform wird die oben erläuterte Definition des effektiven Volumens $V_{eff,j}(\tau)$ angewandt. Zudem wird zur Vereinfachung der Formulierung von $P_{sig}(n,\tau)$ die oben eingeführte mittlere detektierte Emissionsanzahl eines einzelnen Teilchens der Spezies $j$ $\phi_{1,j}(\tau)$ eingeführt.

Alleine über die Normierung der Poisson-Verteilung kann formuliert werden: $\sum_{n=0}^{\infty} Poi(n,\phi_{1,j}(\tau)) = 1$ . Über

$$Poi(n,\phi_{1,j}(\tau)) = \frac{\phi_{1,j}^{n}}{n!} e^{-\phi_{1,j}(\tau)}$$

kann dieser Ausdruck umgeformt werden zu: $\sum_{n=1}^{\infty} Poi(n,\phi_{1,j}(\tau)) = 1 - e^{-\phi_{1,j}(\tau)}$ .

Mit Hilfe der mathematischen Umformung einer Multiplikation dieser Gleichung mit dem Faktor $\frac{\overline{\mu}_{1,j}}{\phi_{1,j}}(\tau)$ erhält man:

$$\frac{(\int_{R^3} d^3 r_0 \mu_j(\vec{r}))}{\phi_{1,j}(\tau)} \sum_{n=1}^{\infty} Poi(n,\phi_{1,j}(\tau)) = \sum_{n=1}^{\infty} \frac{(\int_{R^3} d^3 r_0 \mu_j(\vec{r}))}{n!} \phi_{1,j}(\tau)^{n-1} e^{-\phi_{1,j}(\tau)} = \left(\int_{R^3} d^3 r_0 \mu_j(\vec{r})\right) \frac{(1-e^{-\phi_{1,j}(\tau)})}{\phi_{1,j}(\tau)}$$

. Über diese Umformungen kann ein Ausdruck formuliert werden, für dessen Summanden das Volumenintegral existiert.

Insbesondere kann der Term $\frac{1-e^{\phi_{1,j}(\tau)}}{\phi_{1,j}(\tau)}$ in einer Reihe entwickelt werden. Erfindungsgemäß wird angenommen, dass die Integration in die Summe gezogen werden kann. Der Ausdruck $(\int_{R^3} d^3r_0\mu_j(\vec{r}))\frac{1-e^{-\phi_{1,j}(\tau)}}{\phi_{1,j}(\tau)}$ kann zur Vereinfachung abgekürzt werden. An dieser Stelle kann dieser Ausdruck als effektives Volumen definiert werden, so dass gilt:

$$V_{eff,j}(\tau) := \left(\int_{R^3} d^3r_0\mu_j(\vec{r})\right)\frac{1-e^{-\phi_{1,j}(\tau)}}{\phi_{1,j}(\tau)} = \overline{\mu}_{1,j}\,\frac{1-e^{-\phi_{1,j}(\tau)}}{\phi_{1,j}(\tau)}.$$

Somit gilt: $\sum_{n=1}^{\infty}\frac{\overline{\mu}_{1,j}}{V_{eff,j}(\tau)}\frac{\phi_{1,j}(\tau)^{n-1}}{n!}e^{-\phi_{1,j}(\tau)} = 1.$ Mit Hilfe der Definition des effektiven Volumens, wonach ein jedes Teilchen, das sich in dem Volumen $\tau V_{eff,j}(\tau)$ befindet, einen Emittenden emittiert, der detektiert wird, woraus sich ergibt, dass die Wahrscheinlichkeit, dass ein Teilchen, das sich in diesem Volumen befindet, nicht emittiert, gleich 0 ist, ergibt sich für die Signalverteilung eines einzelnen Teilchens der Spezies *j* :

$$P_{1,j}(n,\tau) := \begin{cases} 0 & \text{für } n = 0 \\ \frac{\overline{\mu}_{1,j}}{V_{eff,j}(\tau)}\frac{\phi_{1,j}(\tau)^{n-1}}{n!}e^{-\phi_{1,j}(\tau)} & \text{für } n > 0 \end{cases}$$

Aufgrund der Normierungseigenschaften der Poisson-Verteilung durch das effektive Volumen weist diese Signalverteilung eines einzelnen Teilchens automatisch das richtige Normierungsverhalten auf. In Figur 1 sind die sich aus der Verteilung für ein einzelnes Teilchen der Spezies *j* ergebenden Wahrscheinlichkeiten als Funktion der Binzeit $\tau$ für $n$=1, 2 und 3 dargestellt. Wie zu erwarten ergibt sich: $\lim_{\tau\to 0} P_{1,j}(n=1,\tau)=1$ und $\lim_{\tau\to 0} P_{1,j}(n\geq 1,\tau)=0.$ Denn jedes Teilchen, das sich in dem über das effektive Volumen definierten Volumen befindet, emittiert zumindest einen detektierten Emittend und für $\lim_{\tau\to 0}$, also für eine gegen 0 gehende Binzeit, kann ein Teilchen keine zwei Emittenden emittieren. Mit zunehmender Binzeit $\tau$ ist ein Abfall der Wahrscheinlichkeit $P_{1,j}(n=1,\tau)$ in dem Maße zu beobachten, wie die Wahrscheinlichkeiten $P_{1,j}(n\geq 1,\tau)$ zunehmen. Dies ist intuitiv unmittelbar zu verstehen, da mit zunehmender Binzeit $\tau$ zu erwarten ist, dass auch mehrere von einem Teilchen emittierten Emittenden detektiert werden. Für sehr große Binzeiten weisen die einzelnen Wahrscheinlichkeiten ein stationäres Verhalten auf. Dies hängt damit zusammen, dass die Teilchen mit zunehmender Binzeit aus dem Messvolumen driften oder aus anderen Gründen, wie beispielsweise Zerfallsgründen, keine weiteren Emittenden emittieren können.

Wenn von einem Teilchen zum Zeitpunkt $t_0$ ein Emittend detektiert wird, besetzt es gemäß der in dem Ausführungsbeispiel eingeführten Definition des effektiven Volumens $V_{eff,j}(\tau)$ das Volumen $\tau V_{eff,j}(\tau)$. Somit ist die Anzahl *m* der Teilchen, die innerhalb der Binzeit *r* das Volumen $\tau V_{eff,j}(\tau)$ besetzen, selbst ein Zufallsprozess. Gemäß der Definition von $V_{eff,j}(\tau)$ gilt: $\omega_j(\tau)=c_j V_{eff,j}(\tau)\tau.$ Die Besetzungswahrscheinlichkeit $\chi_j(m,\omega_j(\tau))$ kann somit in dem beschriebenen Ausführungsbeispiel unter Annahme einer Poisson-Verteilung für die Besetzungswahrscheinlichkeit $\chi$ angegeben werden durch: $\chi_j(m,\omega_j(\tau)) = \frac{\omega_j^m(\tau)}{m!}e^{-\omega_j(\tau)}.$

Wie erläutert kann der Fachmann auf einfache Weise über die erfindungsgemäßen Annahmen mit Hilfe von mathematischen Umformungen und Vereinfachungen zu der Verteilung $P_{1,j}(n,\tau)$ gelangen, die die Wahrscheinlichkeit angibt, innerhalb einer Binzeit $\tau$ $n$ Emissionen von einem einzigen Teilchen der Spezies *j,* das sich in dem fiktiven Volumen $\tau V_{eff,j}(\tau)$ befindet, zu detektieren. Ein entsprechendes $P_{1,j}(n,\tau)$ kann beispielsweise wie in dem gezeigten Ausführungsbeispiel ermittelt werden, selbstverständlich sind jedoch auch andere mathematische Umformungen und Vereinfachungen möglich, um zu einem möglichst einfachen und dennoch möglichst exakten Ausdruck für $P_{1,j}(n,\tau)$ zu gelangen.

In dem beschrieben Ausführungsbespiel des erfindungsgemäßen Verfahrens wird die theoretische Signalverteilung $P_{sig}(n,\tau)$ über die Bestimmung von $P_{1,j}(n,\tau)$ als Hilfsgröße ermittelt. Selbstverständlich sind auch andere Wege zur Bestimmung von $P_{sig}(n,\tau)$ möglich. Bei dem beschriebenen Ausführungsbeispiel wird $P_{sig}(n,\tau)$ über $P_{1,j}(n,\tau)$ über die Annahme definiert, dass in dem zu beobachtenden System in dem Volumen $\tau V_{eff,j}(\tau)$, von dem aus Teilchen Emittenden emittieren können, die detektiert werden können, *m* Teilchen enthalten sind, die während der Messung Emittenden emittieren. Unter der Voraussetzung der stochastischen Unabhängigkeit der Emissionsvorgänge der *m* verschiedenen Teilchen in dem Volumen $\tau V_{eff,j}(\tau)$ kann die Verteilung der Anzahl der von den *m* Teilchen detektierten Emittenden durch die *m*-fache Faltung dargestellt werden

$$P_{m,j}(n,\tau)=(P_{m-1,j}\otimes P_{1,j})(n,\tau)=\sum_{i=1}^{n-1}P_{m-1,j}(n-i,\tau)P_{1,j}(n,\tau)\,,$$

wobei *m*>1 ist. Entsprechend kann die theoretische Signalverteilung $P_{sig,m}(n>0,\tau)$, die die Signalverteilung angibt, wobei angenommen wird, dass *m* Teilchen in dem Volumen $\tau V_{eff,j}(\tau)$ sind und zumindest ein Photon detektiert wird, angegeben werden mit:

$$P_{sig,m}(n>0,\tau)=\begin{cases}P_{1,j}(n,\tau) & \text{für m = 1}\\ P_{m,j}(n,\tau) & \text{für } m>1\end{cases}$$

Für die vollständige Darstellung von $P_{sig}(n,\tau)$ ist zu berücksichtigen, dass sich die Anzahl *m* der Teilchen, die sich in dem durch das effektive Volumen bestimmten Volumen befinden und somit zu der während der Binzeit gemessenen Anzahl an Emissionen beitragen, eine statistische Größe ist, für die eine bestimmte Wahrscheinlichkeitsverteilung angenommen werden muss. Wie oben erläutert kann die mittlere Besetzungszahl, d. h. der Mittelwert für *m*, angegeben werden durch: $\omega_j(\tau)=c_jV_{eff,j}(\tau)\tau$. Für die festzulegende Wahrscheinlichkeitsverteilung der Besetzungszahl ist eine an das Verhalten der Teilchen in dem zu analysierenden System orientierte Auswahl einer bekannten Wahrscheinlichkeitsverteilung vorzunehmen. In dem beschriebenen Ausführungsbeispiel wird eine poissonische Verteilung der Besetzungsanzahl angenommen. Damit gilt für die Wahrscheinlichkeitsverteilung der Besetzungsanzahl *m* für Teilchen der Spezies

$$j\ :\ \chi_j(m,\omega_j(\tau))=\frac{\omega_j^m(\tau)}{m!}e^{-\omega_j(\tau)}\ .$$

Damit kann die theoretische Signalverteilung für ein System mit nur einer Emittenden emittierenden Teilchenspezies *j* definiert werden über:

$$P_{sig}(n>0,\tau)=\sum_{m=1}^{\infty}P_{sig,m}(n>0,\tau)\frac{\omega_j^m(\tau)}{m!}e^{-\omega_j(\tau)}\ .$$

Für die vollständige Beschreibung der theoretischen Signalverteilung $P_{sig}(n,\tau)$ ist ferner der Wert von $P_{sig}(n=0,\tau)$ zu bestimmen. Gemäß der Definition des effektiven Volumens ist die Wahrscheinlichkeit, dass in einem Messzeitraum kein Emittend detektiert wird und somit *n*=0 ist, identisch mit der Wahrscheinlichkeit, dass sich kein emittierendes Teilchen während des Messzeitraums in dem Volumen $\tau V_{eff,j}(\tau)$ befindet. Somit gilt: $P_{sig}(n=0,\tau)=e^{-\omega j(\tau)}$. Damit gilt

$$P_{sig}(n,\tau)=\begin{cases}e^{-\omega_j(\tau)} & \text{für } n=0\\ \sum_{m=1}^{\infty}P_{sig,m}(n>0,\tau)\frac{\omega_j(\tau)^m}{m!}e^{-\omega_j(\tau)} & \text{für } n>0\end{cases}$$

Wie in dem beschriebenen Ausführungsbeispiel ersichtlich, erleichtert die Einführung des effektiven Volumens bei der Definition der theoretischen Signalverteilung $P_{sig}(n,\tau)$ erheblich die mathematischen Umformungen, um mit Hilfe der erfindungsgemäßen Annahmen zu einem Ausdruck $P_{sig}(n,\tau)$ zu gelangen.

Mit Hilfe der Wahrscheinlichkeitserzeugenden Funktion kann dieser Ausdruck für die theoretische Signalverteilung $P_{sig}(n,\tau)$ umgewandelt werden in eine Rekursionsformel:

$$P_{sig}(n,\tau) = \begin{cases} e^{-\omega_j(\tau)} & \text{für } n = 0 \\ \dfrac{\omega_j(\tau)}{n} \sum_{k=1}^{n} k P_{1,j}(k,\tau) P_{sig}(n-k,\tau) & \text{für } n > 0 \end{cases}$$

Beispielhaft lassen sich hieraus die Werte für $P_{sig}(n,\tau)$ für $n$=0, 1, 2 und 3 wie folgt berechnen:

$$P_{sig}(0,\tau) = e^{-\omega_j(\tau)}$$

$$P_{sig}(1,\tau) = e^{-\omega_j(\tau)} \omega_j(\tau) P_{1,j}(1,\tau)$$

$$P_{sig}(2,\tau) = e^{-\omega_j(\tau)} \left( \frac{\omega_j^2(\tau)}{2} P_{1,j}^2(1,\tau) + \omega_j(\tau) P_{1,j}(2,\tau) \right)$$

$$P_{sig}(3,\tau) = e^{-\omega_j(\tau)} \left( \frac{\omega_j^3(\tau)}{6} P_{1,j}^3(1,\tau) + \omega_j^2(\tau) P_{1,j}(1,\tau) P_{1,j}(2,\tau) + \omega_j(\tau) P_{1,j}(3,\tau) \right)$$

$P_{sig}(n,\tau)$ stellt somit die Summe aus den kombinatorischen Möglichkeiten dar, $n$ Emittenden zu detektieren, wobei die Beiträge der Signalverteilung für von einem einzigen Teilchen emittierte Emittenden dabei jeweils mit einem entsprechenden Produkt der Besetzungszahl gewichtet sind.

In Figur 2 ist $P_{sig}(n,\tau)$ für $n$=0, 1, 2 und 3 in Abhängigkeit von $r$ graphisch dargestellt. Aus Figur 2 ist ersichtlich, dass mit zunehmender Binzeit die Wahrscheinlichkeit, mehr Emittenden zu detektieren, zunimmt. Entsprechend ist aus Figur 2 ersichtlich, dass die theoretische Signalverteilung $P_{sig}(n,\tau)$ mit dem zu erwartenden Messergebnis korrespondiert.

Aus der genannten Rekursionsformel für $P_{sig}(n,\tau)$ können auf herkömmliche Weise die Momente $m_i^{sig}(\tau)$ von $P_{sig}(n,\tau)$ ermittelt werden. Eine solche herkömmliche Ermittlung der Momente $m_i^{sig}(\tau)$ ist beispielsweise in der Dissertation "Die Einzelmolekülverteilung in Fluoreszenz-Fluktuations-Experimenten", B. Greiner, Dortmund, 2007 beschrieben. Da die theoretische Signalverteilung $P_{sig}(n,\tau)$ wie jede Wahrscheinlichkeitsverteilung auf 1 normiert ist, ergibt sich für das 0 te Moment: $m_0^{sig}(\tau) = \sum_{n=0}^{\infty} P_{sig}(n,\tau) = 1$. Über die herkömmliche Berechnung ergibt sich für die weiteren Momente:

$$m_k^{sig} = \sum_{n=0}^{\infty} n^k P_{sig}(n,\tau) = \omega_j(\tau) \sum_{l=1}^{k} \binom{k-1}{l-1} m_{k-l}^{sig} m_{l,j}^{1},$$

wobei $m_{l,j}^{1}$ das $l$ te Moment der Signalverteilung für ein einzelnes Teilchen der Spezies $j$ darstellt.

Die Momente $m_{k,j}^{1}$ können über die charakteristische Funktion $\varphi(t)$ der Signalverteilung eines einzelnen Teilchens der Spezies $j$ $P_{1,j}(n,\tau)$ berechnet werden, wobei die herkömmliche Definition von $\varphi(t)$ und herkömmliche mathematische Umformungen angewendet werden können. Mit

$$\varphi(t)=\sum_{n=0}^{\infty}P_{1,j}(n,\tau)e^{\text{int}}$$

und

$$P_{1,j}(n,\tau):=\begin{cases}0 & \text{für } n=0\\ \sum_{n=1}^{\infty}\frac{\overline{\mu}_{1,j}}{V_{eff,j}(\tau)}\frac{\phi_{1,j}(\tau)^{n-1}}{n!}e^{-\phi_{1,j}(\tau)}=1 & \text{für } n>0\end{cases}$$

ergibt sich

$$\varphi(t)=\frac{\overline{\mu}_{1,j}}{V_{eff,j}(\tau)}\frac{e^{-\phi_{1,j}(\tau)}}{\phi_{1,j}(\tau)}(e^{\phi_{1,j}(\tau)e^{it}}-1)\ .$$

Aus der charakteristischen Funktion lassen sich bekanntermaßen die Momente $m_{k,j}^{1}$ für beliebige Ordnungen $k$ berechnen über

$$m_{k,j}^{1}=\frac{1}{i^k}\frac{d^k}{dt^k}\varphi(t)\Big|_{t=0}=\frac{\overline{\mu}_{1,j}}{V_{eff,j}(\tau)}\frac{e^{-\phi_{1,j}(\tau)}}{\phi_{1,j}(\tau)}\frac{1}{i^k}\frac{d^k}{dt^k}(e^{\phi_{1,j}(\tau)e^{it}}-1)=\frac{\overline{\mu}_{1,j}}{V_{eff,j}(\tau)}\left(\sum_{l=1}^{k}S(k,l)\phi_{1,j}^{l-1}(\tau)\right),$$

wobei $S(k,l)$ konstante Koeffizienten darstellen, nämlich Stirling-Zahlen zweiter Art, die häufig bei kombinatorischen Problemen auftreten. Sie beschreiben die Anzahl unterschiedlicher Möglichkeiten, eine Permutation aus $k$ Elementen in $l$ Zyklen zu zerlegen.

Unter Berücksichtigung dieser so bestimmten Momente $m_{k,j}^{1}$ können die $k$ ten Momente $m_k^{sig}$ dargestellt werden als:

$$m_k^{sig}=\omega_j(\tau)\sum_{l=1}^{k}\sum_{v=1}^{l}\binom{k-1}{l-1}S(l,v)\frac{\phi_{1,j}^{v}(\tau)}{1-e^{-\phi_{1,j}(\tau)}}m_{k-l}^{sig}\ .$$

Daraus sind sämtliche Momente berechenbar. Beispielsweise können das erste und das zweite Moment angegeben werden mit

$$m_1^{sig}=c_j\overline{\mu}_{1,j}\tau$$

$$m_2^{sig}=c_j\overline{\mu}_{1,j}\tau(1+c_j\overline{\mu}_{1,j}\tau+\phi_{1,j}(\tau)\ .$$

Daraus lassen sich bekanntermaßen Mittelwert $\overline{n}$ und Varianz $\sigma^2$ berechnen über:

$$\overline{n}_{sig}=m_1^{sig}=c_j\overline{\mu}_{1,j}\tau$$

$$\sigma_{sig}^2 = m_2^{sig^2} - m_1^{sig^2} = c_j \overline{\mu}_{1,j} \tau (1 + \phi_{1,j}(\tau)) \text{ .}$$

Dieses Ergebnis ist konform mit den Erwartungen für die Signalverteilung für ein System mit nur einer Teilchenspezies $j$. Der Mittelwert der Signalverteilung entspricht der über das gesamte Volumen aufsummierten Rate eines einzelnen Teilchens der Spezies $j$ mal der Binzeit $r$ und der Teilchendichte $c_j$. Die Varianz weicht um den Faktor $1+\phi_{1,j}$ von dem Erwartungswert ab, so dass die Signalverteilung nicht poissionisch ist.

Die theoretische Signalfunktion lässt sich beispielsweise aus $\overline{n}_{sig}$ und $\sigma_{sig}^2$ bestimmen über die Definition der theoretischen Signalfunktion über $Q_{sig}$ mit

$$Q_{sig} = \frac{\sigma_{sig}^2 - \overline{n}_{sig}}{\overline{n}_{sig}} = \frac{m_{2,j}^{sig} - \left[m_{1,j}^{sig}\right]^2 - m_{1,j}^{sig}}{m_{1,j}^{sig}} = \phi_{1,j}(\tau) \text{ .}$$

Diese als $Q_{si}$ definierte theoretische Signalfunktion ist identisch mit dem bekannten Mandelschen $Q$-Faktor. Über die zu dem beschriebenen Ausführungsbeispiel eingeführte Definition von $\phi_{1,j}(\tau)$ kann mit einer entsprechenden Messwertfunktion unmittelbar der numerische Abgleich zur Ermittlung von die Teilchen charakterisierenden Konstanten, insbesondere die Ermittlung von $\vartheta_j$, $c_j$ und $\mu_{0j}$ bzw. $\overline{\mu_1}_{,j}$ ermittelt werden.

Wie an dem gezeigten Ausführungsbeispiel dargelegt lassen sich mit den erfindungsgemäßen Annahmen $P_{sig}(n,\tau)$ sowie die Momente $m_i^{Mess}(\tau)$ bestimmen, woraus eine theoretische Signalfunktion für den numerischen Abgleich formuliert werden kann. In dem obengenannten Ausführungsbeispiel wurde dies für ein System, in dem nur eine Teilchenspezies $j$ von emittierenden Teilchen erwartet wird, beispielhaft durchgeführt. Selbstverständlich sind auch andere mathematische Umformungen und Zwischenannahmen bzw. Zwischendefinitionen möglich, um zu einem Ausdruck für $P_{sig}(n,\tau)$ sowie $m_i^{sig}(\tau)$ zu gelangen.

Die Definition gemäß dem obengenannten Ausführungsbeispiel für ein System mit nur einer Teilchenspezies $j$ lässt sich analog für die Definition von $P_{sig}(n,\tau)$ für ein System mit $s$ verschiedenen Teilchenspezies gemäß einem weiteren Ausführungsbeispiel der Erfindung weiterführen. Hierfür sind verschiedene Berechnungsmethoden anwendbar. In dem vorliegenden Ausführungsbeispiel wird vereinfacht angenommen, dass in dem System die Teilchen der verschiedenen Spezies frei und unbeeinflusst in dem System diffundieren können, wobei die innerhalb eines Zeitraums detektierte Anzahl $n$ von Emittenden sich zusammensetzt aus den Beiträgen $n_l$, die von den Teilchen der verschiedenen $s$ Spezies herrühren. Entsprechend kann $n$ definiert werden über: $n = \sum_{l=1}^{s} n_l + n_{noise}$, wobei $n_{noise}$ Detektionen berücksichtigt, die von dem Rauschen der Messapparatur herrühren. Das Rauschen kann beispielsweise ein Detektorrauschen und/oder ein durch eine Anregungsquelle induziertes Rauschen umfassen. In dem Ausführungsbeispiel wird angenommen, dass für jede Anzahl $n_l$, eine Wahrscheinlichkeit gemäß der Speziessignalverteilung für die Spezies $l$ $P_{sig}^l(n,\tau)$ angegeben werden kann. Unter der Voraussetzung der stochastischen Unabhängigkeit kann somit die Gemisch-Wahrscheinlichkeit des Systems mit $s$ verschiedenen Teilchenspezies durch die $s$-fache Faltung der $s$ verschiedenen Signalverteilungen $P_{sig}^l(n,\tau)$ sowie der Rauschsignalverteilung $P_{noise}(n,\tau)$ dargestellt werden über:

$$P_{sig}(n,\tau) = \left(P_{sig}^1 \otimes \ldots \otimes P_{sig}^s \otimes P_{noise}\right)(n,\tau) \text{ .}$$

In einem ersten Ausführungsbeispiel wird das Rauschverhalten und somit der Beitrag $n_{noise}$ vernachlässigt,

so dass $P_{sig}(n,\tau)$ über die $s$-fache Faltung der Speziessignalverteilungen $P_{sig}^{l}(n,\tau)$ definiert werden kann.

Wie zum ersten Ausführungsbeispiel betreffend ein System mit nur einer Teilchenspezies $j$ ausgeführt können zur Berechnung von $P_{sig}(n,\tau)$ in dem vorliegenden Ausführungsbeispiel dieselben Rechentechniken angewandt werden, wobei analog über die Wahrscheinlichkeitserzeugende Funktion $\varphi(t)$ ein rekursiver Ausdruck für $P_{sig}(n{>}0,\tau)$ angegeben werden kann, wobei die Wahrscheinlichkeit $P_{sig}(n{=}0,\tau)$ durch das $s$-fache Produkt der $l$ verschiedenen Speziessignalverteilungen $P_{sig}^{l}(n=0,\tau)$ berechnet werden kann. Somit kann $P_{sig}(n,\tau)$ in dem vorliegenden Ausführungsbeispiel für ein System mit $s$ verschiedenen Spezies angegeben werden über:

$$P_{sig}(n,\tau)=\begin{cases} e^{-(\sum_{l=1}^{s}\omega_l(\tau))} & \text{für } n=0 \\ \frac{1}{n}\sum_{v=1}^{n} vP_{sig}(n-v,\tau)\left(\sum_{l=1}^{s}\omega_l(\tau)P_{1,l}(v,\tau)\right) & \text{für } n>0 \end{cases}$$

, wobei $P_{1,l}(v,\tau)$ die Wahrscheinlichkeit angibt, mit der von einem einzigen Teilchen der Spezies / in der Binzeit $\tau$ $v$ Emissionen detektiert werden. Beispielhaft kann für ein System mit zwei verschiedenen Spezies ($s$=2) angegeben werden:

$$P_{sig}(0,\tau)=e^{-(\omega_1(\tau)+\omega_2(\tau))}$$

$$P_{sig}(1,\tau)=e^{-(\omega_1(\tau)+\omega_2(\tau))}(\omega_1(\tau)P_{1,1}(1,\tau)+\omega_2(\tau)P_{1,2}(1,\tau)),$$ wobei $\omega_1(\tau)$ bzw. $\omega_2(\tau)$ die mittlere Besetzungsanzahl für die Spezies 1 bzw. 2 angibt, und wobei $P_{1,1}$ bzw. $P_{1,2}$ die Wahrscheinlichkeitsverteilung für die Anzahl der Emissionen in der Binzeit $\tau$ für ein Teilchen der Spezies 1 bzw. der Spezies 2 darstellen.

In einer weiteren Ausführungsform kann die Rauschsignalverteilung berücksichtigt werden über eine Faltung der Rauschsignalverteilung mit der wie oben erläuterten Signalverteilung $P_{sig}$ des Systems mit $s$ verschiedenen Spezies. Unter Annahme eines poissonischen Rauschens, das häufig zutrifft und deshalb herkömmlicherweise oft bei der Näherung eines Rauschverhaltens angenommen wird, wobei die Rauschsignalverteilung über $P_{noise}(n)=\frac{\lambda^n}{n!}e^{-\lambda}$ gilt, kann gemäß diesem Ausführungsbeispiel für ein System mit $s$ verschiedenen Spezies unter Berücksichtigung der Rauschsignalverteilung ebenfalls ein rekursiver Ausdruck für die Signalverteilung $P_{sig}(n,\tau)$ formuliert werden über:

$$P_{sig}(n,\tau)=\begin{cases} e^{-\left(\sum_{l=1}^{s}\omega_l(\tau)+\lambda\right)} & \text{für } n=0 \\ \frac{\lambda}{n}P_{sig}(n-1,\tau)+\frac{1}{n}\sum_{v=1}^{n} vP_{sig}(n-v,\tau)\sum_{l=1}^{s}\omega_l(\tau)P_{1,l}(v,\tau) & \text{für } n>0 \end{cases}$$

Über diese Rekursionsformel für $P_{sig}(n,\tau)$ für die theoretische Signalverteilung für ein System mit $s$ verschiedenen Spezies unter Berücksichtigung der Rauschsignalverteilung $P_{noise}(n,\tau)$ unter der Annahme eines poissonischen Rauschens können die Momente $m_i^{sig}(\tau)$ analog zu der oben geschilderten Berechnung betreffend ein System mit nur einer Spezies $j$ ermittelt werden. Über die Anwendung der genannten üblichen Rechentechniken können die Momente $m_i^{sig}$ angegeben werden als:

$$m_i^{sig} = \sum_{n=0}^{\infty} n^i P_{sig}(n,\tau) = \sum_{v=1}^{i} \binom{i-1}{v-1} m_{i-v}^{sig} \left( \lambda + \sum_{l=1}^{s} \omega_l(\tau) m_{v,l}^{1} \right).$$

Wie auch in dem obengenannten Beispiel betreffend ein System mit nur einer Teilchenspezies *j* kann auch für das System mit *s* verschiedenen Teilchenspezies die theoretische Signalfunktion über $Q_{sig} = \frac{\sigma_{sig}^2 - \overline{n}_{sig}}{\overline{n}_{sig}}$ angegeben werden, woraus sich bei dem Einsetzen der entsprechenden Größen, wie oben dargelegt, ergibt:

$$Q_{sig} = \frac{\sum_{l=1}^{s} \overline{\mu}_{1,l} c_l \phi_{1,l}(\tau)}{\lambda + \sum_{l=1}^{s} \overline{\mu}_{1,l} c_l}.$$

Diese theoretische Signalfunktion kann somit zur Charakterisierung eines Systems mit *s* verschiedenen Teilchenspezies unmittelbar zum numerischen Abgleich mit einer entsprechenden Messwertfunktion herangezogen werden. Wie erläutert liegt diesem Ausführungsbeispiel die Annahme zugrunde, dass sich das Rauschen der Messapparatur als poissonisches Rauschen darstellen lässt mit der Rate $\lambda$. In einem Ausführungsbeispiel der Erfindung kann das poissonische Rauschen vernachlässigt werden, indem $\lambda$=0 gesetzt wird. Ein solches Ausführungsbeispiel kann insbesondere dann sehr gut angenäherte Ergebnisse für die zu bestimmenden Konstanten liefern, wenn das Signal-Rauschverhältnis groß ist.

In einer besonders vorteilhaften Ausführungsform wird die Messwertfunktion auf den Ausdruck $\frac{\sigma(\tau)^2 - \overline{n}(\tau)}{\overline{n}(\tau)}$ festgelegt, wobei der numerische Abgleich über die Relation $Q(\tau) = \frac{\sigma(\tau)^2 - \overline{n}(\tau)}{\overline{n}(\tau)} = \frac{m_2^{sig}(\tau) - [m_1^{sig}(\tau)]^2 - m_1^{sig}(\tau)}{m_1^{sig}(\tau)}$ durchgeführt wird, wobei $\sigma^2(\tau)$ die Varianz und $\overline{n}(\tau)$ der Mittelwert der zur Binzeit $\tau$ gemessenen Anzahl an detektierten Emissionen darstellt. Es hat sich herausgestellt, dass sich dadurch besonders einfach und besonders genau die zu ermittelnden Konstanten zur Charakterisierung der Teilchen in dem System bzw. zur Charakterisierung des Systems errechnet werden können. Die Ermittlung der entsprechenden Konstanten über die Vermessung eines Systems mit Emittenden emittierenden Teilchen und die Auswertung der Messergebnisse wird im Folgenden anhand mehrerer Ausführungsbeispiele des erfindungsgemäßen Verfahrens dargestellt.

Bei den beschriebenen Ausführungsbeispielen wird die Messung zur Detektion der Emissionen der Teilchen in dem zu beobachtenden System mittels einer wie in Figur 3 dargestellten Messapparatur durchgeführt. Bei der beschriebenen Ausführungsform handelt es sich um die Quantifizierung und Charakterisierung von Teilchen in dem System, die Photonen als Emittenden emittieren. Zur Durchführung der Messung wird dabei eine Lichtquelle 2 zur Anregung der Teilchen in dem System benötigt. Die Teilchen emittieren nach ihrer Anregung Photonen, wobei die Emissionsereignisse statistisch verteilt sind. Dabei handelt es sich vorliegend um eine Messapparatur zur 1-PhotonenAnregung.

Bei der Messapparatur wird als Lichtquelle 2 ein Laser verwendet. Das von der Lichtquelle 2 emittierte Licht wird über eine Beleuchtungsoptik 3 gebündelt, über einen Anregungsfilter 4 gefiltert und über einen dichroitischen Spiegel 5 zu einem Objektiv 6 umgelenkt, wobei das Objektiv 6 das von der Lichtquelle 2 emittierte Licht in die Probenebene 100 bündelt. Die Probe 1 mit dem zu analysierenden System befindet sich dergestalt in dem Fokus des Objektivs 6 der Messapparatur, dass das von der Lichtquelle 2 emittierte Licht in der Probe 1 mit dem System auf sein in der Messapparatur kleinstes Volumen gebündelt ist. In dem dargestellten Ausführungsbeispiel beträgt das Volumen, auf das das von der Lichtquelle 2 emittierte Licht in der Probe 1 gebündelt ist, 0,5 fl.

Durch das Licht der Lichtquelle 2 werden die Teilchen in der Probe 1 zur Emission von Photonen angeregt. Die von den Teilchen in der Probe 1 emittierten Photonen werden von dem Objektiv 6 gebündelt und gelangen durch den dichroitischen Spiegel 5 und einen Emissionsfilter 7, der Laserlicht aus dem Strahlengang herausfiltert, zur Tubuslinse 8. Die Tubuslinse 8 bündelt den durch die emittierten Photonen gebildeten Lichtstrahl, der durch ein extrem kleines Pinhole 9 zur Detektionseinheit 10 gelangt. Die beschriebene Messapparatur ist so ausgebildet, dass sie die Detektion einzelner, von den Teilchen in der Probe 1 emittierter Photonen ermöglicht. Die an die Detektionseinheit 10 angeschlossene Daten-Sampling-Einheit 11 gewährleistet eine zeitaufgelöste Detektion. Dies bedeutet, dass mittels der Daten-Sampling-Einheit 11 aufgenommen wird, zu welchem Zeitpunkt Photonen in der Detektionseinheit jeweils detektiert wurden. Ein Rechner 12 ermöglicht dann die Auswertung der über die Daten-Sampling-Einheit 11 über die Zeit skaliert erfassten Detektionen von Photonen.

Die Detektionseinheit 10 umfasst ein Zählwerk, das zur Detektion einzelner Photonen geeignet ist. In dem beschriebenen Ausführungsbeispiel werden hierfür Avalanche-Photodioden eingesetzt. Bei Detektion eines Photons wird von der Detektionseinheit 10 ein Ausgangsimpuls an die Daten-Sampling-Einheit 11 ausgegeben, der dort mit einem Zeitstempel versehen wird und auf einem Datenträger in dem Rechner 12 gespeichert wird. In dem beschriebenen Ausführungsbeispiel umfasst die Daten-Sampling-Einheit eine FPGA-Karte, die die zeitaufgelöste Speicherung der Photonendetektionen ermöglicht.

In dem beschriebenen Ausführungsbeispiel wird die Messung während eines Messzeitraums T durchgeführt. In dem Rechner 12 werden die detektierten Emissionen über den gesamten Messzeitraum T zeitaufgelöst gespeichert. Danach werden zur Auswertung verschiedene Intervallbreiten *r* festgelegt. Für jede Binzeit $\tau$ wird der Messzeitraum T in $A = \frac{T}{\tau}$ mit $A \in |N$ eingeteilt. Für jede Binzeit $\tau$ wird für jedes der A Zeitintervalle die Anzahl *n* der in dem Zeitintervall detektierten Photonen ermittelt. Aus der Anzahl der Intervalle *a*(*n*), die *n* Photonen enthalten, werden die relativen Häufigkeiten $p_\tau(n,\tau) = \frac{a(n)}{A}$ für jede Binzeit *r* als Funktion von *n* bestimmt. Diese relativen Häufigkeiten können bei Annahme eines hinreichend großen *A* als Wahrscheinlichkeiten interpretiert werden, *n* Photonen innerhalb der Binzeit $\tau$ zu detektieren. Aus diesen $p_\tau(n)$ können dann die Momente $m_i^{Mess}(\tau)$ ermittelt werden. In dem Ausführungsbeispiel geschieht dies über: $m_i^{Mess}(\tau) = \sum_n n^i p_\tau(n)$ .

In dem beschriebenen Ausführungsbeispiel wird als Messwertfunktion die Funktion

$$\mu(\tau) = \frac{Q(\tau)}{\tau} = \frac{m_2^{Mess}(\tau) - [m_1^{Mess}(\tau)]^2 - m_1^{Mess}(\tau)}{m_1^{Mess}(\tau)} \frac{1}{\tau} .$$

Der numerische Abgleich erfolgt in dem dargestellten Ausführungsbeispiel über die Relation

$$\mu(\tau) = \frac{Q(\tau)}{\tau} = \frac{m_2^{sig}(\tau) - [m_1^{sig}(\tau)]^2 - m_1^{sig}(\tau)}{m_1^{sig}(\tau)} \frac{1}{\tau} .$$

Somit erfolgt der numerische Abgleich über eine theoretische Signalfunktion und eine Messwertfunktion, die jeweils entsprechend dieselben Momente mit jeweils derselben funktionalen Relation zueinander umfassen. In den Figuren 4 und 5 ist die Anwendung des erfindungsgemäßen Verfahrens auf die Analyse eines Systems dargestellt, in dem die Teilchen einem fluidischen Massentransport unterliegen. In Figur 4 sind die Ergebnisse von Messung und Auswertung zu einem System dargestellt, in dem sich nur Teilchen einer Spezies befinden. In Figur 4 sind Messpunkte von zwei verschiedenen Messungen dargestellt. Bei beiden Messungen war die chemische Zusammensetzung des Systems jeweils identisch. Die beiden Messungen unterscheiden sich in der Geschwindigkeit des fluidischen Massentransports, dem die Teilchen in dem System während der Messung unterlagen. In Figur 4 sind die durch die Messung ermittelten Messwerte von $\mu(\tau)$ als Messpunkte eingezeichnet. Die Messpunkte mit quadratischer Form resultieren aus der ersten Messung, während der eine fluidische Transportgeschwindigkeit $v_1$ in dem System vorherrschte. Die Messpunkte mit Kreisform resultieren aus einer zweiten Messung, während der eine fluidische Transportgeschwindigkeit $v_2$ in dem System vorherrschte. Über die jeweiligen Messwerte der ersten Messung bzw. der zweiten Messung werden die Funktionen $\mu(\tau)$ für die erste bzw. für die zweite Messung gebildet. Die durchgezogenen Linien in Figur 4 stellen die theoretische Signalfunktionen dar, nachdem über den numerischen Abgleich zwischen der genannten Relation die Konstanten der theoretischen Signalfunktion bestimmt wurden. Aus Figur 4 ist deutlich erkennbar, dass der Verlauf der theoretischen Signalfunktion sehr gut mit dem Verlauf der Messwerte für $\mu(\tau)$ übereinstimmt.

Die Kostanten der theoretischen Signalfunktion wurden in dem dargestellten Ausführungsbeispiel des erfindungsgemäßen Verfahrens über einen numerischen Abgleich ermittelt, dem folgende Überlegung zugrunde liegt: Für die lokale Detektionsrate $\mu_j(\vec{r})$ der in dem System enthaltenen Spezies *j* wurde eine Ortsabhängigkeit angenommen gemäß einer zentralsymmetrischen Gaußfunktion über:

$$\mu_j(\vec{r}) = \mu_{0,j} e^{-\frac{2}{a^2}\vec{r}^2} .$$

Daraus ergibt sich für $\overline{\mu}_{1,j} : \quad \overline{\mu}_{1,j} = \int_R d^3 r \mu(\vec{r}) = \left(\frac{\pi}{2}\right)^{\frac{3}{2}} a^3 \mu_{0,j}$ . Bei der Einführung der oben beschriebenen mittleren Photonenanzahl $\phi_{1,j}(\tau)$ eines einzelnen Teilchens ergibt sich für $\phi_{1,j}(\tau)$ im Falle des vorliegenden deterministischen, fluidischen Transports:

$$\phi_{1,j}(\tau) = \frac{1}{\overline{\mu}_{1,j}} \left[ \int_R d^3 r_0 \left( \int_0^\tau dt \int_R d^3 r \mu_j(\vec{r}) \delta(\vec{r} - \vec{r}\,') \right)^2 \right] = \frac{1}{\overline{\mu}_{1,j}} \left[ \int_R d^3 r_0 \left( \int_0^\tau dt \mu_{0,j} e^{-\frac{2}{a^2}(x_0^2 + y_0^2)} e^{-\frac{2}{a^2}(z_0 + v_z t)^2} \right) \right]$$

$$= \frac{1}{\overline{\mu}_{1,j}} \left[ \int_R d^3 r_0 \left( \frac{\sqrt{\pi}}{2\sqrt{2}} \frac{a\mu_{0,j}}{v} \exp\left[ -\frac{2}{a^2}(x_0^2 + y_0^2) \right] \left( erf\left[ \frac{\sqrt{2}}{a}(z_0 + v\tau) \right] - erf\left[ \frac{\sqrt{2}}{a} z_0 \right] \right) \right)^2 \right]$$

$$= \frac{1}{\overline{\mu}_{1,j}} \left[ \int_{-\infty}^{+\infty} dz_0 \frac{\pi^2}{32} \frac{a^4 \mu_{0,j}^2}{v^2} \left( erf\left[ \frac{\sqrt{2}}{a}(z_0 + v\tau) \right] - erf\left[ \frac{\sqrt{2}}{a} z_0 \right] \right)^2 \right]$$

$$= \frac{\sqrt{\pi}}{2\sqrt{2}} \frac{\mu_{0,j}}{2a} \frac{\vartheta_i^2}{\tau} \int_{-\infty}^{+\infty} dz_0 \left( erf\left[ \frac{1}{\vartheta_i} \left( \frac{z_0}{v} + \tau \right) \right] - erf\left[ \frac{z_0}{v\vartheta_i} \right] \right)^2 .$$

Dabei wurde angenommen, dass sich das betrachtete Teilchen der Spezies *j* in dem System zum Zeitpunkt $t = t_0$ am Ort $\vec{r} = \vec{r}_0$ befindet, so dass die Aufenthaltswahrscheinlichkeit für das Teilchen mit der Diracschen-Delta-Funktion $\delta(\vec{r} - \vec{r}_0)$ angegeben werden konnte. Zudem wurde die Zerfallszeit $\vartheta_j$ mit $\vartheta_j = \frac{a}{\sqrt{2}} v$ eingeführt. Außerdem wurde angenommen, dass der fluidische Fluss in *z* Richtung erfolgt, so dass ein Transport der Teilchen nur in *z* Richtung angenommen wird. Während das Integral über den unbegrenzten Raum über $x_0$ und $y_0$ ausgeführt werden konnte, ist das Integral über $z_0$ analytisch nicht ausführbar. Dies wird in dem gezeigten Ausführungsbeispiel über eine numerische Rechnung bei dem numerischen Abgleich direkt durchgeführt. Beruhend auf den genannten Annahmen und Umformungen wird in dem dargestellten erfindungsgemäßen Ausführungsbeispiel der numerische Abgleich über die Relation

$$\mu(\tau) = \frac{\phi_{1,j}(\tau)}{\tau} = \frac{\sqrt{\pi}}{2\sqrt{2}} \frac{\mu_{0,j}}{2a} \left( \frac{\vartheta_j}{\tau} \right)^2 \int_{-\infty}^{+\infty} dz_0 \left( erf\left[ \frac{1}{\vartheta_j} \left( \frac{z_0}{v} + \tau \right) \right] - erf\left[ \frac{z_0}{v\vartheta_j} \right] \right)^2$$

durchgeführt.

Aus der bei dem vorliegenden Ausführungsbeispiel verwendeten theoretischen Signalfunktion ist erkennbar, dass in der theoretischen Signalfunktion bei Anwendung des erfindungsgemäßen Verfahrens auf ein System mit nur einer emittierenden Spezies *j* die Konzentration $c_j$ der Spezies in dem System nicht als Konstante enthalten ist. Die einzigen Konstanten, die bei dem numerischen Abgleich zu ermitteln sind, sind $\mu_0$, $v$ und $a$, wobei $\vartheta_j$ wie oben ausgeführt in Abhängigkeit von $a$ und $v$ ausgedrückt werden kann.

Der numerische Abgleich kann durch eine Grenzwertbetrachtung vereinfacht werden. Bei der Grenzwertbetrachten $\lim\limits_{\tau \to 0}$ ergibt sich:

$$\lim_{\tau\to 0}\mu(\tau)=\lim_{\tau\to 0}\frac{\sqrt{\pi}}{2\sqrt{2}}\frac{\mu_{0,j}}{2a}\left(\frac{\vartheta_j}{\tau}\right)^2\int_{-\infty}^{+\infty}dz_0\left(erf\left[\frac{1}{\vartheta_j}\left(\frac{z_0}{v}+\tau\right)\right]-erf\left[\frac{z_0}{v\vartheta_j}\right]\right)^2$$

$$=\frac{\sqrt{\pi}}{2\sqrt{2}}\frac{\mu_{0,j}}{2a}v\vartheta_j\int_{-\infty}^{+\infty}dz\lim_{h\to 0}\left(\frac{erf[z+h]-erf[z]}{h}\right)^2=\frac{\mu_{0,j}}{2\sqrt{2}}.$$

Über die beschriebene Limes-Betrachtung und den beschriebenen numerischen Abgleich kann aus Figur 4 mit Hilfe der genannten Relation zwischen der Messwertfunktion $\mu(\tau)$ und der genannten theoretischen Signalfunktion $\mu_{0,j}$, $a$, $v_1$ und $v_2$ mit folgenden Werten ermittelt werden:

$\mu_{0,j}$ = 50 *kcps* (kilo counts per second)

$a = 1*10^{-6}$ *m*

$v_1$ = 0,042 $^m/_s$

$$v_2 = 0{,}021\ {}^{m}\!/_{s}\,.$$

Aus Figur 4 ist ersichtlich, dass die Messwertfunktion für beide Messungen zu demselben Grenzwert $\lim\limits_{\tau\to 0}\mu(\tau)$ verlaufen. Dies ergibt sich aus dem obengenannten daraus, dass der Grenzwert von der Geschwindigkeit des fluidischen Massentransports der Teilchen in dem System während der Messung unabhängig ist. Die Durchführung des erfindungsgemäßen Verfahrens anhand von Systemen, die mit vorbekannten Parametern, insbesondere einer vorbekannten Geschwindigkeit und einer vorbekannten Detektionsrate der Teilchen vorbereitet wurden, hat gezeigt, dass das erfindungsgemäße Verfahren mit verhältnismäßig geringem Rechenaufwand sehr präzise Angaben zur Charakterisierung der Teilchen (in Bezug auf $\mu_{0,j}$) und in Bezug auf das zeitabhängige Verhalten der Teilchen in dem System ($v$, $\vartheta_j$) liefert.

Insbesondere ist aus Figur 4 erkennbar, dass die theoretische Signalfunktion sehr gut mit der Messwertfunktion übereinstimmt.

Das erfindungsgemäße Verfahren kann wie in dem vorangegangenen Ausführungsbeispiel zum fluidischen Massentransport in einem System mit nur einer emittierenden Teilchenspezies *j* analog auf ein System mit Teilchen verschiedener Spezies angewandt werden, wie in Figur 5 dargestellt. In Figur 5 sind analog zu Figur 4 Messwerte aus fünf verschiedenen Messungen sowie die über den numerischen Abgleich modellierten theoretischen Signalfunktionen zu den entsprechenden fünf verschiedenen Messungen graphisch dargestellt. Wie in Figur 4, so ist auch in Figur 5 die Detektionsrate $\mu(\tau)$ als Messwertfunktion über einzelne Messpunkte der jeweiligen Messungen dargestellt. Bei den Messungen unterlagen die Teilchen jeweils derselben Geschwindigkeit des fluidischen Transports. Bei sämtlichen Messungen enthält das analysierte System Teilchen von eine oder zwei von zwei für sämtliche Messungen festgelegten Spezies. Zwischen den jeweiligen Messungen unterscheidet sich das System in der Zusammensetzung bzw. in den Konzentrationen der Teilchenspezies. Jede der Teilchenspezies weist eine unterschiedliche charakteristische Detektionshelligkeit $\mu_{0,j}$ auf. Analog zu dem in Figur 4 dargestellten Ausführungsbeispiel wurde die theoretische Signalverteilung zum numerischen Abgleich gemäß Figur 5 gebildet durch die Funktion $\frac{m_2^{sig}(\tau)-\left[m_1^{sig}(\tau)\right]^2-m_1^{sig}(\tau)}{m_1^{sig}(\tau)}$, wobei, wie oben ausgeführt, über die Vernachlässigung des Rauschens diese Funktion in dem Ausführungsbeispiel definiert wurde als $\frac{\sum_{j=1}^{2}\overline{\mu}_{1,j}c_j\phi_{1,j}(\tau)}{\sum_{j=1}^{2}\overline{\mu}_{1,j}c_j}$, mit den Teilchenspezies 1 und 2. Die Berechnung bzw. die Ausführung dieser Gleichung wird mathematisch wie oben zu dem Ausführungsbeispiel gemäß Figur 4 durchgeführt. Dabei wird für den numerischen Abgleich $\mu(\tau)=\frac{1}{\tau}\frac{\sum_{j=1}^{2}\overline{\mu}_{1,j}c_j\phi_{1,j}}{\sum_{j=1}^{2}\overline{\mu}_{1,j}c_j}$ angesetzt: mit

$$\phi_{1,j}=\frac{1}{\overline{\mu}_{1,j}}\left[\int_{-\infty}^{+\infty}dz_0\frac{\pi^2}{32}\frac{a^4\mu_{0,j}^2}{v^2}\left(erf\left[\frac{\sqrt{2}}{a}(z_0+v\tau)\right]-erf\left[\frac{\sqrt{2}}{a}z_0\right]\right)^2\right].$$

Über den numerischen Abgleich lassen sich die Konstanten $\mu_{0,1}$, $\mu_{0,2}$, $v$ und $a$ (und hierüber $\vartheta_1=\vartheta_2=\frac{a}{\sqrt{2}}v$) wie folgt bestimmen:

Für sämtliche Messungen wurde $\mu_{0,1}$ = 1*10^4 *kcps*, $\mu_{0,2}$ = 3*10^4*kcps*, $a$ = 1*10^-6 *m* und $v$ = 0,42 $^m/_s$ ermittelt. Weiter wurde ermittelt:

erste Messung: $c_1$ = 5*10^-10 *M*; $c_2$ = 0

zweite Messung: $c_2$ = 5*10^-10 *M*; $c_1$ = 0

dritte Messung: $c_1$ = 5*10^-10 *M*; $c_2$ = 1,0*10^-9 *M*

vierte Messung: $c_1$ = 5*10^-10 *M*; $c_2$ = 5*10^-10 *M*

fünfte Messung: $c_1$ = 5*10^10 *M*; $c_2$ = 2,5*10^-10 *M*.

In den Figuren 6 bis 9 werden Anwendungen des erfindungsgemäßen Verfahrens anhand weiterer Ausführungsbeispiele für die Anwendung auf Systeme beschrieben, bei denen die Teilchen in dem System einem Diffusionstransport unterliegen. Beispielhaft wird bei den gezeigten Ausführungsbeispielen jeweils von denselben oben demonstrierten mathematischen Umformungen und Definitionen ausgegangen. Selbstverständlich kann ein entsprechender numerischer Abgleich zwischen Messwertfunktion und Signalfunktion auch über andere mathematische Wege erfolgen.

Wie bei den Beispielen zu Figur 4 und Figur 5 ist auch zu den Beispielen gemäß den Figuren 6 bis 9 die lokale Aufenthaltswahrscheinlichkeit $\psi(\vec{r},t|\vec{r}_0,t_0)$ zu ermitteln. Im Fall des fluidischen Transports bei Figuren 4 und 5 wurde diese Wahrscheinlichkeitsverteilung mit der Diracschen Deltafunktion angenähert. Diese Annäherung ist für den Fall eines Diffusionstransports nicht anwendbar. Stattdessen wird in dem gezeigten Ausführungsbeispiel die Aufenthaltswahrscheinlichkeit $\psi(\vec{r},t|\vec{r}_0,t_0)$ definiert durch: $\frac{\partial}{\partial t}\psi(\vec{r},t|\vec{r}_0,t_0)=D\Delta\psi(\vec{r},t|\vec{r}_0t_0)$. Bekanntermaßen stellt diese Gleichung die Einstein-Diffusionsgleichung dar. Weiterhin ist bekanntermaßen die Greensche Funktion $\psi(\vec{r},t|\vec{r}_0,t_0)=(4\pi D(t-t_0))^{-\frac{3}{2}}\exp\left[-\frac{(\vec{r}-\vec{r}_0)^2}{4D(t-t_0)}\right]$ eine Lösung dieser Gleichung mit den Anfangs- und Rand-

bedingungen $\psi(\vec{r},t \to t_0|\vec{r}_0,t_0) = \delta(\vec{r} - \vec{r}_0)$, $\psi(|\vec{r}| \to \infty, t|\vec{r}_0,t_0) = 0$. Somit wird dieser Ausdruck für die lokale Aufenthaltswahrscheinlichkeit $\psi(\vec{r},t|\vec{r}_0,t_0)$ für die Spezies $j$ angenommen.

In einem graphisch nicht dargestellten Ausführungsbeispiel kann von einer sphärischen Messsymmetrie, d. h. von einer sphärischen Symmetrie der räumlichen Detektionsratenabhängigkeit im Messvolumen ausgegangen werden. Bei dem Ausführungsbeispiel wird ein System mit nur einer emittierenden Spezies $j$, die Photonen emittiert, analysiert. Dabei wird eine Ortsabhängigkeit der Detektionsrate $\mu(\vec{r})$ wie in dem in Figur 4 und 5 beschriebenen Ausführungsbeispiel angenommen mit $\mu(\vec{r}) = \mu_{0,j} e^{-\frac{2}{a^2}\vec{r}^2}$. Über die lokale Aufenthaltswahrscheinlichkeit $\psi_j(\vec{r},t|\vec{r}_0,t_0)$ kann somit analog die Funktion $\phi_{1,j}(\tau)$ angegeben werden mit:

$$\phi_{1,j}(\tau) = \frac{1}{\int_R d^3 r \mu_j(\vec{r})} \left[ \int_0^\tau dt \int_R d^3 r_0 \left( \int_R d^3 r \mu_j(\vec{r}) \psi_j(\vec{r},t|\vec{r}_0,t_0) \right)^2 \right]$$

$$= \frac{1}{(\frac{\pi}{2})^{\frac{3}{2}} a^3 \mu_{0,j}} \left[ \int_0^\tau dt \int_R d^3 r_0 \left( \mu_{0,j} \beta(t)^3 e \exp\left[ -2 \frac{\beta(t)^2}{a} \vec{r}_0^{\,2} \right] \right)^2 \right] = \frac{\mu_0}{\sqrt{2}} \vartheta_j \left( 1 - \frac{1}{\sqrt{1 + \frac{\tau}{\vartheta_j}}} \right),$$

woraus sich über $\mu(\tau) = \frac{\phi_{1,j}(\tau)}{\tau}$ der numerische Abgleich durchführen lässt.

Dabei wurde zur mathematischen Umformung $\beta(t)$ eingeführt mit $\beta(t) = \frac{1}{\sqrt{\frac{t}{\vartheta_j} + 1}}$ und $\vartheta_j = \frac{a^2}{8D}$. Über entsprechende Grenzwertbetrachtung lässt sich wieder bilden:

$$\lim_{\tau \to 0} \mu(\tau) = \frac{\mu_{0,j}}{2\sqrt{2}}$$

und

$$\lim_{\tau \to 0} \phi_{1,j}(\tau) = 0$$

und

$$\lim_{\tau \to \infty} \mu(\tau) = 0$$

und

$$\lim_{\tau \to \infty} \phi_{1,j}(\tau) = \frac{\mu_{0,j}}{\sqrt{2}} \vartheta_j .$$

Bei der Anwendung des Verfahrens in den Ausführungsform gemäß den Figuren 6 bis 9 wird eine rotationsellipsoidische Symmetrie der räumlichen Detektionsratenabhängigkeit im Messvolumen vorausgesetzt. Entsprechend muss eine andere Ortsabhängigkeit bei der lokalen Detektionsrate $u_j(\vec{r})$ zugrunde gelegt werden. In dem beschriebenen Ausführungsbeispiel, bei dem ein System mittels einer 1-Photonenanregung angeregt wird, kann hierfür die Ortsabhängigkeit über eine Gaußfunktion nach $\mu_j(\vec{r}) = \mu_{0,j}\exp\left(-\frac{2}{a_{xy}^2}\left(x^2+y^2\right)\right)\exp\left(-\frac{2}{a_z^2}z^2\right)$ berücksichtigt werden. Zur Bestimmung von $\phi_{1,j}(\tau)$ lässt sich mit dieser Annahme bestimmen:

$$\int_R d^3r\mu_j(\vec{r})\psi_j(\vec{r},t|\vec{r}_0,t_0=0) = \frac{\mu_{0,j}}{\left(1+\frac{t}{\vartheta_{xy}}\right)\sqrt{1+\frac{t}{\vartheta_z}}}\exp\left(-\frac{2}{a_{xy}^2}\frac{x_0^2+y_0^2}{\left(1+\frac{t}{\vartheta_{xy}}\right)}\right)\exp\left(-\frac{2}{a_z^2}\frac{z_0^2}{\left(1+\frac{t}{\vartheta_z}\right)}\right)$$

mit den charakteristischen Zerfallszeiten $\vartheta_{xy} = \frac{a_{xy}^2}{8D}$ und

$$\vartheta_z = \frac{a_z^2}{8D}.$$

Ferner kann $\overline{\mu}_{1,j}$ angegeben werden mit:

$$\overline{\mu}_{1,j} = \int_R d^3r\mu_j(\vec{r}) = \left(\frac{\pi}{2}\right)^{\frac{3}{2}}\mu_{0,j}a_{xy}^2a_z.$$

Daraus ergibt sich durch Einsetzen:

$$\phi_{1,j}(\tau) = \int_0^\tau \frac{\mu_{0,j}}{2^{\frac{3}{2}}}\frac{1}{\left(1+\frac{t}{\vartheta_{xy}}\right)\sqrt{1+\frac{t}{\vartheta_z}}} = \frac{\mu_0}{2^{\frac{3}{2}}}\int_0^\tau dt\frac{\vartheta_{xy}}{\left(\vartheta_{xy}-\vartheta_z+\vartheta_z+t\right)}\frac{\sqrt{\vartheta_z}}{\sqrt{\vartheta_z+t}}.$$

Für die weiteren Schritte zur Ermittlung von $\phi_{1,j}(\tau)$ ist eine Fallunterscheidung durchzuführen.

Für den $\vartheta_{xy} > \vartheta_z$ ergibt sich durch rein mathematische Umformung:

$$\phi_{1,j}(\tau) = \frac{\mu_{0,j}}{2^{\frac{3}{2}}}\frac{\sqrt{\vartheta_z}}{\sqrt{\vartheta_{xy}-\vartheta_z}}2\vartheta_{xy}\left(\arctan\left[\sqrt{\frac{\vartheta_z}{\vartheta_{xy}-\vartheta_z}}\sqrt{1+\frac{\tau}{\vartheta_z}}\right]-\arctan\left[\sqrt{\frac{\vartheta_z}{\vartheta_{xy}-\vartheta_z}}\right]\right).$$

Für den Fall $\vartheta_z > \vartheta_{xy}$ ergibt sich durch rein mathematische Umformung:

$$\phi_{1,j}(\tau) = \frac{\mu_{0,j}}{2^{\frac{3}{2}}} \frac{\gamma^2 - 1}{\gamma} \vartheta_z \left( \ln\left(\frac{\gamma+1}{\gamma-1}\right) - \ln\left( \frac{\gamma\sqrt{1+\frac{\tau}{\vartheta_z}}+1}{\gamma\sqrt{1+\frac{\tau}{\vartheta_z}}-1} \right) \right),$$

wobei $\gamma = \sqrt{\frac{\vartheta_z}{\vartheta_z - \vartheta_{xy}}}$ gilt,

wobei $\gamma$ einen Geräteparameter beschreibt.

Bei dem genannten Ausführungsbeispiel betreffend die Anwendung des erfindungsgemäßen Verfahrens auf ein System mit der Spezies *j*, in dem die Teilchen der Spezies *j* einem Diffusionstransport unterliegen, wird jeweils der numerische Abgleich über die Relation $\mu(\tau) = \frac{\phi_{1,j}(\tau)}{\tau}$ durchgeführt, wobei $\mu(\tau)$ die Messwertfunktion darstellt und $\frac{\phi_{1,j}(\tau)}{\tau}$ die theoretische Signalfunktion darstellt.

Bei den beschriebenen Ausführungsbeispielen wird jeweils das Rauschverhalten der Messapparatur vernachlässigt, damit der numerische Abgleich leichter erfolgen kann. Bei der Durchführung des erfindungsgemäßen Verfahrens bietet sich dabei ein Vorgehen wie in den Ausführungsbeispielen gemäß den Figuren 6 bis 9 dargestellt an.

In Figur 6a ist die Messwertfunktion $\mu(\tau)$, die sich wie oben beschrieben aus den gemessenen Daten ergibt, über einzelne Messpunkte dargestellt. Aus Figur 6a ist erkennbar, dass die Messwertfunktion $\mu(\tau)$ für kleine r stark ansteigt. Dieser anomale Verlauf von $\mu(\tau)$ beruht auf dem Verhalten der Detektionseinheit 10, wie etwa dem Rauschen oder der Totzeit des Detektors. Um diesen Effekt zu korrigieren, muss die Messwertfunktion des Detektorrauschens alleine ermittelt werden und anschließend von der Messwertfunktion $\mu(\tau)$ der gemessenen Daten gemäß Figur 6a abgezogen werden. In Figur 6b ist die Messwertfunktion $\mu(\tau)$ von dem Detektorrauschen bereinigt dargestellt. Bei dem zu Figur 6 bis 10 beschriebenen Verfahren wird somit als Zwischenschritt vor der numerischen Abgleich das Detektorrauschen experimentell ermittelt und von der gemessenen Messwertfunktion $\mu(\tau)$ abgezogen, wodurch eine bereinigte Messwertfunktion $\mu(\tau)$ erzeugt wird. Diese bereinigte Messwertfunktion $\mu(\tau)$ dient dann dem numerischen Abgleich mit der theoretischen Signalfunktion, die wie oben beschrieben für die Anwendung des Verfahrens auf ein System, in dem die Teilchen einem Diffusionstransport unterliegen, angewendet. Allgemein wird in einer erfindungsgemäßen Ausführungsform die Messwertfunktion durch Abzug des Rauschens der Messapparatur bereinigt. Dadurch kann das Rauschen der Messapparatur bei der Definition der theoretischen Signalfunktion vernachlässigt werden, wobei gleichzeitig präzise Ergebnisse über den numerischen Abgleich und ein einfacher numerischer Abgleich dank einer einfachen Formulierung der theoretischen Signalfunktion möglich ist.

In Figur 6c ist die theoretische Signalfunktion abgebildet, nachdem die Konstanten der theoretischen Signalfunktion ermittelt wurden. Die Konstanten wurden durch numerischen Abgleich ermittelt, wobei bei dem Ausführungsbeispiel gemäß Figur 6 und Figur 7 eine rotationsellipsoidische Symmetrie angenommen wird und der numerische Abgleich über die Relation:

$$\mu(\tau) = \frac{\mu_{0,j}}{2^{\frac{3}{2}}} \frac{\gamma^2 - 1}{\gamma} \frac{\vartheta_z}{\tau} \left( \ln\left(\frac{\gamma+1}{\gamma-1}\right) - \ln\left( \frac{\gamma\sqrt{1+\frac{\tau}{\vartheta_z}}+1}{\gamma\sqrt{1+\frac{\tau}{\vartheta_z}}-1} \right) \right)$$

durchgeführt wird. In

Figur 6d ist die Überlagerung der Messwertfunktion $\mu(\tau)$ mit der theoretischen Signalfunktion, die in Figur 6c alleine dargestellt ist und sich aus dem numerischen Abgleich ergibt, dargestellt. Aus Figur 6d ist ersichtlich, dass über das erfindungsgemäße Verfahren eine hervorragende Übereinstimmung der theoretischen Signalfunktion mit der Messwertfunktion $\mu(\tau)$ erreicht werden kann. Dies beruht auf den erfindungsgemäßen Annahmen, mit denen die theoretische Signalfunktion und die Messwertfunktion so ausgedrückt werden können, dass ein einfacher und damit auch präziser numerischer Abgleich mit geringem Rechenaufwand möglich ist. Dazu tragen insbesondere auch die oben erläuterten Annahmen und Umformungen, die auf das in Figur 6 und 7 beschriebene Ausführungsbeispiel angewandt wurden, bei.

In Figur 7 ist ein Ausführungsbeispiel des erfindungsgemäßen Verfahrens dargestellt, bei dem eine Messung sowie ein numerischer Abgleich analog zu dem Ausführungsbeispiel gemäß Figur 6 durchgeführt wurde zur Charakterisierung eines Systems, in dem sich Teilchen von nur einer emittierenden Spezies *j* befinden. In Figur 7 sind die Ergebnisse von insgesamt zwölf Messungen dargestellt. Bei den ersten drei Messungen wurde eine erste Konzentration $c_1$ der Spezies in dem System bei der Präparation des Systems eingestellt, bei der vierten bis sechsten Messung eine Konzentration $c_2$, bei der siebten bis neunten Messung eine Konzentration $c_3$ und bei der zehnten bis zwölften Messung eine Konzentration $c_4$.

In Figur 7a sind die Werte für die charakteristische Detektionshelligkeit der Teilchen der Spezies *j* in dem System für sämtliche zwölf Messungen angegeben. Wie zu erwarten ändert sich der Wert für die charakteristische Detektionshelligkeit $\mu_{0,j}$ der Spezies *j* nicht in Abhängigkeit von der angesetzten Konzentration der Spezies in dem System. Der Abfall des Wertes für $\mu_0$ während einer jeden Messreihe umfassend drei Versuche zu einer jeden Konzentration $c_1$, $c_2$, $c_3$ bzw. $c_4$ beruht auf dem sogenannten "bleaching" der Teilchen während der Messreihe, wodurch die charakteristische Helligkeit der Teilchen sinkt. Entsprechend steigt die charakteristische Detektionshelligkeit $\mu_0$ mit dem Verlauf der Messreihe. Aus Figur 7a ist ersichtlich, dass das erfindungsgemäße Verfahren reproduzierbare Ergebnisse in Bezug auf die charakteristische Eigenschaft der Teilchen der charakteristischen Detektionshelligkeit der Teilchen liefert.

In Figur 7b ist der Geräteparameter $\gamma$ angegeben, der über $\gamma = \sqrt{\frac{\vartheta_z}{\vartheta_z - \vartheta_{xy}}}$ aus dem numerischen Abgleich berechnet wird. Da $\vartheta_z$ und $\vartheta_{xy}$ in dem vorliegenden Fall durch die Messapparatur dergestalt festgelegt sind, dass $\vartheta_z$, $\vartheta_{xy}$ die Durchtrittszeit durch das Messvolumen charakterisieren, ist zu erwarten, dass in dem gezeigten Ausführungsbeispiel der Geräteparameter $\gamma$ für alle Konzentrationen der Spezies in dem System konstant ist. Denn in dem gezeigten Ausführungsbeispiel unterliegen die Teilchen der Spezies *j* in dem System keinem Zerfall, sondern die Teilchen tragen solange zur detektierten Rate bei, wie sie sich innerhalb des Messvolumens befinden. Die Tatsache, dass der Geräteparameter $\gamma$ über den numerischen Abgleich des erfindungsgemäßen Verfahrens als konstant bestimmt wird, bestätigt die Präzision des erfindungsgemäßen Verfahrens bei der Analyse von Systemen mit emittierenden Teilchen.

In Figur 7c ist die transversale Zerfallszeit $\vartheta_{xy}$ für die zwölf Messungen angegeben. Aus Figur 7c ist ersichtlich, dass von Messfehlern abgesehen eine konstante Zerfallszeit $\vartheta_{xy}$ für die Teilchen der Spezies *j* in dem System ermittelt wird. Die Zerfallszeit $\vartheta_{xy}$ ist zu interpretieren als die Durchtrittszeit der Teilchen durch das Messvolumen in der *xy*-Ebene.

Figur 7d gibt die relativen Konzentrationen $c_1 : c_2 : c_3 : c_4$ an. Die Konzentration der Teilchen bei den ersten drei Messungen ($c_1$) wird willkürlich auf 1 gesetzt, als Ausgangspunkt für die relativen Konzentrationen in Bezug auf $c_1$. Die relativen Konzentrationen aus Figur 7d wurden gemäß dem Ausführungsbeispiel des erfindungsgemäßen Verfahrens über das Verhältnis der mittleren detektierten Photonenanzahl $\overline{n}_j$ der Messungen ermittelt. Dabei wurde die Relation verwendet: $\overline{n}_j = c_j \overline{\mu_{1,j}} \tau$. $\overline{\mu_{1,j}}$ kann über die theoretische Signalfunktion ermittelt werden, $\overline{n}_j$ entspricht der Anzahl der detektierten Photonen, so dass $c_j$ für jede Messung ermittelt werden kann. An dieser Stelle wird ein wichtiger, allgemeiner und grundlegender Vorteil des erfindungsgemäßen Verfahrens deutlich: Da der Messwertdatensatz, der erfindungsgemäß verwendet wird, die über den Messzeitraum *T* zeitlich aufgelöst aufgenommene Anzahl *n* der detektierten Emissionen umfasst, sind diese quantitativen Messwerte bei der Auswertung verwendbar, wodurch die Auswertung umfassend erfolgen kann. Eine andere Möglichkeit, die Relation der Konzentrationen zwischen den einzelnen Messungen zu ermitteln, ist die Besetzungsanzahl $\omega_j(\tau)$ direkt über die Wahrscheinlichkeit der 0-Ereignisse zu ermitteln, da gilt: $P_{sig}(n, \tau) = e^{-\omega_j(\tau)}$ für $n = 0$. Entsprechend können die Verhältnisse der Konzentrationen über die Verhältnisse der mittleren Besetzungsanzahl $\omega_j(\tau)$ ermittelt werden.

In den Figuren 8 und 9 sind die Ergebnisse eines weiteren Ausführungsbeispiels des erfindungsgemäßen Verfahrens in Anwendung auf ein System mit einer Teilchenspezies *j* dargestellt. In Figur 8a ist -analog zu Figur 6a- die gemessene Messwertfunktion $\mu(\tau)$ dargestellt. In Figur 8b ist $\mu(\tau)$ von dem Detektorrauschen bereinigt. In Figur 8c ist die theoretische Signalfunktion, die über den numerischen Abgleich mit der bereinigten Messwertfunktion $\mu(\tau)$ aus Figur 8b ermittelt wurde, dargestellt. In Figur 8d ist die Überlappung der Graphen von Figur 8b und 8c dargestellt. Aus Figur 8d ist ersichtlich, dass über das erfindungsgemäße Verfahren eine hervorragende Angleichung der theoretischen Signalfunktion an die Messwertfunktion zum Übermitteln der das System bzw. die Teilchen charakterisierenden Konstanten möglich ist.

Für den numerischen Abgleich wurde wie bei dem Ausführungsbeispiel gemäß den Figuren 6 und 7 die Glei-

chung $$\mu(\tau)=\frac{\mu_{0,j}}{2^{\frac{3}{2}}}\frac{\gamma^2-1}{\gamma}\frac{\vartheta_z}{\tau}\left(\ln\left(\frac{\gamma+1}{\gamma-1}\right)-\ln\left(\frac{\gamma\sqrt{1+\frac{\tau}{\vartheta_z}}+1}{\gamma\sqrt{1+\frac{\tau}{\vartheta_z}}-1}\right)\right)$$ angewandt.

In Figur 9 sind die in der theoretischen Signalfunktion zu bestimmenden Konstanten angegeben. Bei dem Ausführungsbeispiel gemäß Figur 9 wurden drei Messungen durchgeführt, wobei die Probe jeweils an drei verschiedenen Stellen vermessen wurde. In Figur 9 sind die Ergebnisse der drei Messungen für die charakteristische Detektionshelligkeit $\mu_{0j}$ der Spezies *j* dargestellt, in Figur 9b die Ergebnisse für den Geräteparameter $\gamma$, in Figur 9c die Ergebnisse für die transversale Zerfallszeit $\vartheta_{xy}$ und in Figur 9d die relative Konzentration, die bei den jeweiligen Messungen zueinander ermittelt wurden. Die Konzentrationen wurden wie oben zu Figur 7 erläutert ermittelt, wobei $c_3$, also die Konzentration bei der dritten Messung, gleich 1 gesetzt wurde. Die Ermittlung der Werte erfolgt wie an dem Beispiel zu Figur 6 und Figur 7 erläutert analog bei dem Ausführungsbeispiel gemäß Figur 8 und Figur 9.

Über das Verhältnis

$\vartheta_{xy}=\frac{a_{xy}^2}{8D}$ bzw. $\vartheta_z=\frac{a_z^2}{8D}$ kann über das Verfahren gemäß Figuren 6 und 7 oder das Verfahren gemäß den Figuren 8 und 9, bei denen jeweils die Zerfallszeit $\vartheta_{xy}$ experimentell bestimmt wird, bei Kenntnis einer der Größen $a_{xy}$ oder *D* die andere der beiden Größen $a_{xy}$ oder *D* bestimmt werden. Entsprechend ist dies auch bei einer Bestimmung von $\vartheta_z$ für $a_z$ bzw. *D* möglich.

In dem Ausführungsbeispiel gemäß den Figuren 6 und 7 wurde bei der Präparation des Systems als emittierende Teilchen der Standardfluorophor Alexa 488 als Spezies *j* verwendet. Für diesen Farbstoff ist die Diffusionskonstante *D* sehr genau bestimmt (nach Schwille). Nach Schwille beträgt die Diffusionskonstante für Alexa 488 in wässriger Lösung, wie dies bei dem bei dem Ausführungsbeispiel nach Figur 6 und 7 verwendeten System der Fall ist, $D = 4{,}35 \cdot 10^{-10} m^2/s$. Über die in Figur 7c ermittelte Zerfallszeit $\vartheta_{xy}$, die nach Figur 7c auf $\vartheta_{xy} = 6{,}9 \cdot 10^{-4} s$ ermittelt wurde, kann daraus der Paramater $a_{xy}$, der unabhängig von den Teilcheneigenschaften ist und von der Messapparatur vorgegeben ist, auf $a_{xy} = 1{,}55 \cdot 10^{-6}\ m$ ermittelt werden.

Bei dem Ausführungsbeispiel nach Figur 8 und 9 wurde die gleiche Messapparatur verwendet, so dass von dem gleichen $a_{xy}$ ausgegangen werden kann. Das System, das bei dem Ausführungsbeispiel gemäß den Figuren 8 und 9 analysiert wurde, enthält als emittierende Teilchen monodisperse Nanopartikel. Über die Kenntnis von $a_{xy} = 1{,}55 \cdot 10^{-6}$ *m* kann über die aus Figur 9c ermittelte Zerfallszeit $\vartheta_{xy} = 2{,}9 \cdot 10^{-2}\ s$ die Diffusionskonstante als $D = 1{,}04 \cdot 10^{-11} m^2/s$ ermittelt werden. Die Diffusionskonstante kann alternativ nach Einstein bestimmt werden über $D=\frac{k_B T}{6\pi\eta R_0}$. Mit $R_0$ = 20 nm ($R_0$ ist für die monodispersen Nanopartikel bekannt) und $\eta = 1{,}0$ (das für das System verwendete Lösungsmittel ist $H_2O$ bei 20°C), sowie *T* =20°C und der Boltzmannkonstanten $k_B$ erhält man durch Einsetzen einen Wert für *D* von $D = 1{,}074 \cdot 10^{-11} m^2/s$. Dieser Wert stimmt sehr gut mit dem über das erfindungsgemäße Verfahren ermittelten Wert überein. Auch daraus ist erkennbar, dass mit dem erfindungsgemäßen Verfahren die zu ermittelnden Konstanten präzise, insbesondere dank des über die erfindungsgemäßen Annahmen geringen Rechenaufwands, ermittelt werden können. Außerdem ist ersichtlich, dass mit dem erfindungsgemäßen Verfahren eine umfassende Auswertung möglich ist. Insbesondere können über eine Eichmessung Konstanten betreffend die Messapparatur bestimmt werden, wie etwa $a_{xy}$ oder $a_z$ oder, im Fall sphärischer Symmetrie, *a*, wodurch der numerische Abgleich bei nachfolgenden Auswertungen vereinfacht und/oder präziser erfolgen kann zur präziseren Bestimmung der das System bzw. die Teilchen charakterisierenden Konstanten.

In den Figuren 10 und 11 wird das erfindungsgemäße Verfahren anhand eines weiteren Ausführungsbeispiels erläutert. Bei diesem Ausführungsbeispiel wird das Verfahren an einem ersten System durchgeführt, in dem nur die Teilchenspezies *A* vorkommt, an einem zweiten System, in dem nur die Teilchenspezies *B* vorkommt sowie an einem dritten System, in dem die Teilchenspezies *A, B* und *AB* vorkommen. Bei den Teilchenspezies *A* und *B* handelt es sich um Teilchenspezies, die jeweils Emittenden emittierende Edukte sind und gemäß der Reaktionsgleichung $A + B \leftrightarrow AB$ mit der kinetischen Konstanten $K_\alpha$ (Assoziationskonstante) zum Produkt *AB* reagieren, wobei das Produkt *AB* auch wieder mit einer Geschwindigkeitskonstanten $K_d$ (Dissoziationskonstante) in die Edukte *A, B* zerfallen kann. Das Produkt *AB* emittiert dieselben lichtemittierenden Emittenden wie die Edukte *A, B*. Einer jeden der Teilchenspezies kann eine lokale Detektionsrate $\mu_A(\vec{r})$, $\mu_B(\vec{r})$, $\mu_{AB}(\vec{r})$ und eine mittlere lokale Detektionsrate $\overline{\mu}_{1,A}$, $\overline{\mu}_{1,B}$, $\overline{\mu}_{1,AB}$ zugeordnet werden. Beispielsweise kann die mittlere lokale Detektionsrate des Produkts *AB,* nämlich $\overline{\mu}_{1,AB}$, durch die Summe der mittleren lokalen Detektionsraten der Produkte *A, B,* nämlich $\overline{\mu}_{1,A}$, $\overline{\mu}_{1,B}$ vorgegeben sein, beispielsweise durch die Gleichung $\overline{\mu}_{1,AB} = \alpha_{eff} *(\overline{\mu}_{1,A} + \overline{\mu}_{1,B})$. Dabei ist $\alpha_{eff}$ ein Effizientfaktor, der die Emission des Produkts beschränkende Effekte berücksichtigt, wie beispielsweise Quenchingeffekte. Bei einem Mischen eines ersten Systems, das als emittierende Teilchen ausschließlich Teilchen der Teilchenspezies *A* enthält, mit einem zweiten System, das als emittierende Teilchenspezies ausschließlich die Teilchenspezies *B* enthält, erhält man somit ein drittes System, in dem die Teilchenspezies *A, B* und *AB* in dem dritten System vorkommen, wobei die Partialkonzentrationen $c_A$, $c_B$ und $c_{AB}$, in denen die Teilchenspezies *A, B, AB* vorkommen, zumindest bis zum Erreichen eines stationären Zustands mit der Zeit variieren. Wie in dem nachfolgend erläuterten Ausführungsbeispiel dargelegt, ist das erfindungsgemäße Verfahren zum Ermitteln der Partialkonzentrationen bzw. zum Ermitteln des zeitabhängigen Verhaltens der jeweiligen Partialkonzentrationen $c_A$, $c_B$ und $c_{AB}$ sehr gut geeignet. Prinzipiell ist das erfindungsgemäße Verfahren für sämtliche Teilchenspezies bzw. Teilchenspeziesgemische geeignet, die wie erläutert dargestellt werden können, beispielsweise auch für Teilchenspeziesgemische mit mehr als drei verschiedenen Teilchenspezies. In dem nachfolgend erläuterten Ausführungsbeispiel sind als Teilchenspezies *A* Antikörper GAR gewählt, als Teilchenspezies *B* Antikörper RAM und als Teilchenspezies *AB* die Bindung der beiden Antikörper. Sowohl die Teilchenspezies *A* als auch die Teilchenspezies *B* wurden mit dem Fluorophor Alexa 488 markiert, wobei für jede Teilchenspezies zwei Fluorophore pro Teilchen gebunden sind. Die Teichen emittieren als Emittenden somit Photonen.

Bei dem beschriebenen Ausführungsbeispiel sollen die Partialkonzentrationen $c_A$, $c_B$, $c_{AB}$ und die Assoziationskonstante $K_\alpha$ über den numerischen Abgleich zwischen der theoretischen Signalfunktion und der Messwertfunktion ermittelt werden. Dabei werden mehrere Messungen durchgeführt, um die Zeitabhängigkeit der Werte der Partialkonzentrationen ermitteln zu können. Hierzu wird die theoretische Signalfunktion zeitabhängig definiert über:

$$\mu_{sig}(\tau,t_0)=\frac{\sum_{j=1}^{s}\overline{\mu}_{1,j}c_j(t_0)\phi_{1,j}(\tau)}{\lambda+\sum_{j=1}^{s}\overline{\mu}_{1,j}c_j(t_0)}\frac{1}{\tau}=\frac{\sum_{j=1}^{s}\overline{\mu}_{1,j}c_j(t_0)\frac{\phi_{1,j}(\tau)}{\tau}}{\lambda+\sum_{j=1}^{s}\overline{\mu}_{1,j}c_j(t_0)}$$

Diese theoretische Signalfunktion nimmt in Abhängigkeit von einem jeweiligen bestimmten Zeitpunkt $t_0$ unterschiedliche Werte an.

Die Messwertfunktion wird für unterschiedliche bestimmte Zeitpunkte ermittelt, indem zu verschiedenen bestimmten Zeitpunkten jeweils eine Messung durchgeführt wird, die dem Zeitpunkt jeweils zugeordnet ist. Für jeden bestimmten Zeitpunkt $t_0$ wird als Messwertfunktion verwendet:

$$\mu_{Mess}(\tau,t_0)=\frac{Q(\tau,t_0)}{\tau}=\frac{\sigma(\tau,t_0)^2-\overline{n}(\tau,t_0)}{\tau*\overline{n}(\tau,t_0)}$$

Vorliegend ist die Anzahl *s* der Teilchenspezies drei, was sich aus den Teilchenspezies *A, B* und *AB* ergibt.

In dem beschriebenen Ausführungsbeispiel erfolgt der numerische Abgleich zwischen den Messwertfunktionen, die den bestimmten Zeitpunkten zugeordnet sind, und der theoretischen Signalfunktion an den bestimmten Zeitpunkten über den Abgleich der Grenzwerte der beiden Funktionen, wenn die Binzeit $\tau \to 0$ geht. Hierzu ist eine Limesbildung $\lim_{\tau\to 0}$ der theoretischen Signalfunktion erforderlich. Unter der vereinfachenden Annahme, dass das Rauschverhalten $\lambda$ vernachlässigbar ist, erfolgt diese Limesbildung über:

$$\lim_{\tau\to 0}\mu_{sig}(\tau,t_0)=\frac{\sum_{j=1}^{s}\overline{\mu}_{1,j}c_j(t_0)\left[\lim_{\tau\to 0}\frac{\phi_{1,j}(\tau)}{\tau}\right]}{\sum_{j=1}^{s}\overline{\mu}_{1,j}c_j(t_0)}$$

Über die oben erläuterten Relationen $\overline{\mu}_{1,j}$ = *const**$\mu_{0,j}$, $\lim_{\tau\to 0}\frac{\phi_{1,j}(\tau)}{\tau}=\frac{\mu_{0,j}}{2\sqrt{2}}$ ergibt sich für die Grenzwertbildung der theoretischen Signalfunktion somit:

$$\lim_{\tau\to 0}\mu_{sig}(\tau,t_0)=\frac{1}{2\sqrt{2}}\frac{\sum_{j=1}^{s}\mu_{0,j}^2c_j(t_0)}{\sum_{j=1}^{s}\mu_{0,j}c_j(t_0)}$$

In dem vorliegenden Ausführungsbeispiel sind die Teilchen der Teilchenspezies *A* und die Teilchen der Teilchenspezies *B* mit der gleichen Anzahl an Fluorophoren markiert und weisen dieselbe lokale Detektionsrate auf. Die Teilchenspezies *AB* weist im Vergleich zu der Teilchenspezies *A* und *B* die doppelte Anzahl an Fluorophoren auf, so dass die lokale Detektionsrate der Teilchenspezies *AB* das Doppelte der Detektionsrate der Teilchenspezies *A* und *B* beträgt. Somit lässt sich für die mittlere lokale Detektionsrate eines bestimmten Teilchens der jeweiligen Teilchenspezies feststellen:

$$\overline{\mu}_{1,AB}=2\overline{\mu}_{1,A}=2\overline{\mu}_{1,B}$$

Mit der erfindungsgemäßen Annahme einer identischen räumlichen Verteilung der lokalen Detektionsrate der verschiedenen Teilchenspezies kann somit formuliert werden:

$$\mu_{0,AB}=2\mu_{0,A}=2\mu_{0,B}\overset{!}{=}2\mu_0$$

Damit kann für die Limesbildung der theoretischen Signalfunktion formuliert werden:

$$\lim_{\tau\to 0}\mu_{sig}(\tau,t_0)=\frac{\mu_0}{2\sqrt{2}}\frac{c_A(t_0)+c_B(t_0)+4c_{AB}(t_0)}{c_A(t_0)+c_B(t_0)+2c_{AB}(t_0)}$$

Aus den Ratengleichungen der Kinetik, die die Kinetik der Reaktion der Teilchen *A* und *B* zu dem Produkt *AB* beschreiben, erhält man unter der Annahme das $K_D \approx 0$, d. h. unter der Annahme eines stabilen Produkts *AB,* das nicht zerfällt, sowie unter der Annahme von Ausgangskonzentrationen $A_0$ und $B_0$ folgende Abhängigkeiten der zeitabhängigen Konzentrationen von der Assoziationskonstanten:

$$c_A(t)=\frac{A_0(A_0-B_0)}{A_0-B_0e^{(B_0-A_0)K_a t}}$$

$$c_B(t) = \frac{B_0(A_0 - B_0)}{A_0 e^{(A_0 - B_0)K_\alpha t} - B_0}$$

$$c_{AB}(t) = A_0 B_0 \frac{e^{(A_0 - B_0)K_\alpha t} - 1}{A_0 e^{(A_0 - B_0)K_\alpha t} - B_0}$$

Somit erhält man für die theoretische Signalfunktion:

$$\lim_{\tau \to 0} \mu_{sig}(\tau, t) = \frac{\mu_0}{2\sqrt{2}} \frac{3A_0 + B_0 + \frac{2A_0(A_0 - B_0)e^{A_0 K_\alpha t}}{B_0 e^{B_0 K_\alpha t} - A_0 e^{A_0 K_\alpha t}}}{A_0 + B_0}$$

Über diese theoretische Signalfunktion, die von der Zeit *t* abhängt, können die Limeswerte der theoretischen Signalfunktion bei der Limesbetrachtung $\lim_{\tau \to 0}$ zu bestimmten Zeitpunkten $t_0$ bestimmt werden. Diese können sodann mit Grenzwerten abgeglichen werden, die die Messwertfunktion, die zu jeweils einem bestimmten Zeitpunkt $t_0$ ermittelt wird, für $\lim_{\tau \to 0}$ annimmt.

In den Figuren 10 und 11 sind die Ergebnisse des beschriebenen Ausführungsbeispiels dargelegt. In Figur 10a ist das zeitabhängige Verhalten der Partialkonzentrationen $c_A(t)$, $c_B(t)$ und $c_{AB}(t)$ dargestellt, das sich aus den obengenannten Ratengleichungen rechnerisch ergibt, wobei für die Assoziationskonstante $K_\alpha$ der Wert $10 \frac{l}{mol\ \ s}$ angenommen wurde. Ferner wurde angesetzt, dass $B_0 = 2A_0 = 2\frac{mol}{l}$.

Aus Figur 10a ist ersichtlich, dass zu Reaktionsbeginn, d. h. zu dem Zeitpunkt, in dem die Teilchenspezies *A* mit der Teilchenspezies *B* vermischt wird, die Partialkonzentrationen $c_A$ bzw. $c_B$ jeweils $A_0$ bzw. $B_0$ betragen und dass die Partialkonzentrationen $c_A$ und $c_B$ mit der Zeit abnehmen, während die Partialkonzentrationen der Teilchenspezies *AB,* deren Teilchen sich aus den Teilchen *A* und *B* bildet, zunimmt.

In Figur 10b sind die Werte der theoretischen Signalfunktion dargestellt, die sich aus der obengenannten Gleichung ergeben, wobei angesetzt wurde $\mu_0 = 50 kcps$. Aus Figur 10b ist zu erkennen, dass die lokale Detektionsrate des Gemisches der Teilchenspezies *A* und *B* mit zunehmender Zeit ansteigt. Die lokale Detektionsrate beginnt bei 50*kcps* und endet bei circa 84*kcps.* Dies ist darauf zurückzuführen, dass bei vollständiger Reaktion der Teilchenspezies *A* mit der Teilchenspezies *B* wegen der größeren Anzahl der Teilchen der Teilchenspezies *B* weiterhin Teilchen der Teilchenspezies *B* in dem Gemisch vorhanden sind, so dass die lokale Detektionsrate, die die mittlere lokale Detektionsrate über ein einzelnes Teilchen des Gemisches darstellt und somit sowohl die lokale Detektionsrate der Teilchen *AB* als auch die der Teilchen *B* berücksichtigt, nicht das Doppelte der Ausgangsrate annimmt.

In Figur 11 sind die Grenzwerte der Messwertfunktionen für $\lim_{\tau \to 0}$ dargestellt, die sich aus den Messungen zu unterschiedlichen Zeitpunkten $t_0$ ergeben. Ein jeder Messwert wurde ermittelt, indem eine Messung über einen Messzeitraum an einem Messzeitpunkt $t_0$ durchgeführt wurde, sodann die Messwertfunktion über die Variation der Binzeit ermittelt wurde und sodann der Grenzwert der Messwertfunktion für $\lim_{\tau \to 0}$ aus einem numerischen Fit bestimmt wurde. In dem vorliegenden Ausführungsbeispiel wurden die Grenzwerte der Messwertfunktionen für drei verschiedene Systeme ermittelt, nämlich für ein erstes System mit der Teilchenspezies *A,* ein zweites System mit der Teilchenspezies *B* und ein drittes System, in dem Teilchenspezies *A* und Teilchenspezies *B* gemischt werden, so dass dort die Teilchenspezies *AB* entsteht. Während in Figur 11a bei dem dritten System kein reaktionshemmender Stoff beigefügt wurde, wurde bei der Messung nach Figur 11b Harnstoff als reaktionshemmender Stoff beigefügt. Aus den Figuren 11a, 11b ist ersichtlich, dass die Grenzwerte der Messwertfunktion für das erste und das zweite System unabhängig von dem Zeitpunkt der Messung ungefähr konstant bleiben, während der Grenzwert der Messwertfunktion für das dritte System im Fall der Figur 11a zu späteren Zeitpunkten zunimmt und im Fall der Figur 11b, bei der die Reaktion zwischen den Teilchen *A* und *B* gehemmt ist, ebenfalls im Wesentlichen unabhängig von dem Zeitpunkt der Messung ist. Aus der Zusammenschau der Figuren 10 und 11 ist ersichtlich, dass die theoretische Signalfunktion, die erfindungsgemäß ermittelt wurde und erfindungsgemäß zum Abgleich mit der Messwertfunktion herangezogen wird, sehr gut mit dem Verhalten der Messwertfunktion übereinstimmt, so dass über einen Abgleich der theoretischen Signalfunktion mit der Messwertfunktion eine Bestimmung der relevanten Konstanten, in dem vorliegenden Ausführungsbeispiel z. B. der Konstanten $K_{\alpha}$, einfach und genau möglich ist.

Das erfindungsgemäße Verfahren kann prinzipiell in beliebigen Messumgebungen eingesetzt werden. Beispielsweise ist das erfindungsgemäße Verfahren für biochemische Analysen in Lösungen oder an Oberflächen geeignet. Bei den Oberflächen kann es sich um funktionalisierte Einheiten oder auch um natürliche Einheiten, wie beispielsweise Zellmembranen, handeln. Darüber hinaus ist das erfindungsgemäße Verfahren zum Einsatz in fluidischen Systemen geeignet. Beispielsweise können hierbei Messungen an einem Aufbau vorgenommen werden, der nach Art einer Y-Struktur gestaltet ist, wobei über die beiden Schenkel des Y zwei verschiedene Teilchenspezies zugeführt werden, die sich am Vereinigungspunkt der Schenkel der Y-Struktur mischen, so dass über Messungen an dem Vereinigungspunkt der Y-Struktur sowie mit fortschreitendem Abstand von diesem Punkt das Verhalten des Gemischs bestimmt werden kann.

## Bezugszeichenliste

| | |
|---|---|
| 1 | Probe |
| 2 | Lichtquelle |
| 3 | Beleuchtungsoptik |
| 4 | Anregungsfilter |
| 5 | Dichroitischer Spiegel |
| 6 | Objektiv |
| 7 | Emissionsfilter |
| 8 | Tubuslinse |
| 9 | Pinhole |
| 10 | Detektionseinheit |
| 11 | Daten-Sampling-Einheit |
| 12 | Rechner |
| 100 | Probenebene |

## Patentansprüche

**1.** Verfahren zur Quantifizierung von Teilchen, die bestimmte Emittenden emittieren, und zur Charakterisierung des zeitabhängigen Verhaltens der Teilchen in einem System, das Teilchen zumindest einer Spezies *j*, insbesondere verschiedener Spezies umfasst, wobei in einer Messung Emissionen der Teilchen in einem Messzeitraum detektiert werden und in einer Auswertung die Anzahl *n* der Emissionen ermittelt und gespeichert wird, die in einem Zeitintervall mit einer vorbestimmten Intervallbreite innerhalb des Messzeitraums detektiert wurden, wobei die Auswertung insbesondere für mehrere Zeitintervalle mit derselben Intervallbreite durchgeführt wird, wobei eine Verteilungsfunktion *p*(*n*) der Anzahl *n* der detektierten Emissionen bestimmt wird, wobei

a) für die Intervallbreite unterschiedliche Binzeiten $\tau$ festgelegt werden und für jede Binzeit $\tau$ die Auswertung durchgeführt und eine Verteilungsfunktion $p_{\tau}(n)$ ermittelt wird, **dadurch gekennzeichnet, dass** für jede Binzeit $\tau$ Momente $m_{i,\tau}^{Mess}$ der Verteilungsfunktion $p_{\tau}(n)$ ermittelt werden, woraus binzeitabhängige Momentenfunktionen $m_i^{Mess}(\tau)$ dargestellt werden,

b) aus einem numerischen Abgleich einer theoretischen Signalfunktion umfassend Momente $m_i^{sig}(\tau)$ einer theoretischen Signalverteilung $P_{sig}(n,\tau)$, die eine über theoretische Funktionen ermittelte, zu erwartende Signalverteilung angibt, mit einer Messwertfunktion umfassend die Momentenfunktionen $m_i^{Mess}(\tau)$ Konstanten ermittelt werden, die die Teilchen in dem System charakterisieren.

**2.** Verfahren nach Anspruch 1,
**dadurch gekennzeichnet, dass**
der theoretischen Signalfunktion eine Definition der theoretische Signalverteilung $P_{sig}(n,\tau)$ zugrunde gelegt wird, die auf der Annahme einer bestimmten lokalen Detektionsrate $\mu_j(\bar{r}) = \mu_{0,j}f(\bar{r})$ für ein Teilchen der Spezies j beruht, wobei $\mu_{0,j}$ eine charakteristische Detektionshelligkeit eines Teilchens darstellt, auf der Annahme einer bestimmten lokalen Aufenthaltswahrscheinlichkeit und einer bestimmten lokalen Emissionswahrscheinlichkeit der Teilchen der Spezies $j$ und der Annahme eines bestimmten Messvolumens $V$, in dem sich die Teilchen befinden müssen, damit Emissionen der Teilchen detektiert werden können, wobei $P_{sig}(n,\tau)$ als binzeitunabhängige Parameter die lokale Detektionsrate $\mu_j(\bar{r})$, eine Partialkonzentration $c_j$ und eine Zerfallszeit $\vartheta_j$ der Teilchenspezies j sowie das Rauschverhalten der verwendeten Messapparatur umfasst, und wobei die Konstanten zumindest die Parameter $\mu_{0,j}$, $\vartheta_j$ und insbesondere $c_j$ betreffen.

**3.** Verfahren nach einem der vorangehenden Ansprüche,
**dadurch gekennzeichnet, dass**
bei Anwendung des Verfahrens auf ein System mit $s$ verschiedenen Teilchenspezies für jede Teilchenspezies eine theoretische Speziessignalverteilung $P_{sig}^j(n,\tau)$ zugrunde gelegt wird, wobei die theoretische Signalverteilung $P_{sig}(n,\tau)$ des Systems durch die $s$+1-fache Faltung der $s$ verschiedenen Signalverteilungen $P_{sig}^j(n,\tau)$ der $s$ verschiedenen Spezies und einer Rauschsignalverteilung $P_{noise}(n,\tau)$ bestimmt ist.

**4.** Verfahren nach einem der vorangehenden Ansprüche,
**dadurch gekennzeichnet, dass**
das für die Definition von $P_{sig}(n,\tau)$ verwendete Messvolumen $V$ über ein binzeitabhängiges, fiktiv eingeführtes effektives Volumen $V_{eff,j}(\tau)$ definiert wird, wobei per Definition von jedem Teilchen der Spezies $j$, das sich in dem Volumen $\tau V_{eff,j}(\tau)$ befindet, in der Binzeit $\tau$ zumindest eine Emission detektiert wird und das Teilchen $\tau V_{eff,j}(\tau)$ während der Binzeit $\tau$ nicht verlässt, wobei per Definition die mittlere Anzahl der Teilchen der Spezies $j$ in $V_{eff,j}(\tau)$ durch eine mittlere Besetzungsanzahl $\omega_j(\tau)$ mit $\omega_j(\tau) = c_jV_{eff,j}(\tau)\tau$ bestimmt ist.

**5.** Verfahren nach Anspruch 4,
**dadurch gekennzeichnet, dass**
für die Verteilung der Besetzungsanzahl eine Poisson-Verteilung angenommen wird.

**6.** Verfahren nach einem der vorangehenden Ansprüche,
**dadurch gekennzeichnet, dass**
für die Bestimmung der theoretischen Signalverteilung $P_{sig}(n,\tau)$ angenommen wird, dass die lokale Emissionswahrscheinlichkeit der Teilchen gemäß einer Poisson-Verteilung verteilt ist.

**7.** Verfahren nach einem der vorangehenden Ansprüche,
**dadurch gekennzeichnet, dass**
der binzeitabhängige Mittelwert $\bar{n}(\tau)$ und die binzeitabhängige Varianz $\sigma^2(\tau)$ aus den Verteilungsfunktionen $p_\tau(n)$ für jede Binzeit $\tau$ ermittelt werden und die Messwertfunktion $\bar{n}(\tau)$ und $\sigma^2(\tau)$ umfasst.

**8.** Verfahren nach Anspruch 7,
**dadurch gekennzeichnet, dass**

als Messwertfunktion $Q(\tau) = \frac{\sigma(\tau)^2 - \overline{n}(\tau)}{\overline{n}(\tau)}$ festgelegt wird, wobei der numerische Abgleich über die Relation $Q(\tau) = \frac{\sigma(\tau)^2 - \overline{n}(\tau)}{\overline{n}(\tau)} = \frac{m_2^{sig}(\tau) - [m_1^{sig}(\tau)]^2 - m_1^{sig}(\tau)}{m_1^{sig}(\tau)}$ durchgeführt wird, wobei $m_1^{sig}(\tau)$ das erste Moment und $m_2^{sig}(\tau)$ das zweite Moment von $P_{sig}(n, \tau)$ darstellt.

**9.** Verfahren nach einem der vorangehenden Ansprüche,
**dadurch gekennzeichnet, dass**
die theoretische Signalfunktion als zeitabhängig definiert wird, wobei mehrere Messungen zu jeweils einem bestimmten, der jeweiligen Messung zugeordneten Zeitpunkt durchgeführt werden, wobei für jede der Messungen eine dem jeweiligen bestimmten Zeitpunkt zugeordnete binzeitabhängige Messwertfunktion ermittelt wird, wobei jede Messwertfunktion über eine Näherungskurve angenähert wird, wobei über die Näherungskurve einer jeden Messwertfunktion ein Grenzwert der jeweiligen Messwertfunktion ermittelt wird, den diese Messwertfunktion für lim Binzeit $\rightarrow$ 0 annimmt, wobei über eine Limesbetrachtung lim Binzeit $\rightarrow$ 0 der theoretischen Signalfunktion Limeswerte der theoretischen Signalfunktion an den bestimmten Zeitpunkten für lim Binzeit $\rightarrow$ 0 ermittelt werden, wobei der numerische Abgleich durchgeführt wird, indem jeweils der Grenzwert einer der Messwertfunktionen mit dem Limeswert der theoretischen Signalfunktion an dem dieser Messwertfunktion zugeordneten bestimmten Zeitpunkt abgeglichen wird.

**10.** Verfahren nach einem der vorangehenden Ansprüche,
**dadurch gekennzeichnet, dass**
eine mittlere lokale Detektionsrate $\overline{\mu_1}_j$ der Spezies $j$ über das Integral $\overline{\mu}_{1,j} = \int_R d^3 r \mu_j(\vec{r})$ über einen, insbesondere unbegrenzten Raum $R$ festgelegt und als binzeitunabhängiger Parameter in die theoretische Signalverteilung $P_{sig}(n, \tau)$ eingeführt wird.

**11.** Verfahren nach einem der vorangehenden Ansprüche,
**dadurch gekennzeichnet, dass**
für die Definition der theoretischen Signalverteilung $P_{sig}(n, \tau)$ eine mittlere detektierte Emissionsanzahl eines einzelnen Teilchens der Spezies j festgelegt wird auf $\phi_{1,j}(\tau) = \frac{\int_0^\tau dt \int_R d^3 r_0 (\int_R d^3 r \mu_j(\vec{r}) \psi_j(\vec{r}, t|\vec{r}_0))^2}{\int_R d^3 \mu_j(\vec{r})}$ für die Anwendung des Verfahrens auf einen stochastischen Transport der Teilchen, und auf $\phi_{1,j}(\tau) = \frac{\int_R d^3 r_0 (\int_0^\tau dt \int_R d^3 r \mu_j(\vec{r}) \psi_j(\vec{r}, t|\vec{r}_0))^2}{\int_R d^3 r \mu_j(\vec{r})}$ für die Anwendung des Verfahrens auf einen deterministischen Transport der Teilchen, wobei $R$ insbesondere einen unbegrenzten Raum darstellt.

**12.** Verfahren nach den Ansprüchen 3, 9 und 11,
**dadurch gekennzeichnet, dass**
als Messwertfunktion $Q(\tau) = \frac{\sigma^2(\tau) - \overline{n}(\tau)}{\overline{n}(\tau)}$ angesetzt wird und der numerische Abgleich über die Relation

$$\frac{\sum_{j=1}^{s}\overline{\mu}_{1,j}c_j\phi_{1,j}(\tau)}{\lambda+\sum_{j=1}^{s}\overline{\mu}_{1,j}c_j}$$

erfolgt, wobei in dem System von $s$ verschiedenen Teilchenspezies ausgegangen wird und $\lambda$ eine Rauschkonstante darstellt.

**13.** Verfahren nach Anspruch 12,
**dadurch gekennzeichnet, dass**
für die Anwendung des Verfahrens auf ein System mit nur der Teilchenspezies $j$ als einziges die Emittenden emittierender Spezies der numerische Abgleich über die Relation $Q(\tau) = \phi_{1,j}(\tau)$ erfolgt.

**14.** Verfahren nach Anspruch 9, oder einem der Ansprüche 10-13, wenn abhängig von Anspruch 9,
**dadurch gekennzeichnet, dass**

$$\mu_j(\vec{r})=\mu_{0,j}\exp\left(-\frac{2}{a_{xy}^2}\left(x^2+y^2\right)\right)\exp\left(-\frac{2}{a_z^2}z^2\right)$$

für die lokale Detektionsrate $\mu_j(\vec{r})$ eine Gaußfunktion mit mit den Konstanten $a_{x,y}$ und $a_z$ angenommen wird.

**15.** Verfahren nach einem der vorangehenden Ansprüche,
**dadurch gekennzeichnet, dass**
für die Anwendung des Verfahrens auf einen fluidischen Transport der Teilchen mit der Transportgeschwindigkeit $v$ für die Definition der theoretischen Signalverteilung $P_{sig}(n,\tau)$ eine mittlere detektierte Emissionsanzahl eines einzelnen Teilchens der Spezies $j$ festgelegt wird auf

$$\phi_{1,j}(\tau)=\frac{\sqrt{\pi}}{2\sqrt{2}}\frac{\mu_{0,j}}{2a}\frac{\vartheta_j^2}{\tau}\int_{-\infty}^{\infty}dz_0\left(erf\left[\frac{1}{\vartheta_j}\left(\frac{z_0}{v}+\tau\right)\right]-erf\left[\frac{z_0}{v\vartheta_j}\right]\right)^2.$$

**16.** Verfahren nach einem der Ansprüche 1 bis 14,
**dadurch gekennzeichnet, dass**
für die Anwendung des Verfahrens auf einen Diffusionstransport der Teilchen mit sphärischer Messsymmetrie für die Definition der theoretischen Signalverteilung $P_{sig}(n,\tau)$ eine mittlere detektierte Emissionsanzahl eines einzelnen

$$\phi_{1,j}(\tau)=\frac{\mu_{0,j}}{\sqrt{2}}\vartheta_j\left(1-\frac{1}{\sqrt{1+\frac{\tau}{\vartheta_j}}}\right).$$

Teilchens der Spezies $j$ festgelegt wird auf

**17.** Verfahren nach einem der Ansprüche 1 bis 14,
**dadurch gekennzeichnet, dass**
für die Anwendung des Verfahrens auf einen Diffusionstransport der Teilchen mit rotationsellipsoidischer Messsymmetrie für die Definition der theoretischen Signalverteilung $P_{sig}(n,\tau)$ eine mittlere detektierte Emissionsanzahl eines

$$\phi_{1,j}(\tau)=\frac{\mu_{0,j}}{2^{\frac{3}{2}}}\int_0^{\tau}\frac{dt}{\left(1+\frac{t}{\vartheta_{j,xy}}\right)\sqrt{1+\frac{t}{\vartheta_{j,z}}}},$$

einzelnen Teilchens der Spezies $j$ festgelegt wird auf mit den Zerfallszeiten $\vartheta_{j,xy}$ und $\vartheta_{j,z}$ für Teilchen der Spezies $j$.

## Claims

1. Method for quantifying particles emitting certain emitters and for characterizing the time-dependent behavior of the particles in a system which comprises particles of at least one species *j*, in particular of different species, wherein, in a measurement, emissions of the particles within a measurement period are detected and, in an evaluation, the number *n* of the emissions which have been detected in a time interval having a predetermined interval width within the measurement period is ascertained and stored, said evaluation being performed in particular for a plurality of time intervals having the same interval width, a distribution function $p(n)$ of the number *n* of the ascertained emissions being determined, wherein

   a) different bin times $\tau$ are set for the interval width and the evaluation is performed for each bin time $\tau$ and a distribution function $p_\tau(n)$ is ascertained, **characterized in that**

   for each bin time $\tau$ moments $m_{i,\tau}^{Mess}$ of the distribution function $p_\tau(n)$ are ascertained, from which bin-time-dependent moment functions $m_i^{Mess}(\tau)$ are presented,

   b) constants which characterize the particles in the system are ascertained from a numerical comparison of a theoretical signal function comprising moments $m_i^{sig}(\tau)$ of a theoretical signal distribution $P_{sig}(n,\tau)$ identifying an expected signal distribution ascertained via theoretical functions using a measured value function comprising the moment function $m_i^{Mess}(\tau)$.

2. Method according to claim 1,
**characterized in that**
the theoretical signal function is based on a definition of the theoretical signal distribution $P_{sig}(n,\tau)$ which is based on the assumption of a certain local detection rate $\mu_j(\vec{r}) = \mu_{0,j}f(\vec{r})$ for a particle of each species j, where $\mu_{0,j}$ represents a characteristic detection brightness of a particle, on the assumption of a certain local residence probability and a certain local emission probability of the particles of the species *j* and on the assumption of a certain measurement volume *V* in which the particles must be located so that emissions of the particles can be detected, wherein $P_{sig}(n,\tau)$ comprises as bin-time-independent parameters the local detection rate $\mu_j(\vec{r})$, a partial concentration $c_j$ and a decay time $\vartheta_j$ of the particle species *j* as well as the noise behavior of the measuring apparatus used, and wherein the constants relate at least to the parameters $\mu_{0,j}$, $\vartheta$ and in particular $c_j$.

3. Method according to any one of the preceding claims,
**characterized in that**
when applying the method to a system with *s* different particle species, a theoretical species signal distribution $P_{sig}^j(n,\tau)$ is taken as a basis for each particle species, the theoretical signal distribution $P_{sig}(n,\tau)$ of the system being determined by the *s*+1-fold convolution of the s different signal distributions $P_{sig}^j(n,\tau)$ of the s different species and a noise signal distribution $P_{noise}(n,\tau)$.

4. Method according to any one of the preceding claims,
**characterized in that**
the measurement volume *V* used for the definition of $P_{sig}(n,\tau)$ is defined via a bin-time-dependent, fictively introduced effective volume $V_{eff,j}(\tau)$, wherein, by definition, at least one emission is detected from each particle of the species *j* located in the volume $\tau V_{eff,j}(\tau)$ in the bin-time $\tau$ and the particle does not leave the particle $\tau V_{eff,j}(\tau)$ during the bin-time $\tau$, wherein, by definition, the average number of particles of the species *j* in $V_{eff,j}(\tau)$ is determined by an average occupation number $\omega_j(\tau)$ with $\omega_j(\tau) = c_j V_{eff,j}(\tau)\tau$.

5. Method according to claim 4,
**characterized in that**

a Poisson distribution is assumed for the distribution of the occupation number.

**6.** Method according to any one of the preceding claims,
**characterized in that**
for the determination of the theoretical signal distribution $P_{sig}(n, \tau)$ it is assumed that the local emission probability of the particles is distributed according to a Poisson distribution.

**7.** Method according to any one of the preceding claims,
**characterized in that**
the bin-time-dependent mean value $\bar{n}(\tau)$ and the bin-time-dependent variance $\sigma^2(\tau)$ are determined from the distribution functions $p_\tau(n)$ for each bin-time $\tau$ and the measured value function comprises $\bar{n}(\tau)$ and $\sigma^2(\tau)$.

**8.** Method according to claim 7,
**characterized in that**
$Q(\tau) = \frac{\sigma(\tau)^2 - \bar{n}(\tau)}{\bar{n}(\tau)}$ is set as measured value function, wherein the numerical comparison is carried out via the relation $Q(\tau) = \frac{\sigma(\tau)^2 - \bar{n}(\tau)}{\bar{n}(\tau)} = \frac{m_2^{sig}(\tau) - \left[m_1^{sig}(\tau)\right]^2 - m_1^{sig}(\tau)}{m_1^{sig}(\tau)}$, wherein $m_1^{sig}(\tau)$ represents the first moment and $m_2^{sig}(\tau)$ represents the second moment of $P_{sig}(n, \tau)$.

**9.** Method according to any one of the preceding claims,
**characterized in that**
the theoretical signal function is defined as time-dependent, a plurality of measurements being carried out in each case at a specific time associated with the respective measurement, a bin-time-dependent measured value function associated with the respective specific time being determined for each of the measurements, each measured value function being approximated via an approximation curve, a limit value of the respective measured value function being determined via the approximation curve of each measured value function, which limit value is assumed by this measured value function for lim bin time $\rightarrow$ 0, limit values of the theoretical signal function at the specific times for lim bin time $\rightarrow$ 0 being determined by means of a limit observation lim bin time $\rightarrow$ 0 of the theoretical signal function, the numerical comparison being performed **in that** in each case the limit value of one of the measured value functions is compared with the limit value of the theoretical signal function at the specific time assigned to this measured value function.

**10.** Method according to any one of the preceding claims,
**characterized in that**
a mean local detection rate $\overline{\mu_1}_j$ of the species $j$ is determined via the integral $\overline{\mu_1}_j = \int_R d^3r \mu_j(\vec{r})$ over a, in particular unlimited, space $R$ and is introduced as a bin-time-independent parameter into the theoretical signal distribution $P_{sig}(n, \tau)$.

**11.** Method according to any one of the preceding claims,
**characterized in that**
for the definition of the theoretical signal distribution $P_{sig}(n, \tau)$ a mean detected emission number of a single particle of the species $j$ is set to $\emptyset_{1,j}(\tau) = \frac{\int_0^\tau dt \int_R d^3r_0 \left(\int_R d^3r \mu_j(\vec{r}) \Psi_j(\vec{r}, t | \vec{r}_0)\right)^2}{\int_R d^3\mu_j(\vec{r})}$ for the application of the method to a stochastic transport of the particles, and to $\phi_{1,j}(\tau) = \frac{\int_R d^3r_0 \left(\int_0^\tau dt \int_R d^3r \mu_j(\vec{r}) \Psi_j(\vec{r}, t | \vec{r}_0)\right)^2}{\int_R d^3r \mu_j(\vec{r})}$ for the application of the method to a deterministic transport of the particles, wherein $R$ in particular represents an unlimited space.

**12.** Method according to claims 3, 9 and 11,

**characterized in that**
$Q(\tau) = \frac{\sigma^2(\tau)-\bar{n}(\tau)}{\bar{n}(\tau)}$ is set as the measured value function and the numerical comparison is performed via the relation $\frac{\sum_{j=1}^{s} \bar{\mu}_{1,j} c_j \phi_{1,j}(\tau)}{\lambda+\sum_{j=1}^{s} \bar{\mu}_{1,j} c_j}$, wherein different particle species s are assumed in the system and $\lambda$ represents a noise constant.

**13.** Method according to claim 12,
**characterized in that**
for the application of the method to a system with only the particle species $j$ as the only species emitting the emitters, the numerical comparison is performed via the relation $Q(\tau) = \phi_{1,j}(\tau)$.

**14.** Method according to claim 9 or any of claims 10-13, if dependent on claim 9,
**characterized in that**
a Gaussian function with $\mu_j(\vec{r}) = \mu_{0,j} exp\left(-\frac{2}{a_{xy}^2}(x^2+y^2)\right) exp\left(-\frac{2}{a_z^2} z^2\right)$ with the constants $a_{x,y}$ and $a_z$ is assumed for the local detection rate $\mu_j(\vec{r})$.

**15.** Method according to any one of the preceding claims,
**characterized in that**
for the application of the method to a fluidic transport of the particles with the transport velocity $v$ for the definition of the theoretical signal distribution $P_{sig}(n, \tau)$ an average detected emission number of a single particle of the species $j$ is set to $\phi_{1,j}(\tau) = \frac{\sqrt{\pi}}{2\sqrt{2}} \frac{\mu_{0,j}}{2a} \frac{\vartheta_j^2}{\tau} \int_{-\infty}^{\infty} dz_0 \left( erf\left[\frac{1}{\vartheta_j}\left(\frac{z_0}{v}+\tau\right)\right] - \quad erf\left[\frac{z_0}{v\vartheta_j}\right]\right)^2.$

**16.** Method according to any of claims 1 to 14,
**characterized in that**
for the application of the method to a diffusion transport of the particles with spherical measurement symmetry for the definition of the theoretical signal distribution $P_{sig}(n, \tau)$, an average detected emission number of a single particle of the species $j$ is set to $\phi_{1,j}(\tau) = \frac{\mu_{0,j}}{\sqrt{2}} \vartheta_j \left(1 - \frac{1}{\sqrt{1+\frac{\tau}{\vartheta_j}}}\right).$

**17.** Method according to any of claims 1 to 14,
**characterized in that**
for the application of the method to a diffusion transport of the particles with rotation-ellipsoidal measurement symmetry for the definition of the theoretical signal distribution $P_{sig}(n, \tau)$, an average detected emission number of a single particle of the species $j$ is set to $\phi_{1,j}(\tau) = \frac{\mu_{0,j}}{2^{\frac{3}{2}}} \int_0^{\tau} \frac{dt}{\left(1+\frac{t}{\vartheta_{j,xy}}\right)\sqrt{1+\frac{t}{\vartheta_{j,z}}}}$, with the decay times $\vartheta_{j,xy}$ and $\vartheta_{j,z}$ for particles of the species $j$.

## Revendications

**1.** Procédé de quantification des particules émettant certains émetteurs et de caractérisation du comportement en fonction du temps des particules dans un système comprenant des particules d'au moins une espèce $j$, en particulier d'espèces différentes, dans lequel des émissions des particules sont détectées lors d'une mesure dans une période de mesure et le nombre $n$ d'émissions est déterminé et mémorisé dans une évaluation, qui ont été détectées dans un intervalle de temps avec une largeur d'intervalle prédéterminée dans la période de mesure, l'évaluation étant effectuée en particulier pour une pluralité d'intervalles de temps ayant la même largeur d'intervalle, une fonction de répartition $p(n)$ du nombre $n$ d'émissions détectées étant déterminée, dans lequel

a) pour la largeur de l'intervalle, on définit différents intervalles de temps défini $\tau$ et on effectue l'évaluation pour chacun des intervalles de temps défini $\tau$ et on détermine une fonction de répartition $p_\tau(n)$, **caractérisé en ce que**, pour chacun des intervalles de temps défini $\tau$ on détermine des moments $m_{i,\tau}^{Mess}$ de la fonction de répartition $p_\tau(n)$, à partir desquels on représente des fonctions de moment $m_i^{Mess}(\tau)$ dépendant des intervalles de temps défini,
b) des constantes qui caractérisent les particules dans le système sont déterminées à partir d'une comparaison numérique d'une fonction de signal théorique comprenant des moments $m_i^{sig}(\tau)$ d'une répartition théorique des signaux $P_{sig}(n,\tau)$, qui indique une répartition des signaux attendue déterminée par une fonction théorique, avec une fonction de valeur mesurée comprenant les fonctions de moment $m_i^{Mess}(\tau)$.

**2.** Procédé selon la revendication 1,
**caractérisé en ce que**
la fonction de signal théorique est basée sur une définition de la répartition théorique des signaux $P_{sig}(n,\tau)$ qui est basée sur l'hypothèse d'un certain taux de détection locale $\mu_j(\vec{r}) = \mu_{0,j}f(\vec{r})$ pour une particule d'espèce j, où $\mu_{0,j}$ représente une luminosité de détection caractéristique d'une particule, sur l'hypothèse d'une certaine probabilité de résidence locale et d'une certaine probabilité d'émission locale des particules d'espèce $j$ et sur l'hypothèse d'un certain volume de mesure $V$, dans laquelle les particules doivent se trouver pour que des émissions de particules soient détectées, $P_{sig}(n,\tau)$ comprenant, en tant que paramètres indépendants des intervalles de temps défini, le taux de détection local $\mu_j(\vec{r})$, une concentration partielle $c_j$ et un temps de désagrégation $\vartheta_j$ de l'espèce de particules $j$ et le comportement au bruit de l'appareil de mesure utilisé, et les constantes se rapportant au moins aux paramètres $\mu_{0,j}$, $\vartheta_j$ et en particulier $c_j$.

**3.** Procédé selon l'une quelconque des revendications précédentes,
**caractérisé en ce que**
lors de l'application du procédé à un système comportant $s$ espèces de particules différentes, une répartition théorique des signaux d'espèce $P_{sig}^j(n,\tau)$ est prise comme base pour chaque espèce de particules, la répartition théorique des signaux $P_{sig}(n,\tau)$ du système étant déterminée par la convolution $s$ + 1-fois des $s$ répartitions des signaux $P_{sig}^j(n,\tau)$ des $s$ espèces différentes et d'une répartition des signaux de bruit $P_{noise}(n,\tau)$.

**4.** Procédé selon l'une quelconque des revendications précédentes,
**caractérisé en ce que**
le volume de mesure $V$ utilisé pour la définition de $P_{sig}(n,\tau)$ est défini par un volume effectif $V_{eff,j}(\tau)$ dépendant des intervalles de temps défini, introduit fictivement, dans lequel, par définition, au moins une émission de chaque particule de l'espèce $j$ située dans le volume $\tau V_{eff,j}(\tau)$ est détectée dans l'intervalle de temps défini $\tau$ et ne quitte pas la particule $\tau V_{eff,j}(\tau)$ pendant l'intervalle de temps défini $\tau$, dans lequel, par définition, le nombre moyen de particules de l'espèce $j$ dans $V_{eff,j}(\tau)$ est déterminé par un nombre moyen d'occupation $\omega_j(\tau)$ avec $\omega_j(\tau) = c_jV_{eff,j}(\tau)\tau$.

**5.** Procédé selon la revendication 4,
**caractérisé en ce que**
une répartition de la loi de Poisson est supposée pour la répartition du nombre d'occupation.

**6.** Procédé selon l'une quelconque des revendications précédentes,
**caractérisé en ce que**

pour la détermination de la répartition théorique des signaux $P_{sig}(n,\tau)$, on suppose que la probabilité d'émission locale des particules est repartie selon une répartition de la loi de Poisson.

7. Procédé selon l'une quelconque des revendications précédentes,
**caractérisé en ce que**
la moyenne $\overline{n}(\tau)$ dépendant des intervalles de temps défini et la variance $\sigma^2(\tau)$ dépendant des intervalles de temps défini sont déterminées à partir des fonctions de répartition $p_\tau(n)$ pour chaque intervalle de temps défini $\tau$ et que la fonction de valeur de mesure comprend $\overline{n}(\tau)$ et $\sigma^2(\tau)$.

8. Procédé selon la revendication 7,
**caractérisé en ce que**
en tant que fonction de valeur mesurée $Q(\tau)=\frac{\sigma(\tau)^2-\bar{n}(\tau)}{\bar{n}(\tau)}$ est déterminée, la comparaison numérique étant effectué par la relation $Q(\tau)=\frac{\sigma(\tau)^2-\bar{n}(\tau)}{\bar{n}(\tau)}=\frac{m_2^{sig}(\tau)-\left[m_1^{sig}(\tau)\right]^2-m_1^{sig}(\tau)}{m_1^{sig}(\tau)}$, dans laquelle $m_1^{sig}(\tau)$ représente le premier moment et $m_2^{sig}(\tau)$ représente le second moment de $P_{sig}(n,\tau)$.

9. Procédé selon l'une quelconque des revendications précédentes,
**caractérisé en ce que**
la fonction théorique du signal est définie comme dépendant du temps, plusieurs mesures étant effectuées à chaque fois à un moment déterminé associé à la mesure respective, une fonction de valeur de mesure dépendant des intervalles de temps défini associée au moment déterminé respectif étant déterminée pour chacune des mesures, chaque fonction de valeur de mesure étant approchée par une courbe d'approximation, une valeur limite de la fonction de valeur de mesure respective étant déterminée par la courbe d'approximation de chaque fonction de valeur de mesure que cette fonction de valeur de mesure assume pour lim 'intervalle de temps défini' $\rightarrow$ 0, les valeurs limites de la fonction théorique de signal aux instants spécifiques pour lim 'intervalle de temps défini' $\rightarrow$ 0 étant déterminées au moyen d'une observation de limite lim 'intervalle de temps défini' $\rightarrow$ 0 de la fonction théorique de signal, la comparaison numérique étant effectuée **en ce que**, dans chaque cas, la valeur limite d'une des fonctions de valeur de mesure est comparée à la valeur limite de la fonction théorique de signal à l'instant spécifique affecté à cette fonction de valeur de mesure.

10. Procédé selon l'une quelconque des revendications précédentes,
**caractérisé en ce que**
un taux de détection local moyen $\mu_{1j}$ de l'espèce $j$ est déterminé par l'intermédiaire de l'intégrale $\overline{\mu_{1j}}=\int_R d^3r\mu_j(\vec{r})$ sur un espace $R$ étant en particulier un espace illimité, et est introduit dans la répartition théorique des signaux $P_{sig}(n,\tau)$ en tant que paramètre indépendant de l'intervalle de temps défini.

11. Procédé selon l'une quelconque des revendications précédentes,
**caractérisé en ce que**
pour la définition de la répartition théorique des signaux $P_{sig}(n,\tau)$, un nombre moyen d'émission détecté d'une seule particule de l'espèce $j$ est fixé à $\phi_{1,j}(\tau)=\frac{\int_0^\tau dt\int_R d^3r_0\left(\int_R d^3r\mu_j(\vec{r})\psi_j\left(\vec{r},t\middle|\vec{r}_0\right)\right)^2}{\int_R d^3\mu_j(\vec{r})}$ pour l'application du procédé à un transport stochastique des particules, et à $\phi_{1,j}(\tau)=\frac{\int_R d^3r_0\left(\int_0^\tau dt\int_R d^3r\mu_j(\vec{r})\psi_j\left(\vec{r},t\middle|\vec{r}_0\right)\right)^2}{\int_R d^3r\mu_j(\vec{r})}$ pour l'application du procédé à un transport déterministe des particules, où $R$ représente notamment un espace illimité.

12. Procédé selon les revendications 3, 9 et 11,
**caractérisé en ce que**

$Q(\tau) = \frac{\sigma^2(\tau)-\bar{n}(\tau)}{\bar{n}(\tau)}$ est utilisé comme fonction de la valeur mesurée et la comparaison numérique est effectué par la relation $\frac{\sum_{j=1}^{s}\bar{\mu}_{1,j}c_j\phi_{1,j}(\tau)}{\lambda+\sum_{j=1}^{s}\bar{\mu}_{1,j}c_j}$, avec s différentes espèces de particules supposées dans le système et $\lambda$ représentant une constante de bruit.

**13.** Procédé selon la revendication 12,
**caractérisé en ce que**
pour l'application du procédé à un système dont la seule espèce émettrice est l'espèce particulaire *j*, la comparaison numérique est effectuée par la relation $Q(\tau) = \phi_{1,j}(\tau)$.

**14.** Procédé selon la revendication 9 ou l'une quelconque des revendications 10 à 13, lorsqu'elle dépend de la revendication 9,
**caractérisé en ce que**
pour le taux de détection local $\mu_j(\vec{r})$ est supposé une fonction gaussienne avec

$$\mu_j(\vec{r}) = \mu_{0,j}exp\left(-\frac{2}{a_{xy}^2}(x^2+y^2)\right)exp\left(-\frac{2}{a_z^2}z^2\right)$$

avec les constantes $a_{x,y}$ et $a_z$.

**15.** Procédé selon l'une quelconque des revendications précédentes,
**caractérisé en ce que**
pour l'application du procédé à un transport fluidique des particules avec la vitesse de transport *v* pour la définition de la répartition théorique des signaux $P_{sig}(n,\tau)$, un nombre moyen d'émissions détecté d'une seule particule de l'espèce *j* est fixé à

$$\phi_{1,j}(\tau) = \frac{\sqrt{\pi}}{2\sqrt{2}}\frac{\mu_{0,j}}{2a}\frac{\vartheta_j^2}{\tau}\int_{-\infty}^{\infty}dz_0\left(erf\left[\frac{1}{\vartheta_j}\left(\frac{z_0}{v}+\tau\right)\right]-erf\left[\frac{z_0}{v\vartheta_j}\right]\right)^2.$$

**16.** Procédé selon l'une quelconque des revendications 1 à 14,
**caractérisé en ce que**
pour l'application du procédé à un transport par diffusion des particules à symétrie de mesure sphérique pour la définition de la répartition théorique des signaux $P_{sig}(n,\tau)$, un nombre moyen d'émissions détecté d'une seule particule de l'espèce *j* est fixé à

$$\phi_{1,j}(\tau) = \frac{\mu_{0,j}}{\sqrt{2}}\vartheta_j\left(1-\frac{1}{\sqrt{1+\frac{\tau}{\vartheta_j}}}\right).$$

**17.** Procédé selon l'une quelconque des revendications 1 à 14,
**caractérisé en ce que**
pour l'application du procédé à un transport par diffusion des particules à symétrie de mesure ellipsoïdale rotative pour la définition de la répartition théorique des signaux $P_{sig}(n,\tau)$, un nombre moyen d'émissions détecté d'une seule particule de l'espèce *j* est fixé à

$$\phi_{1,j}(\tau) = \frac{\mu_{0,j}}{2^{\frac{3}{2}}}\int_0^{\tau}\frac{dt}{\left(1+\frac{\tau}{\vartheta_{j,xy}}\right)\sqrt{1+\frac{t}{\vartheta_{j,z}}}},$$

avec les temps de désagrégation $\vartheta_{j,xy}$ et $\vartheta_{j,z}$ pour des particules de l'espèce *j*.

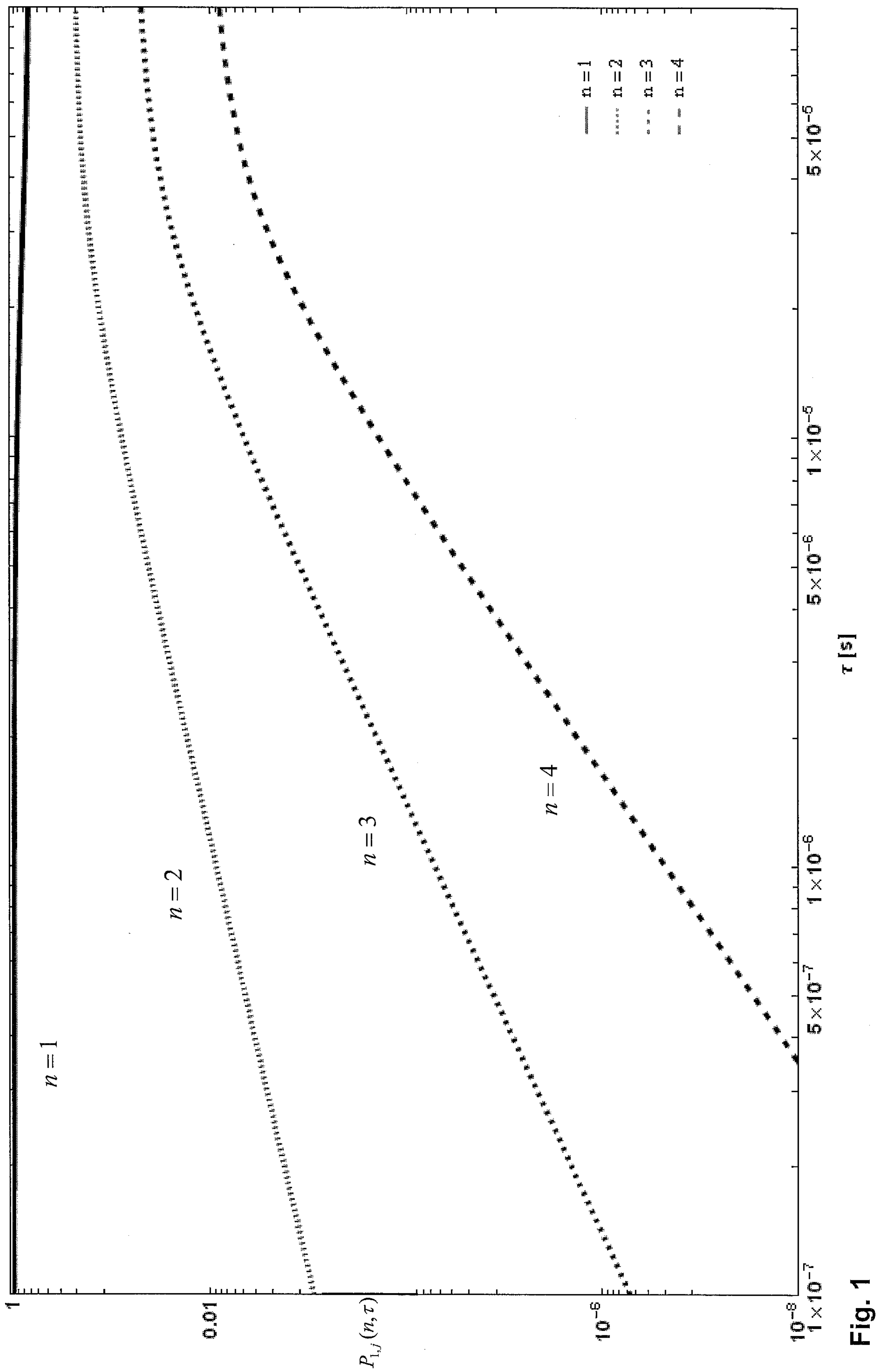

1
0.01
$P_{1,j}(n,\tau)$
$10^{-6}$
$10^{-8}$
$1\times10^{-7}$
$5\times10^{-7}$
$1\times10^{-6}$
$5\times10^{-6}$
$1\times10^{-5}$
$5\times10^{-5}$
τ [s]
n = 1
n = 2
n = 3
n = 4


Fig. 1

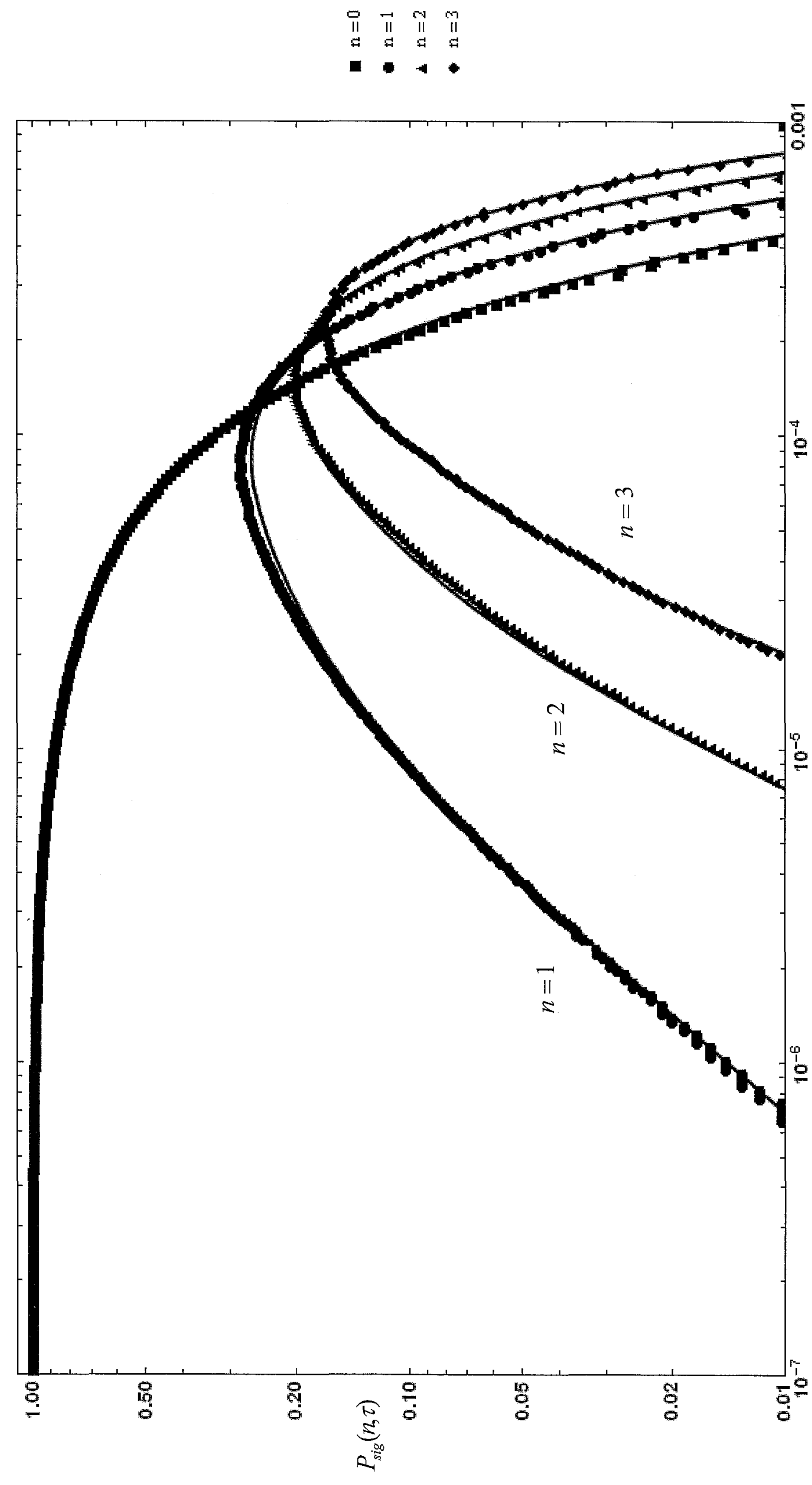

n = 0
n = 1
n = 2
n = 3
$P_{sig}(n,\tau)$
1.00
0.50
0.20
0.10
0.05
0.02
0.01
$10^{-7}$
$10^{-6}$
$10^{-5}$
$10^{-4}$
0.001
τ [s]
$n = 1$
$n = 2$
$n = 3$


Fig. 2

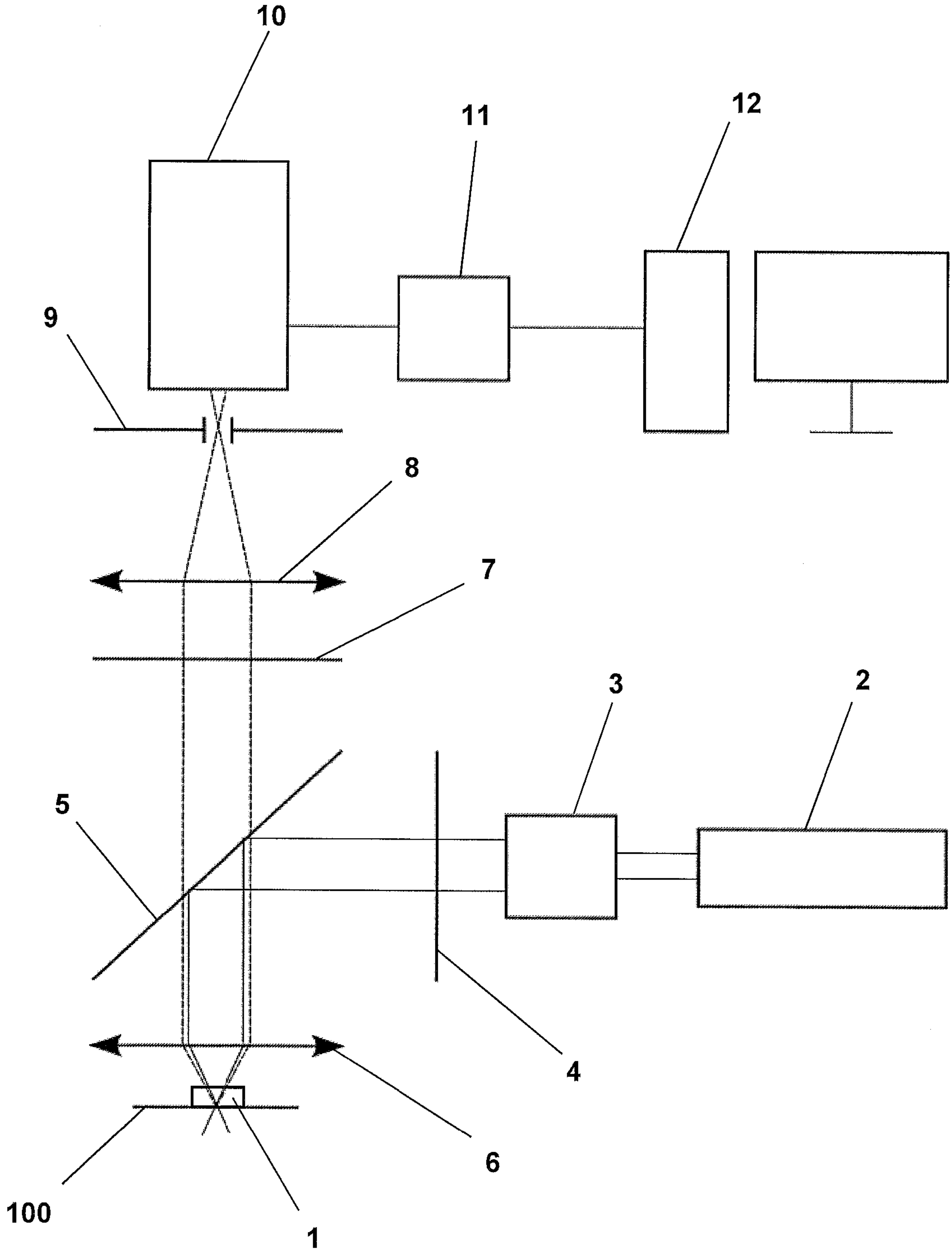


Fig. 3

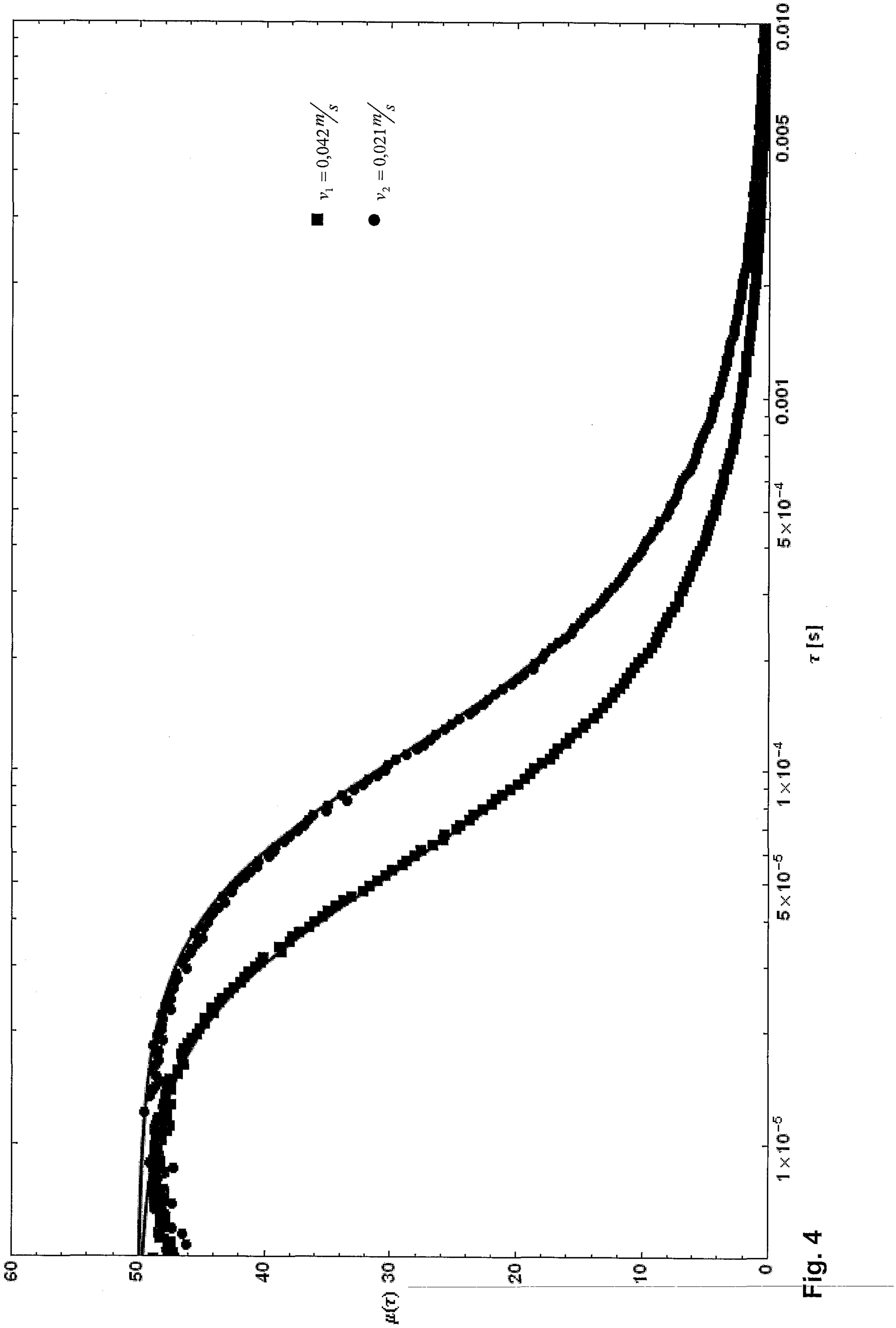
$v_1 = 0{,}042\,m/s$
$v_2 = 0{,}021\,m/s$
$\mu(\tau)$
60
50
40
30
20
10
0
$\tau$ [s]
$1\times10^{-5}$
$5\times10^{-5}$
$1\times10^{-4}$
$5\times10^{-4}$
0.001
0.005
0.010

Fig. 4

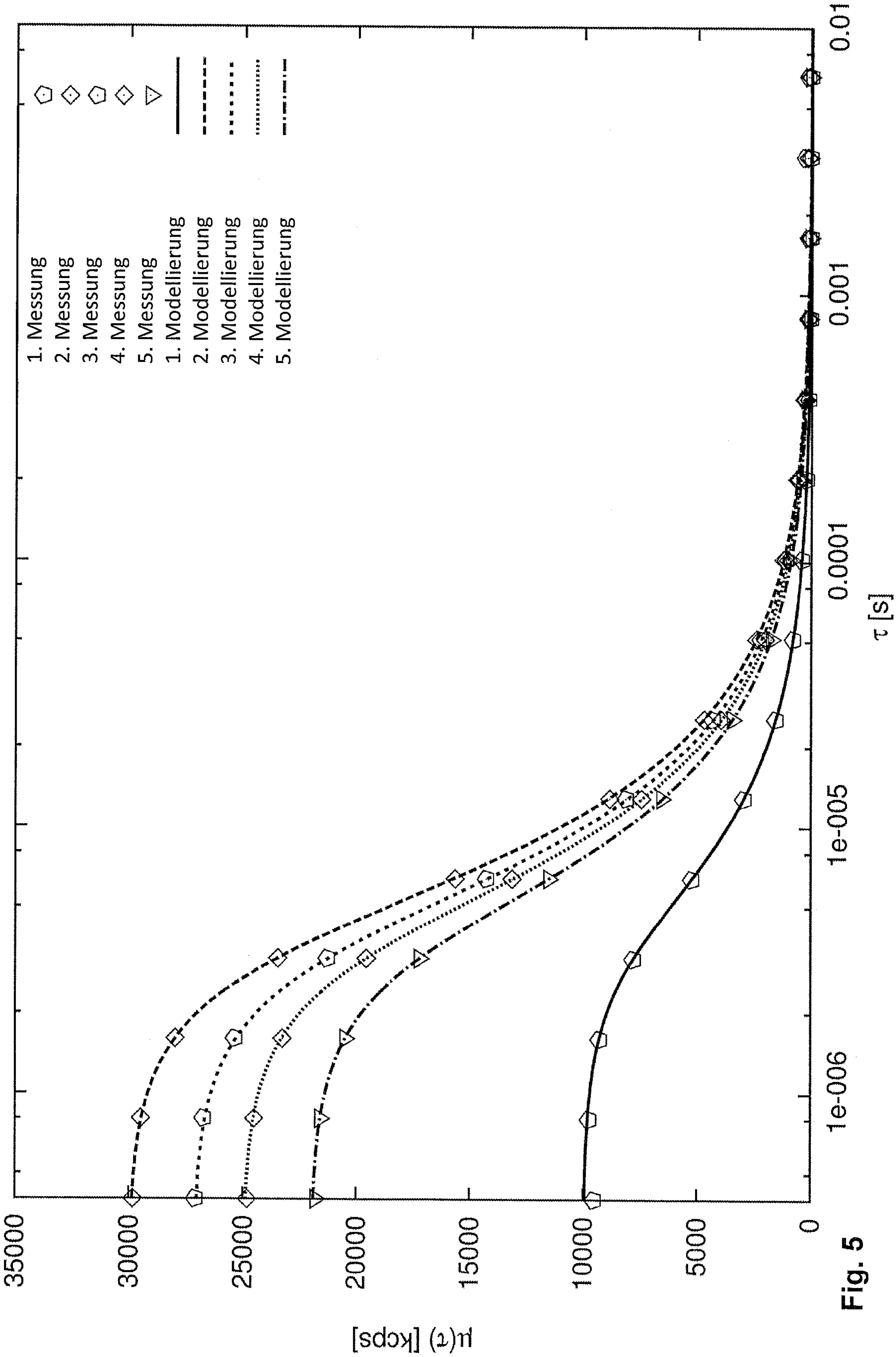
μ(τ) [kcps]
35000
30000
25000
20000
15000
10000
5000
0
τ [s]
1e-006
1e-005
0.0001
0.001
0.01
1. Messung
2. Messung
3. Messung
4. Messung
5. Messung
1. Modellierung
2. Modellierung
3. Modellierung
4. Modellierung
5. Modellierung

Fig. 5

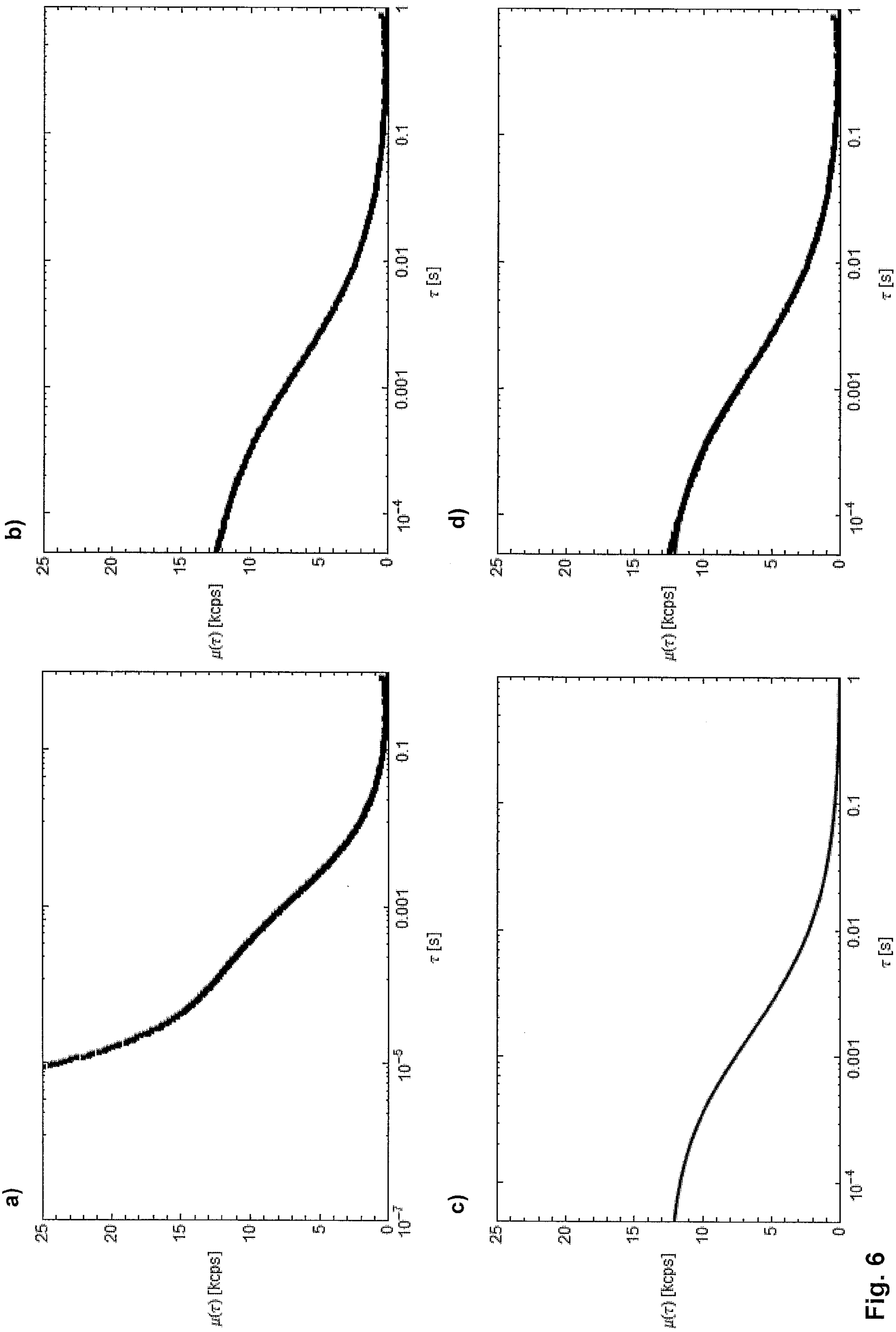


Fig. 6

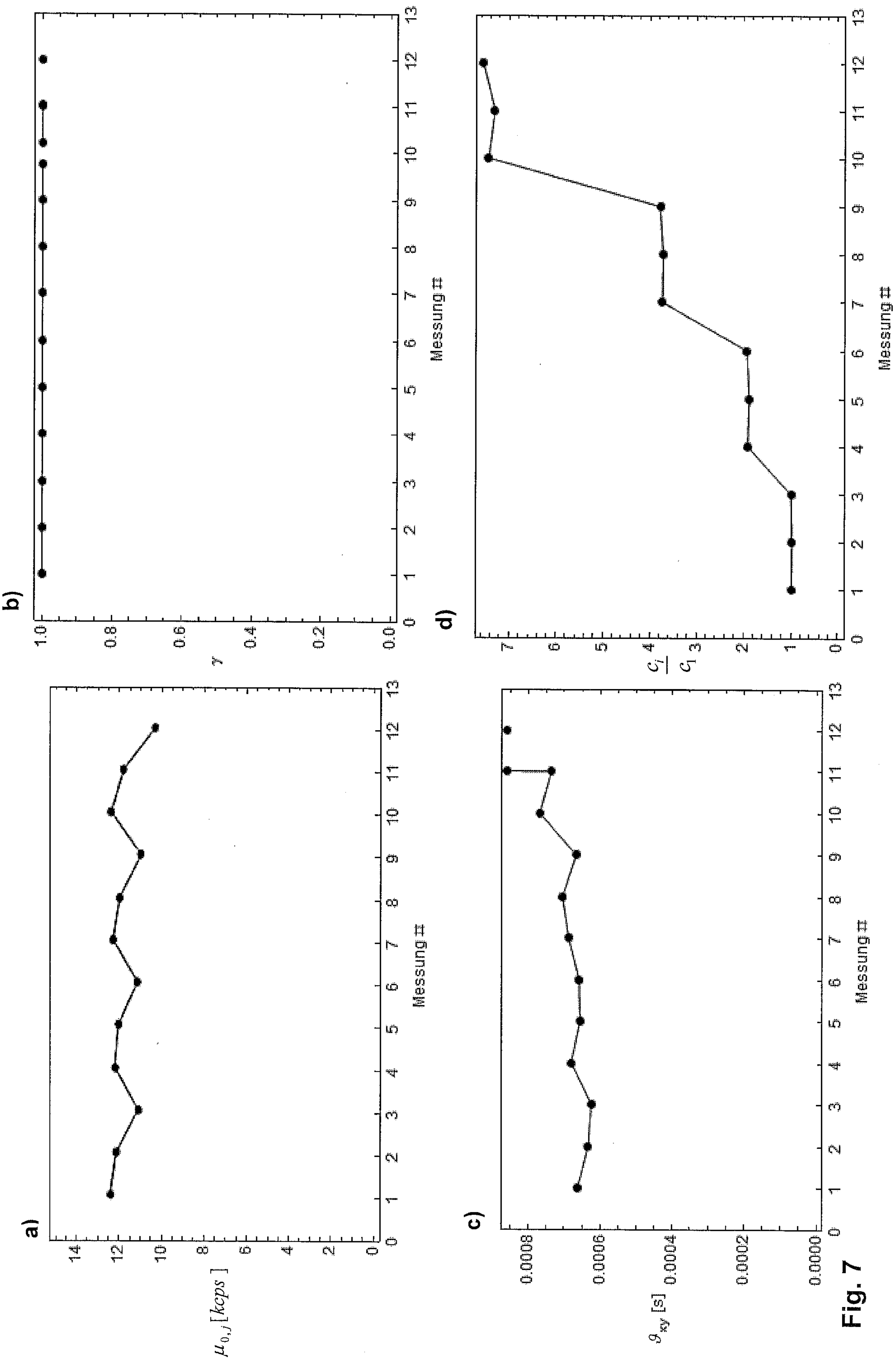
a)
$\mu_{0,i}$ [kcps]
Messung #
b)
$\gamma$
Messung #
c)
$\vartheta_{xy}$ [s]
Messung #
d)
$\frac{c_i}{c_1}$
Messung #

Fig. 7

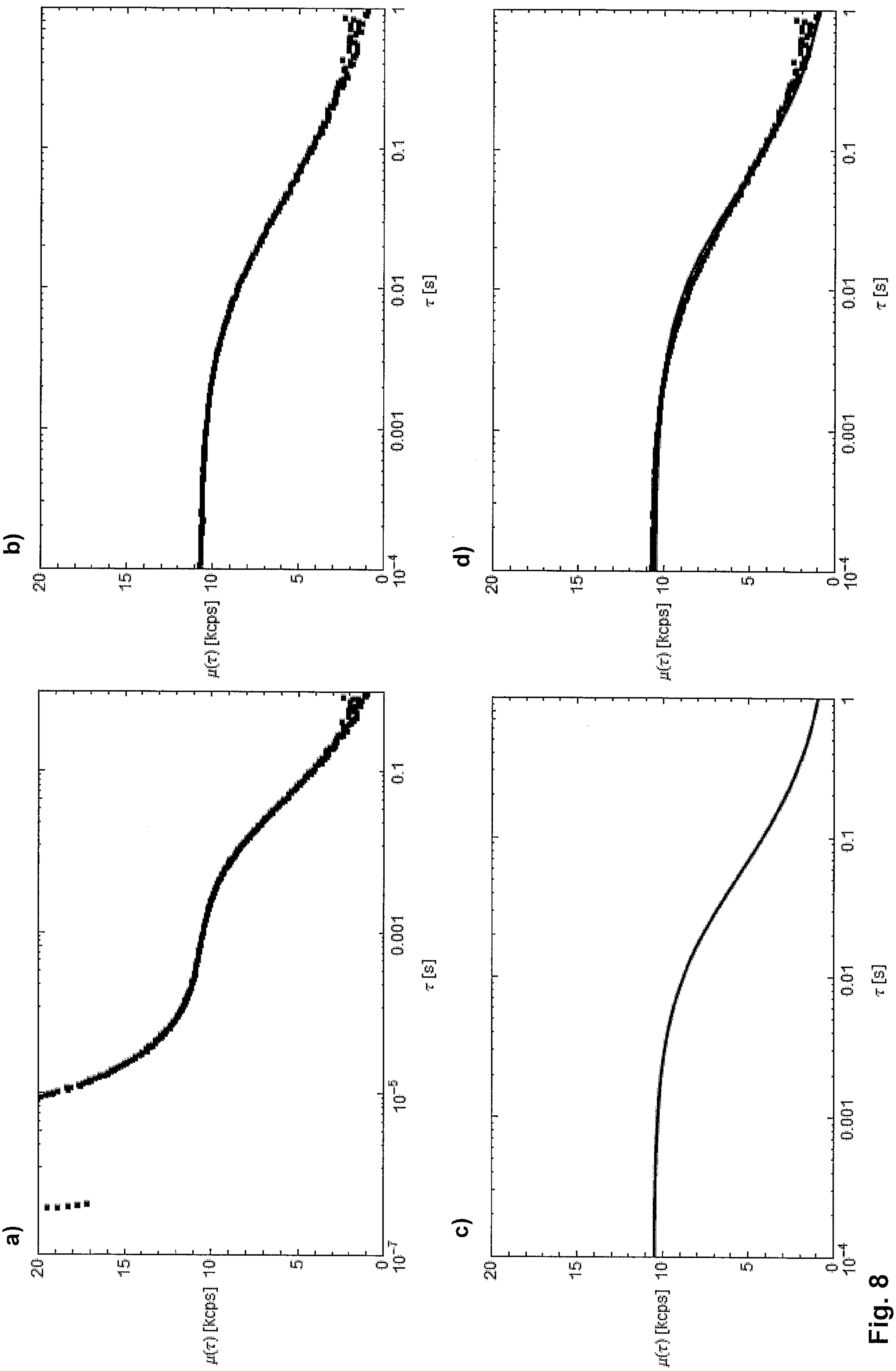


Fig. 8

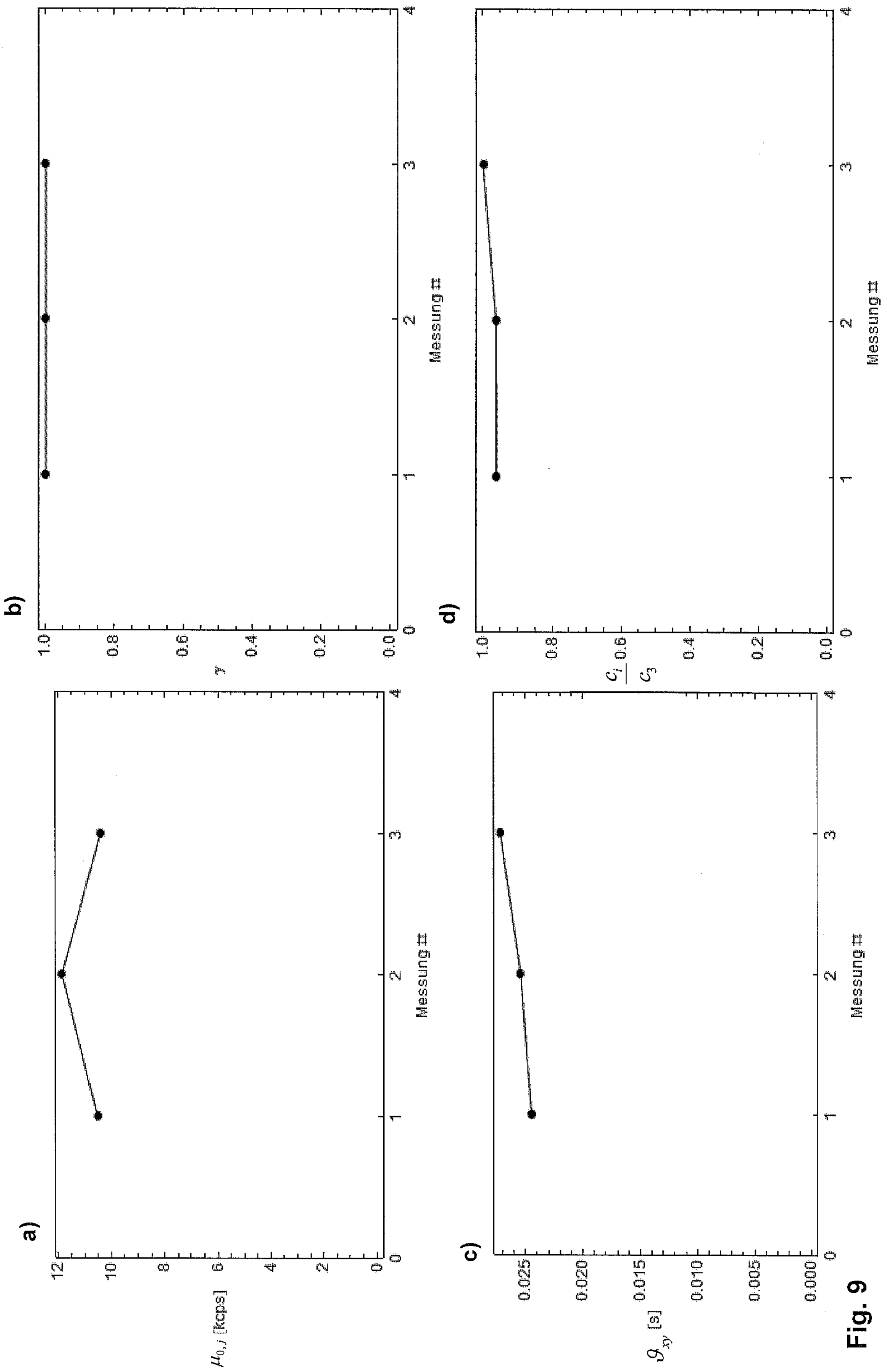


Fig. 9

Fig. 10a

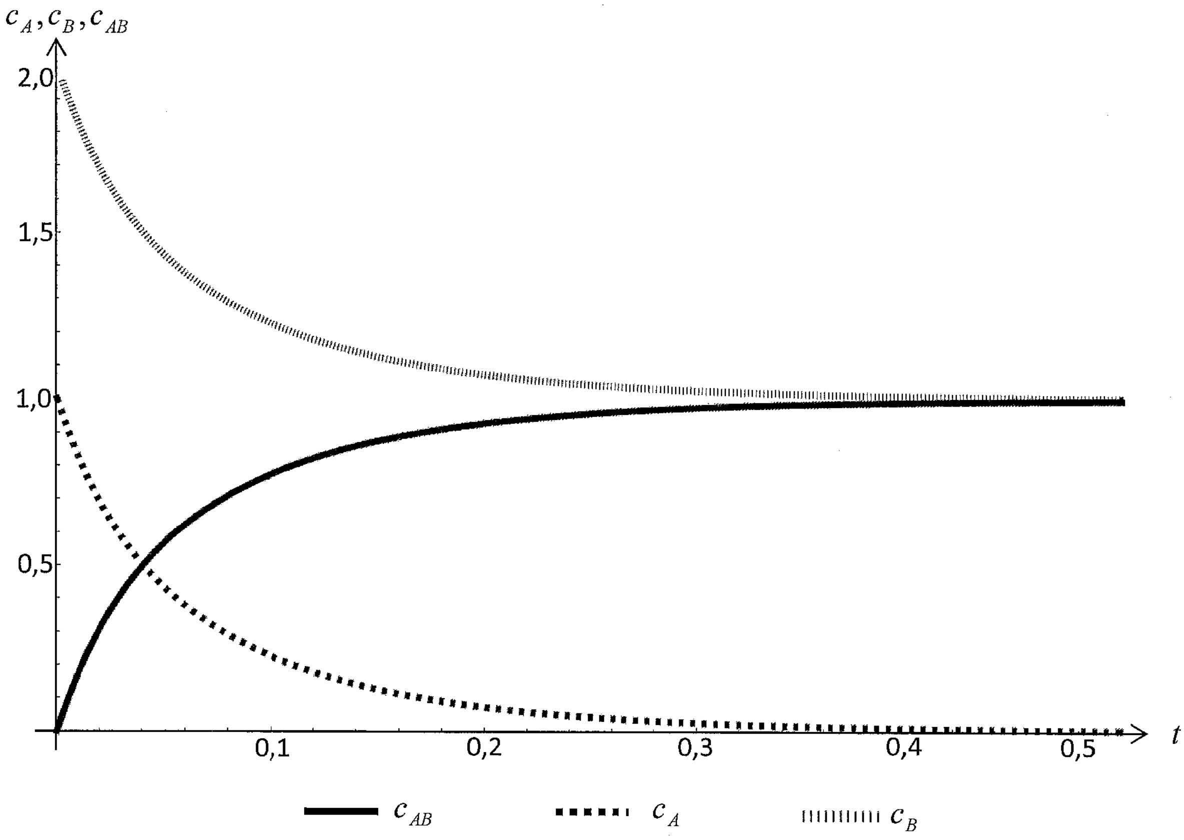


Fig. 10b

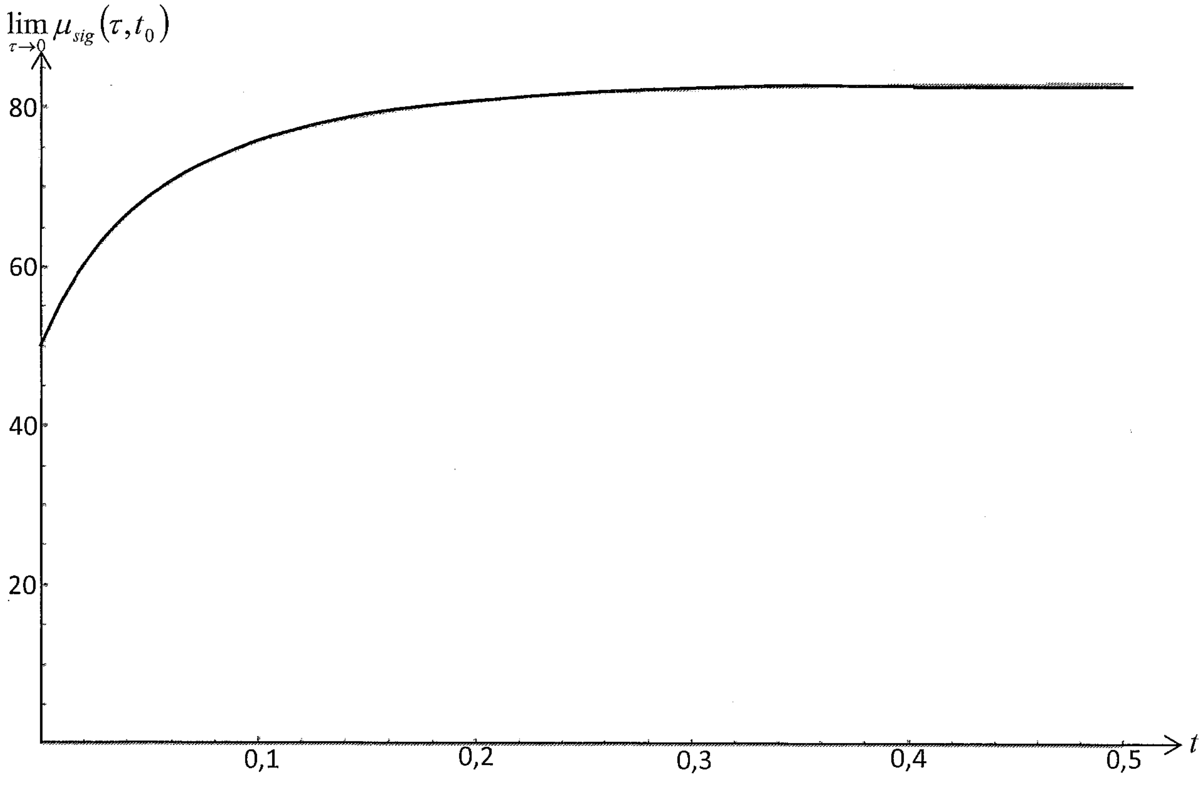

**Fig. 11a**

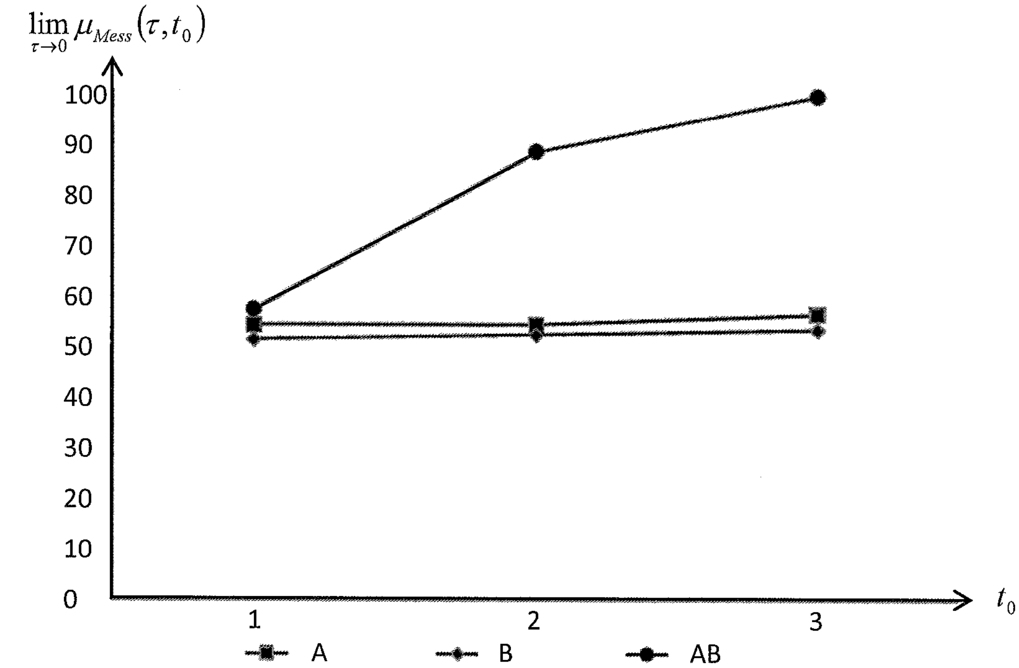


**Fig. 11b**

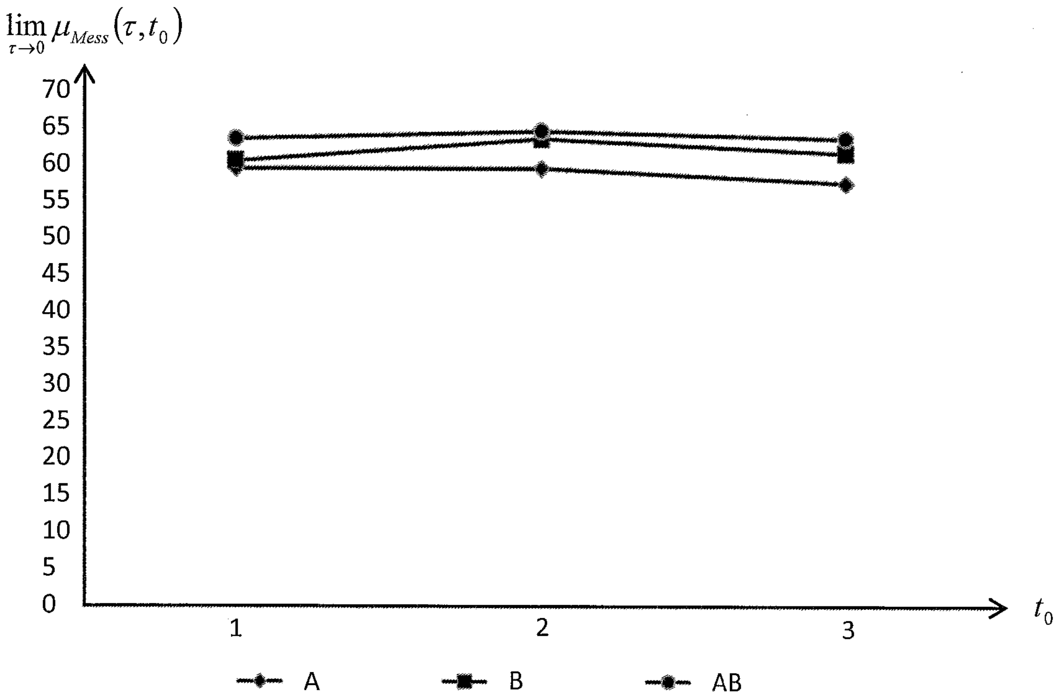

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0679251 B1
- DE 60001731 T2


### In der Beschreibung aufgeführte Nicht-Patentliteratur


- **CHEN Y. et al.** The photon counting histogram in fluorescence fluctuation spectroscopy. *Biophysical Journal,* 1999, vol. 77, 553-567
- **CHEN Y. et al.** *Biophysical Journal,* 1999, vol. 77, 553-567
- **B. GREINER.** *Die Einzelmolekülverteilung in Fluoreszenz-Fluktuations-Experimenten,* 2007